# EUROPEAN PATENT APPLICATION

(11) **EP 4 676 069 A1**
(43) Date of publication of application: **07.01.2026**
(21) Application number: 24829926.5
(22) Date of filing: 04.03.2024
(51) Int. Cl.: H04N 21/81

(54) **METHOD AND APPARATUS FOR GENERATING MEMORY VIDEO, AND ELECTRONIC DEVICE**

(30) Priority: 30.06.2023 CN 202310809761
(71) Applicant: Honor Device Co., Ltd., Shenzhen, Guangdong 518040 (CN)
(72) Inventor: LI, Xiaoxue, Shenzhen, Guangdong 518040 (CN); HE, Jianing, Shenzhen, Guangdong 518040 (CN)
(74) Representative: Gill Jennings & Every LLP
(86) International application number: PCT/CN2024/079997
(87) International publication number: WO 2025/001273

(57) **Abstract**

This application relates to the field of picture processing, and provides a method and an apparatus for generating a memory video, and an electronic device. Through a first operation of a user on a first picture, the electronic device displays a second display interface including a memory entry area, and through a second operation of the user on the memory entry area, the electronic device searches for pictures matching at least one character of the first picture, to finally generate a first memory video dedicated to the at least one character. In this way, through the first display interface and the first operation, a condition of actively triggering a memory function is friendly provided for the user, and through the second display interface and the second operation, a condition of generating the memory function is friendly provided for the user, so that the user can perform, based on a requirement of the user, an operation on pictures of characters that the user is interested in, to generate the memory video, so as to meet an actual requirement of the user, thereby better improving user experience.

## Description

This application claims priority to Chinese Patent Application No. 202310809761.0, filed with the China National Intellectual Property Administration on June 30, 2023 and entitled "METHOD AND APPARATUS FOR GENERATING MEMORY VIDEO, AND ELECTRONIC DEVICE", which is incorporated herein by reference in its entirety.

### TECHNICAL FIELD

This application relates to the field of picture processing, and more specifically, to a method and an apparatus for generating a memory video, and an electronic device.

### BACKGROUND

Currently, in an intelligent electronic device such as a mobile phone or a tablet, an application such as a gallery of the electronic device automatically filters pictures of a same related theme based on filtering conditions such as time, a place, an environment, a character, and a group, to generate a picture collection or a video dedicated to the theme, where the picture collection or the video dedicated to the theme includes a plurality of pictures, so that a user can view pictures of a specific time period, a specific character, a specific environment, and a specific group.

However, in the foregoing solution of generating a picture collection or a video dedicated to a theme, an actual requirement of the user is not considered, resulting in a poor controllable sense of the user. Consequently, the user cannot view a picture collection or a video of a character that the user likes, and user experience is poor.

### SUMMARY

Embodiments of this application provide a method for generating a memory video, so that a user can be enabled to perform, based on a requirement of the user, an operation on pictures of characters that the user is interested in, to generate the memory video, so as to meet an actual requirement of the user, thereby better improving user experience.

According to a first aspect, a method for generating a memory video is provided, including:
displaying a first display interface, where the first display interface includes a first picture, and the first picture includes a plurality of characters;
displaying a second display interface in response to a first operation of a user on the first picture, where the second display interface includes a memory entry area;
performing feature extraction on at least one character in the plurality of characters in response to a second operation of the user on the memory entry area, to obtain a feature result;
searching for pictures based on the feature result, to obtain a first picture collection, where each picture in the first picture collection includes a character matching the at least one character;
generating a first memory video based on the first picture collection, where the first memory video includes at least some pictures in the first picture collection; and
displaying a third display interface, where the first memory video is played on the third display interface.

In the method for generating a memory video according to this embodiment of this application, through the first operation of the user on the first picture, an electronic device displays the second display interface including the memory entry area, and through the second operation of the user on the memory entry area, the electronic device searches for pictures matching the at least one character of the first picture, to finally generate the first memory video dedicated to the at least one character. To be specific, each picture in the first memory video includes a character matching the at least one character. In this way, the user can recall past time by using the first memory video, to resolve a problem that a memory disconnection occurs when the user browses the picture is resolved. More importantly, through the first display interface and the first operation that can be recognized by the electronic device, a condition of actively triggering a memory function is friendly provided for the user, and through the second display interface and the second operation that can be recognized by the electronic device, a condition of generating the memory function is friendly provided for the user, so that the user can perform, based on the requirement of the user, an operation on pictures of characters that the user is interested in, to generate the memory video, so as to meet the actual requirement of the user, thereby better improving user experience. In addition, because the user may perform the first operation on a picture generated at any moment to actively trigger the memory function, real-time performance of triggering the memory function is improved, thereby further improving user experience. In addition, a plurality of pictures are viewed in a manner of playing the memory video, so that the user is prevented from tapping the plurality of the pictures one by one, to reduce user operations, thereby further improving user experience.

In addition, it may be understood that, a most common scenario in which the user wants to search for pictures of a related character is that the user thinks of some people and something when browsing a picture (for example, the first picture), and therefore wants to recall the past time. Therefore, the memory function is actively triggered by performing the first operation on the first picture that is being browsed by the user. This is more consistent with a behavior habit of the user, so that user experience is relatively good.

In conclusion, the method for generating a memory video provided in this embodiment of this application friendly considers user requirements from various perspectives, to greatly improve user experience.

Optionally, the performing feature extraction on at least one character in the plurality of characters in response to a second operation of the user on the memory entry area, to obtain a feature result includes:
displaying a fourth display interface in response to the second operation, where the fourth display interface includes character pictures of the plurality of characters that are obtained through recognition; and
performing feature extraction on the at least one character in response to an operation of selecting, by the user, a character picture of the at least one character in the plurality of characters, to obtain the feature result.

In the method for generating a memory video according to this embodiment of this application, for the currently browsed first picture, the user actively triggers the memory function. The user may select any character (select at least one character) in the picture based on the preference of the user, so that the electronic device can filter pictures matching the any character. Therefore, a more flexible selection space is provided for the user, so that the user can select the character based on the preference of the user more flexibly. The historical time related to the any character is recalled through the memory video including the any character, so that an actual requirement of the user can be better met, to better improve user experience.

Optionally, the displaying a second display interface in response to a first operation of a user on the first picture includes:
when the first picture has been analyzed to include the characters and the first picture exists in an existing memory video, displaying the second display interface in response to the first operation, where the memory entry area of the second display interface includes a first memory entry and a second memory entry, the first memory entry is configured to display the existing memory video based on a user operation, and the second memory entry is configured to generate a new memory video; and
the displaying a fourth display interface in response to the second operation, where the fourth display interface includes character pictures of the plurality of characters that are obtained through recognition includes:
   displaying the fourth display interface in response to an operation of the user on the second memory entry.

In the method for generating a memory video according to this embodiment of this application, in the embodiment in which the electronic device generates, based on any character selected by the user, the memory video of the any character, although the first picture has existed in the existing memory video, the user may display the existing memory video by using the first memory entry of the second display interface. However, for a same picture (the first picture), the user may select different characters at different time. Therefore, a possibility of generating a new memory video again is provided for user by using the second memory entry, so that more flexible selection space is provided, and user experience is better.

Optionally, the performing feature extraction on at least one character in the plurality of characters in response to a second operation of the user on the memory entry area, to obtain a feature result includes:
performing feature extraction on all characters in the plurality of characters in response to the second operation, to obtain the feature result.

In the method for generating a memory video according to this embodiment of this application, after detecting the second operation, the electronic device directly performs character extraction on all the characters of the first picture, to search for pictures. In comparison with an embodiment in which the user may select any character, although flexibility of selecting characters by the user is weakened, due to lack of a part of human-machine interaction, not only implementation is convenient, but also processing duration can be reduced.

Optionally, the performing feature extraction on at least one character in the plurality of characters in response to a second operation of the user on the memory entry area, to obtain a feature result includes:
when a quantity of the characters of the first picture is less than or equal to a first quantity threshold N1, performing feature extraction on the at least one character in the plurality of characters in response to the second operation, to obtain the feature result, where N1 is an integer greater than 1.

In the method for generating a memory video according to this embodiment of this application, in consideration of a processing capability of the current electronic device, if a quantity of characters that need to be matched is excessive, the electronic device may not perform feature matching on the excessive quantity of characters, affecting generation of the memory video. Therefore, when the quantity of characters of the first picture is less than or equal to the first quantity threshold N1, feature extraction is performed on the at least one character, to search for matching pictures, thereby generating the memory video.

Optionally, the performing feature extraction on at least one character in the plurality of characters in response to a second operation of the user on the memory entry area, to obtain a feature result includes:
when a quantity of the characters of the first picture is greater than a first quantity threshold N1, displaying a fifth display interface in response to the second operation, where the fifth display interface includes character pictures of N1 characters in the plurality of characters, and N1 is an integer greater than 1; and
performing feature extraction on the at least one character in response to an operation of selecting, by the user, a character picture of the at least one character in the N1 characters, to obtain the feature result.

In the method for generating a memory video according to this embodiment of this application, in consideration of a processing capability of the current electronic device, if a quantity of characters that need to be matched is excessive, the electronic device may not perform feature matching on the excessive quantity of characters, affecting generation of the memory video. Therefore, when the quantity of characters of the first picture is greater than the first quantity threshold N1, the electronic device recommends N1 characters with the largest quantity to the user, so that the user selects any at least one character from the N1 characters. In this way, the electronic device can perform feature extraction on the at least one character, to search for matching pictures, thereby generating the memory video.

Optionally, the displaying a fifth display interface in response to the second operation when a quantity of the characters of the first picture is greater than a first quantity threshold N1 includes:
when the quantity of the characters of the first picture is greater than the first quantity threshold N1, determining, in response to the second operation,
characters with first N1 facial area ratios in descending order of facial area ratios of the plurality of characters; and
displaying the fifth display interface.

In the method for generating a memory video according to this embodiment of this application, when there is a large quantity of characters in the picture, faces of some characters inevitably occupy small areas in the entire picture, and faces of some characters are even invisible, affecting feature extraction of the characters, and further affecting searching for pictures of related characters. Therefore, N1 characters with relatively large facial area ratios are recommended for the user based on the facial area ratios, so that feature extraction can be better performed on the characters to the greatest extent, to search for pictures of related characters without affecting user experience.

Optionally, the generating a first memory video based on the first picture collection includes:
when a quantity of pictures in the first picture collection is less than or equal to a second quantity threshold N2, determining all pictures in the first picture collection as pictures of the first memory video, where N2 is an integer greater than 1; or
when the quantity of the pictures in the first picture collection is greater than N2, determining a second picture collection based on the first picture collection; and
generating the first memory video based on the second picture collection.

In the method for generating a memory video according to this embodiment of this application, if a quantity of pictures in the memory video is excessive, a problem such as high consumption of the user's time or aesthetic fatigue may occur, and experience of appreciating the memory video by the user is not good. Therefore, the second quantity threshold N2 is set, to enable a quantity of pictures in the generated memory video to be suitable to the greatest extent, thereby enabling the user to better experience a wonderful process of playing the video. In this way, when the quantity of the pictures in the first picture collection is greater than N2, the electronic device further filters pictures from the first picture collection, and generates the first memory video based on the second picture collection obtained through filtering, so that the user has relatively wonderful experience when appreciating pictures of the memory video.

Optionally, the determining a second picture collection based on the first picture collection includes:
determining the second picture collection from the first picture collection based on generation time of all the pictures in the first picture collection.

Optionally, the determining a second picture collection based on the first picture collection includes:
when a quantity M of time periods in which the generation time of all the pictures in the first picture collection is distributed is greater than or equal to N2, filtering one picture in each time period of the M time periods from the first picture collection, to obtain the second picture collection, where the second picture collection includes M pictures, and M is an integer greater than or equal to 1.

In the method for generating a memory video according to this embodiment of this application, considering that a time area in which the generation time of all the pictures in the first picture collection is relatively long, during picture filtering, one picture is selected as far as possible in each time period. This helps the user recall events with a relatively even time interval by using related pictures of the at least one character in the first picture, and a memory lapse of the user can be reduced to some extent.

Optionally, the generating the first memory video based on the second picture collection includes:
filtering N2 pictures from the second picture collection; and
determining the N2 pictures as the pictures of the first memory video.

Optionally, the filtering N2 pictures from the second picture collection includes:
filtering pictures with highest N2 aesthetic scores from the second picture collection in descending order of aesthetic scores, to obtain the N2 pictures.

In the method for generating a memory video according to this embodiment of this application, pictures with relatively high aesthetic scores are selected from the second picture collection, so that pictures in the first memory video all have relatively good quality, so that visual experience of the user can be better improved.

Optionally, the determining a second picture collection based on the first picture collection includes:
when the quantity M of the time periods in which the generation time of all the pictures in the first picture collection is distributed is greater than or equal to N2, filtering, from the first picture collection, one picture in each time period of N2 time periods that are at the top of the M time periods in time in a far to near time sequence, to obtain the second picture collection, where the second picture collection includes N2 pictures, and M is an integer greater than or equal to 1.

In the method for generating a memory video according to this embodiment of this application, based on an actual situation, if the quantity of the pictures in the second picture collection needs to be controlled to be less than or equal to N2, when the quantity M of the time periods in which the generation time of all the pictures in the first picture collection is distributed is greater than or equal to N2, because the user has a relatively blur memory for events with relatively far time, by filtering one picture from each time period in the first N2 time periods with relatively far time can enable the user to better recall events with relatively far time by using the pictures, to improve user experience.

Optionally, the determining a second picture collection based on the first picture collection includes:
when the quantity M of the time periods in which the generation time of all the pictures in the first picture collection is distributed is less than N2, filtering at least one picture in each time period of the M time periods from the first picture collection, to obtain the second picture set, where the second picture collection includes N2 pictures, and M is an integer greater than or equal to 1.

In the method for generating a memory video according to this embodiment of this application, when a time area in which the generation time of all the pictures in the first picture collection is not quite long but the quantity of the pictures is relatively large, at least one picture is selected in each time period. In this way, first, a relatively large quantity of pictures can be selected, and second, because each time period corresponds to at least one picture, this helps the user recall events with a relatively even time interval by using related pictures of the at least one character in the first picture, and a memory lapse of the user can be reduced to some extent. Generally, user experience is considered in terms of both a quantity of memory pictures and a memory time interval, and different factors are balanced, so that user experience is better met.

Optionally, the M time periods include a first part of time periods and a second part of time periods, time of the second part of time periods is earlier than time of the first part of time periods, each time period in the first part of time periods corresponds to one picture in the second picture collection, and each time period in the second part of time periods corresponds to a plurality of pictures in the second picture collection.

In the method for generating a memory video according to this embodiment of this application, because the user has a relatively blur memory for events with relatively far time, by filtering a plurality of pictures from each time period in the second part of time periods with relatively far time can enable the user to better recall events with relatively far time by using the pictures, to improve user experience.

Optionally, the generating the first memory video based on the second picture collection includes:
determining the N2 pictures in the second picture collection as the pictures in the first memory video.

Optionally, the displaying a second display interface in response to a first operation of a user on the first picture includes:
when the first picture is not analyzed, analyzing the first picture in response to the first operation, to obtain an analysis result, where the analysis result indicates that the first picture includes the characters; and
displaying the second display interface in response to the analysis result.

In the method for generating a memory video according to this embodiment of this application, whether the first picture is analyzed is determined, so that the first picture is analyzed instantly when the first picture is not analyzed. For the picture that has been analyzed, actually, the electronic device may not need to repeatedly analyze the first picture, to reduce a process of analyzing the picture, thereby reducing processing duration.

Optionally, the displaying a second display interface in response to a first operation of a user on the first picture includes:
when the first picture has been analyzed to include the characters and the first picture does not exist in the existing memory video, displaying the second display interface in response to the first operation.

Optionally, the second display interface includes the character pictures of the plurality of characters that are obtained through recognition.

In the method for generating a memory video according to this embodiment of this application, because the first picture has been analyzed, the second display interface may directly display the character pictures of the plurality of characters that are obtained through recognition. In this way, visual experience of the user can be improved.

Optionally, the method further includes:
obtaining a third picture collection based on a second picture, where the second picture includes the at least one character, each picture in the third picture collection includes a character matching the at least one character, generation time of all pictures in the third picture collection is distributed in a first time period, and the first time period is later than generation time of the first memory video; and
updating the first memory video based on the third picture collection.

In the method for generating a memory video according to this embodiment of this application, by updating the memory video having same characters, the electronic device may not need to generate a new memory video, but integrates pictures of same characters in a memory video. This not only facilitates central searching by the user, but also facilitates the device in managing pictures.

Optionally, the updating the first memory video based on the third picture collection includes:
when a sum of a quantity N3 of the pictures in the third picture collection and a quantity N4 of the pictures in the first memory video is less than or equal to the second quantity threshold N2, adding all the pictures in the third picture collection to the first memory video, to obtain an updated first memory video.

Optionally, the updating the first memory video based on the third picture collection includes:
when a sum of a quantity N3 of the pictures in the third picture collection and a quantity N4 of the pictures in the first memory video is greater than the second quantity threshold N2, deleting N5 pictures from the first memory video, and adding N3 pictures in the third picture collection to the first memory video, to obtain the updated first memory video, where the updated first memory video includes N2 pictures, and N5=N3+N4-N2.

In the method for generating a memory video according to this embodiment of this application, when the sum of the quantity N3 of the pictures in the third picture collection and the quantity N4 of the pictures in the first memory video is greater than N2, it is preferentially ensured that all pictures in the third picture collection are added to the first memory video, and pictures of an exceeded quantity are deleted from the first memory video, so that the user recalls things associated with the new pictures in time, thereby improving user experience.

Optionally, the updated first memory video includes the second picture.

In the method for generating a memory video according to this embodiment of this application, the user performs the operation on the second picture in the process of browsing the second picture to recall related characters. It indicates that the user likes the second picture very much or that the second picture can evoke the memory of the user intensively, and therefore the second picture is added to the updated memory video, so that a user requirement can be met, thereby improving user experience.

Optionally, a cover picture of the first memory video is the first picture.

Optionally, the first operation is a swipe-up operation.

Optionally, the first display interface is an interface of a gallery application.

According to a second aspect, a method for generating a memory video is provided, including:
displaying a first display interface, where the first display interface includes a memory entry;
displaying a second display interface in response to an operation of a user on the memory entry, where the second display interface includes character pictures of a plurality of characters;
searching for pictures in response to an operation of selecting, by the user, a character picture of at least one character in the plurality of characters, to obtain a first picture collection, where each picture in the first picture collection includes a character matching the at least one character;
generating a first memory video based on the first picture collection, where the first memory video includes at least some pictures in the first picture collection; and
displaying a third display interface, where the first memory video is played on the third display interface.

In the method for generating a memory video according to this embodiment of this application, the user triggers a memory function by using the memory entry. An electronic device instantly displays the character pictures of the plurality of characters that have been previously recognized by the electronic device through picture analysis. The user may select the at least one character in the plurality of characters that the user is interested in. After detecting the operation of selecting, by the user, the character picture of the at least one character, the electronic device may directly search for pictures, to generate the first memory video. Because analysis and feature extraction do not need to be performed on pictures, and the character pictures of the characters that have been recognized by the electronic device are directly used for selection by the user, response duration of the electronic device is reduced, so that user experience is improved from the perspective of reducing duration. In addition, through the first display interface and the operation that is of the user on the memory entry in the first display interface and that can be recognized by the electronic device, a condition of actively triggering a memory function is friendly provided for the user, so that the user can perform, based on the requirement of the user, an operation on pictures of characters that the user is interested in, to generate the memory video, so as to meet the actual requirement of the user, thereby better improving user experience. In addition, a plurality of pictures are viewed in a manner of playing the memory video, so that the user is prevented from tapping the plurality of the pictures one by one, to reduce user operations, thereby further improving user experience.

Optionally, the first display interface is an interface that is configured to display the memory video and that is in a gallery application.

According to a third aspect, an electronic device is provided. The electronic device is configured to perform the method in the first aspect or the second aspect. Specifically, the electronic device may include modules configured to perform any possible implementation in the first aspect or the second aspect.

According to a fourth aspect, an electronic device is provided, including a processor. The processor is coupled to a memory, and may be configured to execute instructions in the memory, to implement the method in any possible implementation in the first aspect or second aspect. Optionally, the electronic device further includes the memory. Optionally, the apparatus further includes a communication interface, and the processor is coupled to the communication interface.

According to a fifth aspect, a computer-readable storage medium is provided, storing a computer program. The computer program, when being executed by an apparatus, causes the apparatus to implement the method in any possible implementation in the first aspect or second aspect.

According to a sixth aspect, a computer program product including instructions is provided. The instructions, when being executed by a computer, cause an apparatus to implement the method in any possible implementation in the first aspect or second aspect.

According to a seventh aspect, a chip is provided, including: an input interface, an output interface, a processor, and a memory. The input interface, the output interface, the processor, and the memory are connected through an internal connection path. The processor is configured to execute code in the memory. When the code is executed, the processor is configured to perform the method in any possible implementation in the first aspect or second aspect.

### BRIEF DESCRIPTION OF DRAWINGS

FIG. 1 is a diagram of a structure of an electronic device according to an embodiment of this application;
FIG. 2 is a diagram of a software system of an electronic device according to an embodiment of this application;
FIG. 3A, FIG. 3B, FIG. 3C, FIG. 3D, FIG. 3E, and FIG. 3F are a diagram of a group of graphical user interfaces (graphical user interface, GUI) according to an embodiment of this application;
FIG. 4A and FIG. 4B to FIG. 10A, FIG. 10B, and FIG. 10C show another group of GUIs according to an embodiment of this application;
FIG. 11A and FIG. 11B are a schematic flowchart of a method for generating a memory video according to an embodiment of this application;
FIG. 12 is a schematic flowchart of a process in which an electronic device determines a picture collection 2 based on a picture collection 1 and a process in which the electronic device determines a memory video based on the picture collection 2 according to an embodiment of this application;
FIG. 13A, FIG. 13B, and FIG. 13C are another schematic flowchart of a method for generating a memory video according to an embodiment of this application;
FIG. 14 is a schematic flowchart of a process in which an electronic device generates a picture collection and a memory video when a quantity of characters of a picture is greater than a quantity threshold N1 according to an embodiment of this application;
FIG. 15 is a diagram of a fourth interface according to an embodiment of this application;
FIG. 16 is another schematic flow of a method for generating a memory video according to an embodiment of this application;
FIG. 17A and FIG. 17B show another group of GUIs according to an embodiment of this application;
FIG. 18 is another schematic flow of a method for generating a memory video according to an embodiment of this application;
FIG. 19A, FIG. 19B, FIG. 19C, FIG. 19D, and FIG. 19E show another group of GUIs according to an embodiment of this application;
FIG. 20 is still another schematic flow of a method for generating a memory video according to an embodiment of this application;
FIG. 21A, FIG. 21B, FIG. 21C, FIG. 21D, FIG. 21E, FIG. 21F, and FIG. 21G show still another group of GUIs according to an embodiment of this application;
FIG. 22 is an example of a block diagram of an apparatus for generating a memory video according to an embodiment of this application; and
FIG. 23 is a diagram of a structure of an electronic device according to an embodiment of this application.

### DESCRIPTION OF EMBODIMENTS

The following describes technical solutions of this application with reference to the accompanying drawings.

A method for generating a memory video provided in embodiments of this application may be applied to various electronic devices that can shoot photos, such as a mobile phone, a tablet computer, a wearable device, a notebook computer, a netbook, a personal digital assistant (personal digital assistant, PDA), and a camera. A specific type of the electronic device is not limited in embodiments of this application.

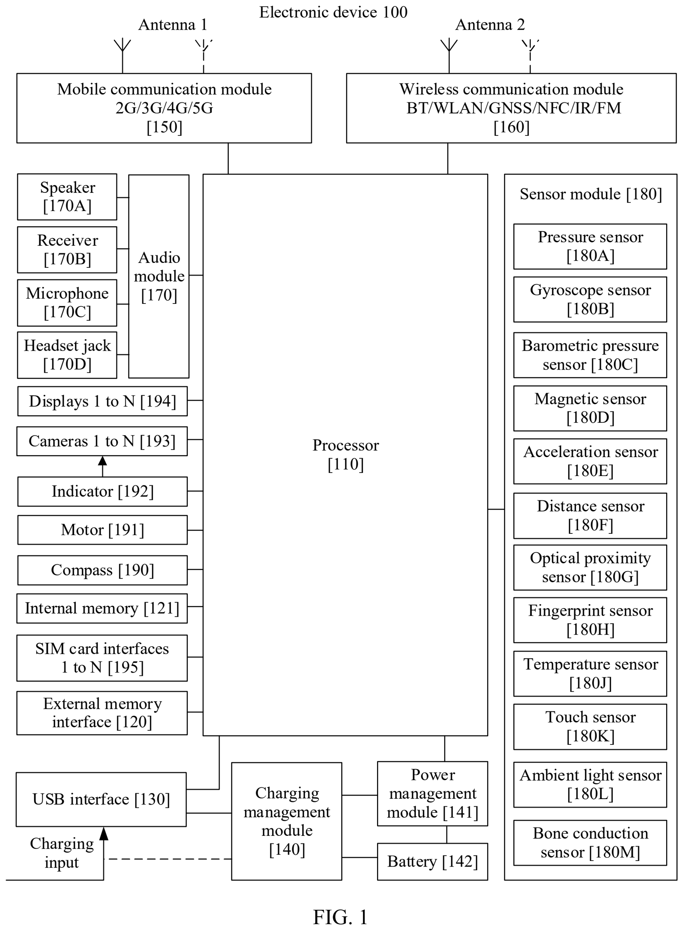

FIG. 1 is a diagram of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

In embodiments of this application, the processor 110 is configured to control the display to display various interfaces, and may trigger a memory function, display pictures and videos of related characters, and the like through user operations, and perform feature extraction on related characters, search for pictures matching the related characters, and generate a picture collection dedicated to the related characters, and a memory video.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent components, or may be integrated in one or more processors.

The controller may be a nerve center and a command center of the electronic device 100. The controller may generate an operation control signal based on instruction operation code and a timing signal, to control instruction fetching and instruction execution.

A memory may be further disposed in the processor 110, and is configured to store instructions and data. In some embodiments, the memory in the processor 110 is a cache memory. The memory may store instructions or data that has just been used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The I2C interface is a two-way synchronization serial bus, and includes one serial data line (serial data line, SDA) and one derail clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be used for audio communication, to sample, quantize, and encode an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, a MIPI interface, or the like.

The USB interface 130 is an interface that conforms to a USB standard specification, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device. The interface may alternatively be configured to connect to a headset, to play audio through the headset. The interface may be further configured to connect to another electronic device such as an AR device.

It may be understood that the interface connection relationships between the modules that is shown in this embodiment of this application is merely an example for description, and do not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communications module 150 or another functional module.

The wireless communication module 160 may provide a solution applied to the electronic device 100 for wireless communication including wireless local area networks (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the to-be-sent signal, and convert the signal into an electromagnetic wave for radiation by using the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display 194, the application processor, and the like. The GPU is an image processing microprocessor and is connected to the display 194 and the application processor. The GPU is configured to perform mathematical and geometric computing for graphics rendering. The processor 110 may include one or more GPUs, and the GPU executes a program instruction to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a Miniled, a MicroLed, a Micro-oLed, quantum dot light emitting diodes (quantum dot light emitting diodes, QLED), or the like. In some embodiments, the electronic device 100 may include 1 or N displays 194, and N is a positive integer greater than 1.

In embodiments of this application, the display 194 is configured to display various interfaces, for example, display a picture for the user to operate to trigger a memory function, and display an interface including a memory entry for the user to operate to generate a picture collection and a memory video.

The electronic device 100 may implement a shooting function by using the ISP, the camera 193, the video codec, the GPU, the display 194, the application processor, and the like, and implement the technical solution of tracking an object in embodiments of this application in a shooting process.

The ISP is configured to process data fed back by the camera 193. For example, during photographing, a shutter is pressed, and light is transmitted to a photosensitive element of the camera through a lens. An optical signal is converted into an electrical signal. The photosensitive element of the camera lens transmits the electrical signal to the ISP for processing, so that the ISP converts the electrical signal into an image visible to naked eyes. The ISP may further perform algorithm optimization on noise, brightness, and complexion of the image. The ISP may further optimize parameters such as exposure and a color temperature of a shooting scene. In some embodiments, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. An application such as intelligent cognition, for example, image recognition, facial recognition, speech recognition, or text understanding of the electronic device 100 may be implemented by using the NPU.

The external memory interface 120 may be configured to connect to an external memory card, for example, a Micro SD card, to expand a storage capability of the electronic device 100. The external memory card communicates with the processor 110 by using the external memory interface 120, to implement a data storage function. For example, files such as music and a video are stored in the external storage card.

The internal memory 121 may be configured to store computer-executable program code. The executable program code includes instructions. The processor 110 executes various function applications and data processing of the electronic device 100 by running the instructions stored in the internal memory 121. The internal memory 121 may include a program storage area and a data storage area. The program storage area may store an operating system, an application used for at least one function (for example, a sound playback function or an image playback function), and the like. The data storage area may store data (such as audio data and an address book) and the like that are created during use of the electronic device 100. In addition, the internal memory 121 may include a high-speed random access memory, and may further include a non-volatile memory, for example, at least one magnetic disk storage device, a flash memory device, and a universal flash storage (universal flash storage, UFS).

The electronic device 100 may implement an audio function, for example, music playback and recording, by using the audio module 170, the speaker 170A, the receiver 170B, the microphone 170C, the headset jack 170D, the application processor.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an electrical audio signal into a sound signal. When the electronic device 100 answers a call or receives voice information, the receiver 170B may be put close to a human ear to listen to voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to acquire a sound signal and further implement a noise reduction function. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations performed at a same touch position but having different touch operation intensity may correspond to different operation instructions. For example, when a touch operation whose touch operation intensity is less than a first pressure threshold is performed on an icon of the application Messages, an instruction for viewing a short message service message is executed. When a touch operation whose touch operation intensity is greater than or equal to the first pressure threshold is performed on the icon of the application Messages, an instruction for creating a new short message service message is executed.

The gyroscope sensor 180B may be configured to determine a motion posture of the electronic device 100. In some embodiments, an angular velocity of the electronic device 100 around three axes (that is, axes x, y, and z) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be configured to: navigate and sense a game scene.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a flip machine, the electronic device 100 may detect opening and closing of a flip based on the magnetic sensor 180D. Further, a feature such as automatic unlocking upon flipping is set based on a detected opening or closing state of the leather case or a detected opening or closing state of the flip.

The acceleration sensor 180E may detect magnitudes of accelerations of the electronic device 100 in various directions (generally three axes). When the electronic device 100 is still, a magnitude and a direction of gravity may be detected. The acceleration sensor 180E may be further configured to recognize a posture of the electronic device, and is used in an application such as switching between a landscape mode and a portrait mode or a pedometer.

The distance sensor 180F is configured to measure a distance. The electronic device 100 may measure a distance in an infrared manner or a laser manner. In some embodiments, in a shooting scene, the electronic device 100 may perform ranging by using the distance sensor 180F, to implement fast focusing.

The optical proximity sensor 180G may include, for example, a light-emitting diode (LED) and an optical detector such as a photodiode. The light-emitting diode may be an infrared light-emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically perform screen-off for power saving. The optical proximity sensor 180G may also be used for automatic screen unlocking and locking in a leather case mode or a pocket mode.

The ambient light sensor 180L is configured to sense brightness of ambient light. The electronic device 100 may adaptively adjust brightness of the display 194 based on the sensed brightness of the ambient light. The ambient light sensor 180L may also be configured to automatically adjust white balance during photographing. The ambient light sensor 180L may further cooperate with the optical proximity sensor 180G to detect whether the electronic device 100 is in a pocket, to prevent an accidental touch.

The fingerprint sensor 180H is configured to acquire a fingerprint. The electronic device 100 may implement, by using an acquired fingerprint characteristic, fingerprint unlocking, accessing an application lock, fingerprint photographing, answering an incoming call by using a fingerprint, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 reduces performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation acting on or near the touch sensor 180K. The touch sensor may transfer the detected touch operation to the application processor, to determine a touch event type. A visual output related to the touch operation may be provided by using the display 194. In some other embodiments, the touch sensor 180K may alternatively be disposed on a surface of the electronic device 100, and at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also come into contact with a human pulse to receive a blood pressure beating signal. In some embodiments, the bone conduction sensor 180M may alternatively be disposed in a headset, to form a bone conduction headset. The audio module 170 may parse out a voice signal based on the vibration signal of the vibration bone of the vocal-cord part that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch key. The electronic device 100 may receive a key input, and generate a key signal input related to user settings and function control of the electronic device 100.

The motor 191 may generate a vibration prompt. The motor 191 may be used for an incoming vibration prompt, or may be used for touch vibration feedback. For example, touch operations performed on different applications (for example, photographing and audio playback) may correspond to different vibration feedback effects. For touch operations performed on different areas of the display 194, the motor 191 may also correspond to different vibration feedback effects. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power level change, or may be configured to indicate a message, a missed call, a notification, and the like.

The SIM card interface 195 is configured to connect to a SIM card The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or of different types. The SIM card interface 195 is also compatible with different types of SIM cards. The SIM card interface 195 is also compatible with an external memory card. The electronic device 100 interacts with a network by using the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In an embodiment of this application, a software structure of the electronic device 100 is described by using an Android system with a layered architecture as an example.

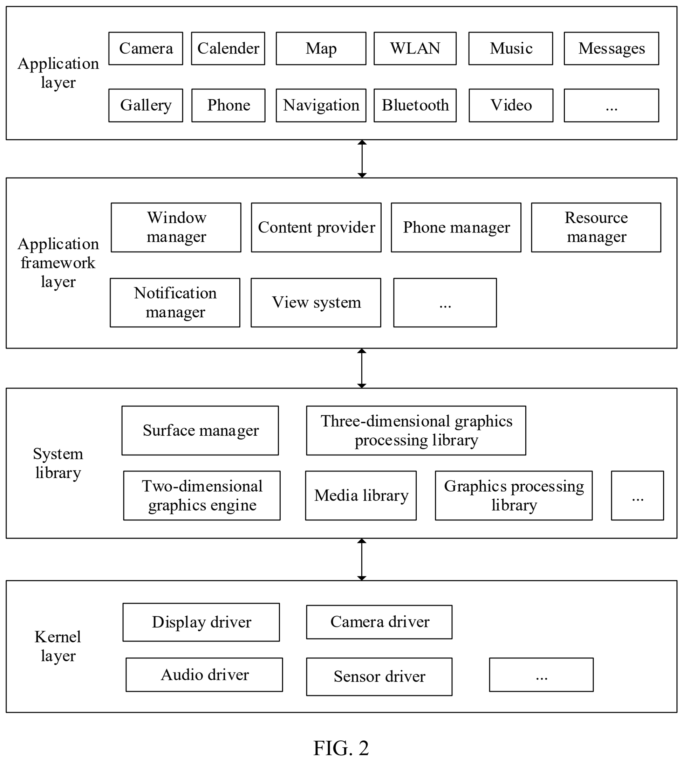

FIG. 2 is a block diagram of a software structure of an electronic device 100 according to an embodiment of this application. In the layered architecture, software is divided into several layers, and each layer has a clear role and task. The layers communicate with each other through software interfaces. In some embodiments, the Android system is divided into four layers: an application layer, an application framework layer, an Android runtime (Android runtime) system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application of the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessible by an application. The data may include a video, an image, audio, calls made and answered, a browse history and a bookmark, a personal address book, and the like.

The view system includes a visual control, for example, a control for displaying a text or a control for displaying a picture. The view system may be configured to construct an application. A display interface may include one or more views. For example, a display interface including a notification icon of Messages may include a text display view and a picture display view.

The phone manager is configured to provide a communication function for the electronic device 100, for example, call status management (including connection, hang-up, and the like).

The resource manager provides various resources for an application, such as a localized string, an icon, a picture, a layout file, and a video file.

The notification manager enables an application to display, in the status bar, notification information, which may be used for conveying a notification-type message that may automatically disappear after a short stay without user interaction. For example, the notification manager is configured to: notify download completion, provide a message prompt, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, a prompt tone is issued, an electronic device vibrates, or an indicator flashes.

The Android Runtime includes a core library and a virtual machine. The Android runtime is responsible for scheduling and management of the Android system.

The core library includes two parts: a function that needs to be invoked in java language and a core library of Android.

The application layer and the application framework layer run in the virtual machine. The virtual machine executes java files at the application layer and the application framework layer as binary files. The virtual machine is configured to execute functions such as object life cycle management, stack management, thread management, security and exception management, and garbage collection.

The system library may include a plurality of functional modules, such as a surface manager (surface manager), media libraries (media libraries), a three-dimensional graphics processing library (for example, OpenGL ES), and a 2D graphics engine (for example, SGL).

The surface manager is configured to: manage a display subsystem, and provide a fusion of 2D and 3D layers for a plurality of applications.

The media library supports playback and recording of a plurality of common audio and video formats, a still image file, and the like. The media library may support a plurality of audio and video encoding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that, the technical solutions in embodiments of this application may be used in systems such as Android, IOS, and Harmony.

As described in the background, in the conventional technology, because an actual requirement of a user is not considered, a controllable sense of the user is poor. As a result, the user cannot view a picture collection of a character or group that the user likes, and user experience is poor. For example, the user wants to view a collection of pictures taken together with a friend 1 and a friend 2, but the electronic device generates only a collection of pictures taken together with the friend 1.

Based on this, embodiments of this application provide a method for generating a memory video. A user may perform an operation on a picture based on a requirement of the user, and an electronic device searches, based on the operation of the user on the picture, a gallery for a picture collection of a related character that the user wants to view, so as to improve user experience. In addition, the electronic device further generates a wonderful memory video based on the picture collection, and may play pictures in the memory video, so as to prevent the user from manually operating in the picture collection to view a picture of a related character, thereby further improving user experience.

Embodiments of this application are first described below by using a graphical user interface (graphical user interface, GUI) in a mobile phone as an example.

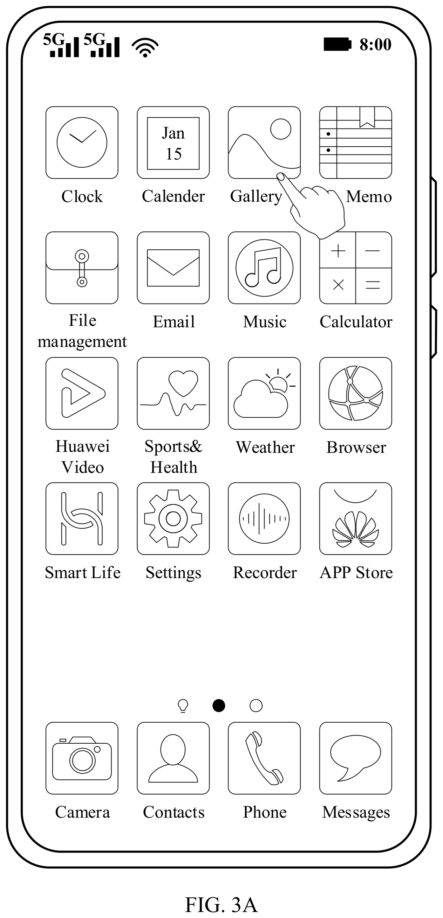

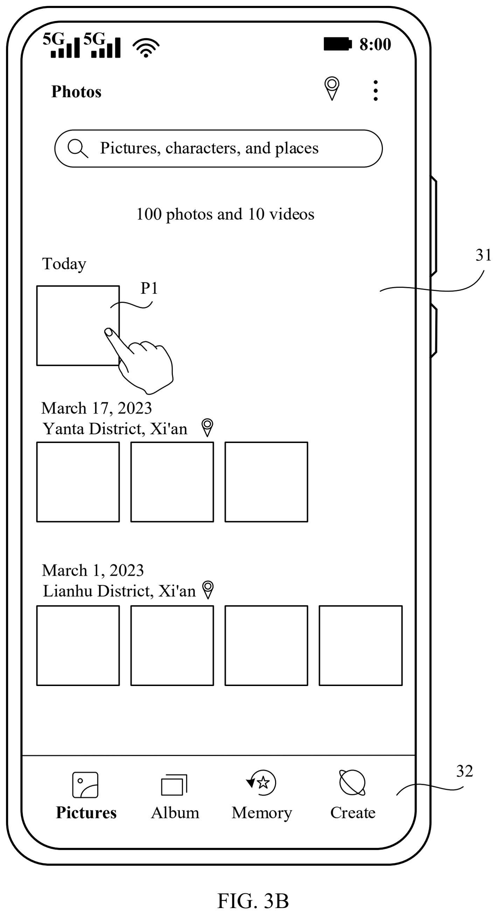

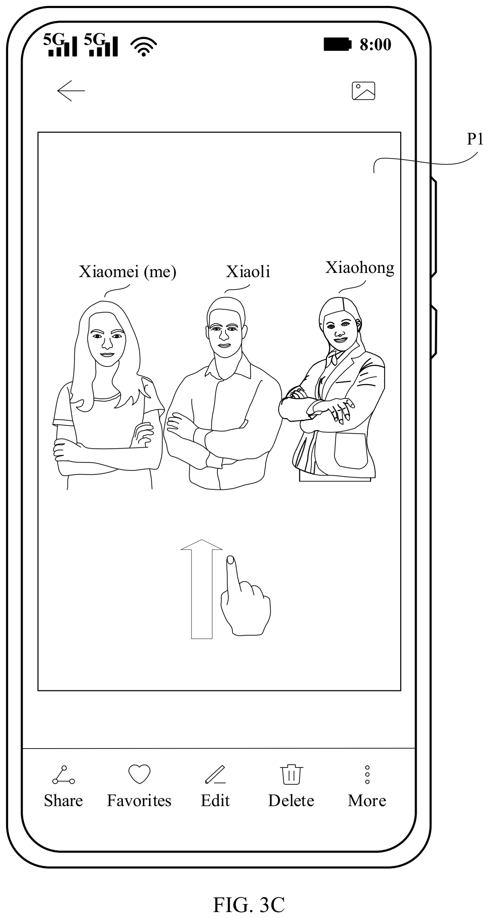

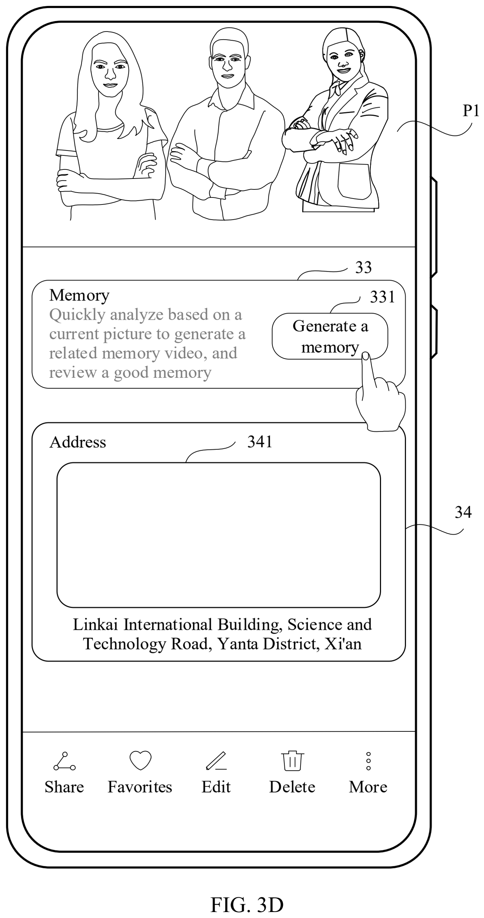

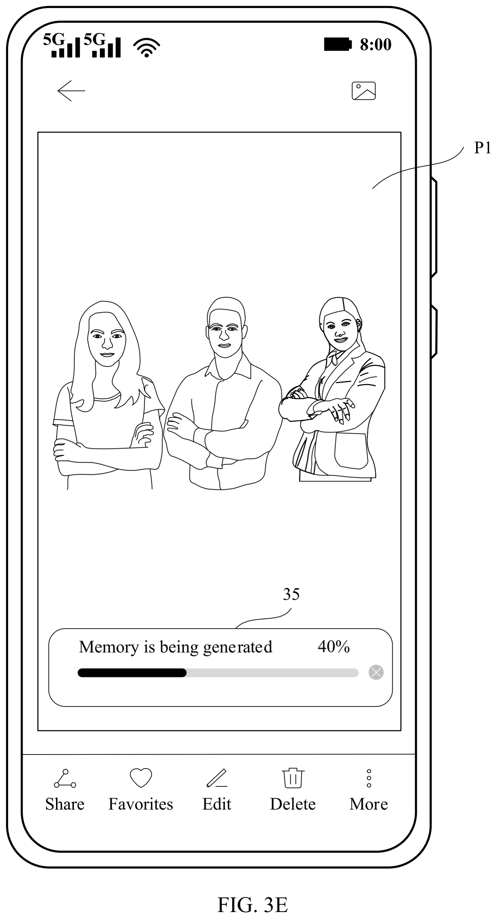

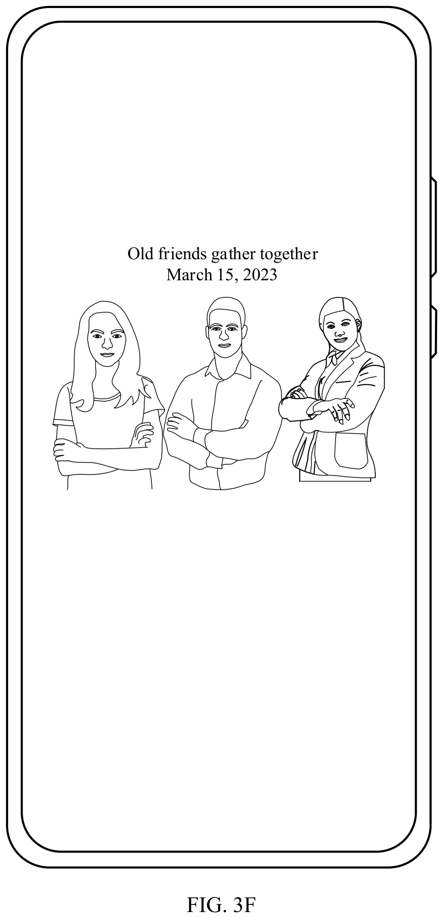

FIG. 3A, FIG. 3B, FIG. 3C, FIG. 3D, FIG. 3E, and FIG. 3F are a diagram of a group of GUIs according to an embodiment of this application. For a picture that is currently viewed by the user and that is not analyzed, pictures that are in the gallery and that include all characters in the picture are searched for based on an operation of the user on the picture, to generate a picture collection and generate a memory video. GUIs in the process are shown.

It should be understood that, all characters in the picture may be one person, or may be a plurality of people. This is not limited in embodiments of this application, and this is subject to a quantity of characters included in the picture.

With reference to the GUI in FIG. 3A, the GUI is a desktop of the mobile phone. The GUI includes a plurality of application icons. When the user wants to view a picture (or a photo), the user taps an icon representing the gallery. After the mobile phone detects an operation of tapping, by the user, the icon representing the gallery on the desktop, the gallery application may be enabled, to display the GUI shown in FIG. 3B.

With reference to the GUI in FIG. 3B, the electronic device displays a main interface of the gallery application. The main interface includes an interface 31 and an interface 32. The interface 32 includes icons of a plurality of category options. The interface 31 displays pictures presented through a category option. For example, the interface 31 displays pictures presented through the category option "picture". Still with reference to FIG. 3B, the user wants to view a picture P1, and taps the picture P1, and the mobile phone displays the GUI shown FIG. 3C in response to an operation of tapping, by the user, the picture P1.

It should be noted that, "picture" in embodiments of this application may also be referred to as a photo or an image, and the three expressions are interchangeable, and details are not described subsequently again.

With reference to the GUI in FIG. 3C, the GUI displays an enlarged picture P1. The picture P1 includes three characters, which are respectively the user "Xiaomei", and friends "Xiaoli" and "Xiaohong" of the user. When browsing the picture P1, the user misses a time of three people together, and wants to browse related pictures of the three people together in the gallery. Therefore, the user swipes up the picture P1, or the user performs a swipe-up operation on the picture P1. After detecting the swipe-up operation of the user on the picture P1, the mobile phone displays the GUI shown in FIG. 3D.

In an example, after detecting the swipe-up operation of the user on the picture P1, the mobile phone analyzes the picture P1 when determining that the picture P1 is not analyzed, and displays the GUI shown in FIG. 3D when determining that the picture P1 includes characters. In other words, after detecting the swipe-up operation of the user on the picture P1, the mobile phone determines whether the picture P1 is analyzed. When determining that the picture P1 is not analyzed, the electronic device analyzes whether the picture P1 includes characters. When determining that the picture P1 includes characters, the electronic device displays the GUI shown in FIG. 3D.

It should be understood that "whether the picture is analyzed" described in this embodiment of this application indicates analyzing whether the picture includes characters. When the picture has been analyzed, it indicates that the mobile phone has analyzed that the picture includes characters. The following explanation of picture analysis is the same, and details are not subsequently described again. For the picture P1, if it is determined that the picture P1 has been analyzed, it indicates that the picture P1 includes characters.

In another example, when determining that the picture P1 has been analyzed, the mobile phone may display the GUI different from that shown in FIG. 3D. The following provides differential descriptions.

It should be understood that a manner in which the user performs a swipe-up operation on the picture P1 to trigger generation of a memory entry is merely an example for description. This is not limited in embodiments of this application, and any manner in which the device can be triggered to generate a memory entry falls within the protection scope of embodiments of this application. For example, the user performs a long press operation, a horizontal swiping (leftward swiping or rightward swiping) operation, a swipe-down operation, or the like on the picture P1.

With reference to the GUI in FIG. 3D, the GUI includes the picture P1 and a memory entry area 33. After the user swipes up the picture P1, the picture P1 is swiped to the top of the interface. The memory entry area 33 is displayed below the picture P1. The memory entry area 33 is used for a function of triggering, by the user, to generate the memory video. For example, the memory entry area 33 includes prompt texts "quickly analyze based on a current picture to generate a related memory video, and review a good memory" and a memory entry 331. For example, the memory entry 331 may be a control displaying texts "generate a memory". The user taps the memory entry 331, for example, the control "generate a memory". After the mobile phone detects a user operation, it means that the user triggers a function of generating the memory video. Based on the three recognized characters of the picture P1, the mobile phone filters, from the gallery through feature matching, a picture collection including pictures of the three characters together that satisfies a condition, and generates the memory video based on the picture collection.

The mobile phone filters, from the gallery, the picture collection including the pictures of the three characters together that satisfies the condition. In a process of generating the memory video based on the picture collection, all pictures in the picture collection are not necessarily played. In other words, pictures in the memory video are not necessarily all pictures in the picture collection, and the pictures in the memory video may be some or all pictures in the picture collection. For example, when a quantity of the pictures in the picture collection is large, to enable, to the greatest extent, the user to better experience a wonderful process of playing the video, some pictures may be selected from the picture collection to generate the memory video. For another example, when the quantity of the pictures in the picture collection is small, all pictures in the picture collection may be used as the pictures of the memory video.

For example, the GUI in FIG. 3D may further include other information related to the picture P1. For example, the GUI includes an address area 34. The address area 34 includes a map 341 and texts. The map 341 is marked with an address where the picture P1 is shot (or generated) at that time, and the texts indicate the address where the picture P1 is shot (or generated) (for example, Linkai International Building, Science and Technology Road, Yanta District, Xi'an).

To facilitate the user in viewing the progress of generating the memory video to improve visual experience of the user, the GUI shown in FIG. 3E may be displayed.

With reference to the GUI in FIG. 3E, the GUI includes the picture P1 and a progress box 35. The progress box 35 is configured to display the progress of generating the memory video, for example, 40%. When the progress reaches 100%, the picture collection including the pictures of the three characters together is generated and the memory video is generated, and the GUI shown in FIG. 3F is displayed.

With reference to the GUI in FIG. 3F, the GUI displays the memory video that has a theme "old friends gather together" and that is generated instantly. The memory video includes a plurality of pictures of the three people together. After the memory video is generated, the mobile phone may automatically play each frame of picture in the memory video.

For example, the memory video includes the picture P1 operated by the user or used to trigger generation of the memory video.

For example, the picture P1 operated by the user or used to trigger generation of the memory video may be used as a cover picture of the memory video.

For example, when the memory video is played, each frame of picture may be played based on a timeline. In this way, the user can recall the past time and deepen the memory based on time at which events occur. For example, the pictures may be played in a far to near time sequence. To be specific, a picture whose timeline is relatively far is played before a picture whose timeline is relatively near.

In the foregoing embodiment, the user performs an operation on a currently browsed picture, and actively triggers a memory function, so that the mobile phone can select, from the gallery, the picture collection including the pictures of all characters of the currently browsed picture together and generate the memory video, so that an actual requirement of the user is met and user experience is better improved. In addition, in comparison with a manner in which the user searches for a picture in a wide range from the gallery, search duration can be reduced better, and a problem that a memory disconnection occurs when the user browses the picture is resolved. In addition, a most common scenario in which the user wants to search for a picture collection of a related character is that the user thinks of some people and something when browsing a picture, and therefore wants to recall the past time. Therefore, the memory function is actively triggered by performing an operation on the picture that is being browsed by the user. This is more consistent with a behavior habit of the user, so that user experience is relatively high.

In the conventional technology, the mobile phone may trigger, through charging, a function of analyzing the picture. To be specific, when the mobile phone is in a charging mode, the picture may be automatically classified into picture collections of different themes through picture analysis. However, for a picture that is generated instantly, if the mobile phone is not charged within short time, the picture cannot be analyzed instantly, affecting user experience. However, in embodiments of this application, the user can perform an operation when browsing any one of existing pictures, to actively trigger the memory function, so that the picture instantly generated can be actively analyzed to generate the memory video, to improve real-time performance of analyzing the picture, thereby further improving user experience.

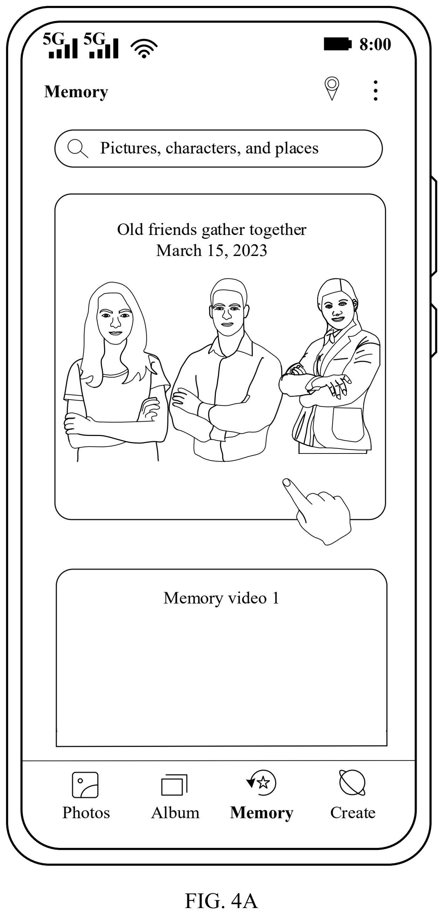

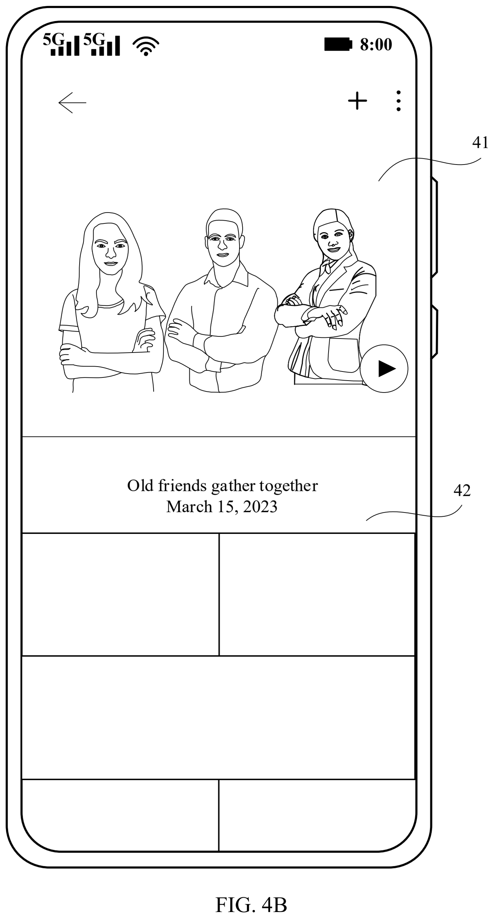

FIG. 4A and FIG. 4B show another group of GUIs according to an embodiment of this application. A GUI presenting the memory video in an interface of a "memory" category after the memory video is generated is shown.

After the memory video is generated, the interface of the "memory" category in the gallery is enabled, to display the GUI shown in FIG. 4A. The GUI displays a part of all existing memory videos in the mobile phone. The user performs an operation such as a swipe-up operation on the display interface. In response to the user operation, the display interface may scroll to display the other part of undisplayed memory videos.

For the memory video that has the theme "old friends gather together" and that is generated instantly, the memory video with the theme is displayed at a leading position in the interface of the "memory" category. Because the newly generated memory video has a relatively high probability of being viewed by the user, the newly generated memory video is placed in the first position of the interface, so that an operation such as a swiping operation can be avoided to search for the newly generated memory video. This is quite convenient for the user to view. In an implementation, for the newly generated memory video, the mobile phone inserts the newly generated memory video in front of all the memory videos, and the remaining memory videos are shifted backward in an existing sequence.

The user taps the newly generated memory video whose theme is "old friends gather together", to display the GUI shown in FIG. 4B. With reference to the GUI in FIG. 4B, the GUI includes a video area 41 and a picture area 42.

The picture area 42 is configured to display pictures in a picture collection whose theme is "old friends gather together". The picture collection includes a plurality of pictures. Each picture is a picture of three people together, and is obtained through feature matching between pictures in the gallery and the picture P1. Because a size of the picture area 42 is limited, when the quantity of the pictures in the picture collection is large, the picture area 42 displays some pictures in the picture collection. The user may perform an operation such as a swipe-up operation on the picture area 42. In response to the user operation, the picture area 42 may scroll to display the other part of undisplayed pictures.

The video area 41 is configured to play each frame of picture in the memory video. It should be noted that, the pictures in the memory video whose theme is "old friends gather together" are some or all pictures in the picture collection whose theme is "old friends gather together" that the picture area 42 is configured to display.

As described above, for example, when the quantity of the pictures in the picture collection is large, to enable, to the greatest extent, the user to experience a wonderful process of playing the video, some pictures may be selected from the picture collection to generate the memory video. Because the memory video includes some pictures in the picture collection, the user cannot view all the pictures when the memory video is played. Therefore, the user may view all the pictures in the picture area 42. In this way, not only wonderful experience of the user in the video play process can be improved to the greatest extent, but also all pictures that meet the condition can be reserved for the user to view, and both effectively improve user experience.

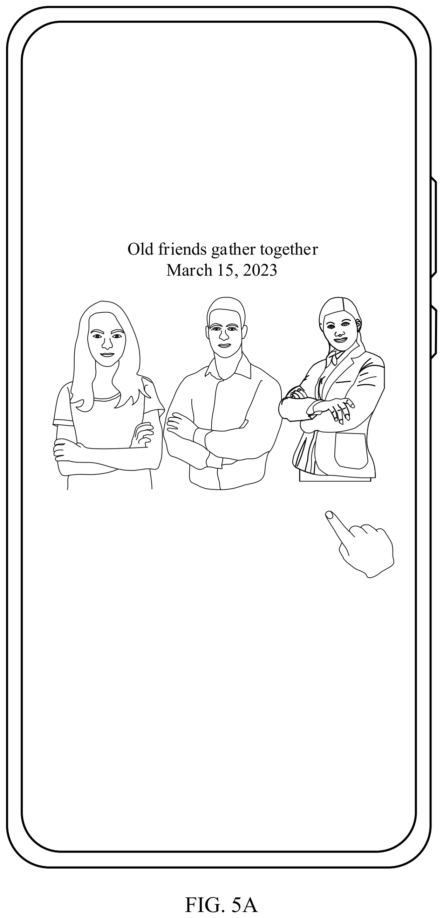

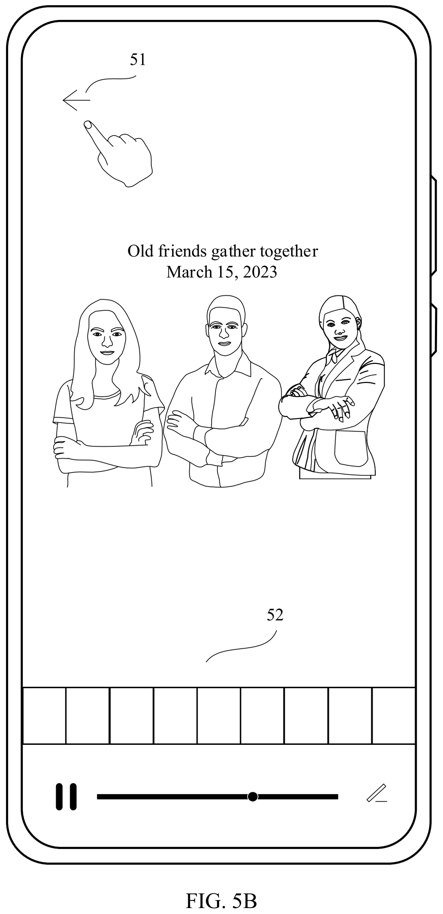

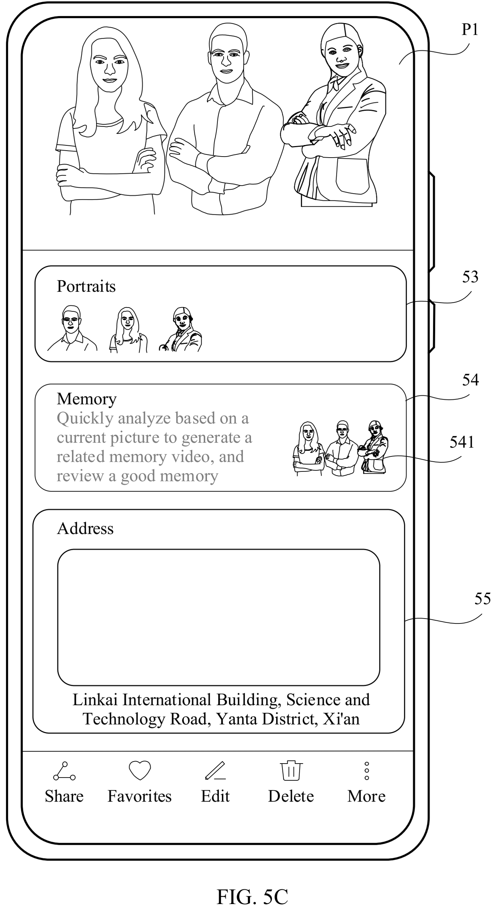

FIG. 5A, FIG. 5B, and FIG. 5C show another group of GUIs according to an embodiment of this application.

When the memory video is generated, as shown in FIG. 5A (which may correspond to the GUI in FIG. 3F), when the user taps the memory video, the GUI shown in FIG. 5B may be displayed.

With reference to the GUI in FIG. 5B, the GUI includes a return control 51 on the upper left corner and a picture area 52 located below the memory video. The picture area 52 displays, for example, in a manner of moving leftward, each frame of picture played in the memory video. A quantity of pictures accommodated in the picture area 52 is limited. Each frame of picture is played, the mobile phone moves pictures in the picture area 52 leftward by one frame of picture, so that a next frame of picture enters the picture area 52. In this way, each frame of picture of the memory video is displayed in the picture area 52. When the user taps the return control 51, the GUI shown in FIG. 5C may be displayed.

With reference to the GUI in FIG. 5C, the GUI is similar to the GUI in FIG. 3D, and includes the picture P1, a memory entry area 54, and an address area 55. A difference from the GUI in FIG. 3D lies in that, the GUI includes a character area 53, and a memory entry 541 of the memory entry area 54 is changed to a control displaying the picture P1.

Because the picture P1 has been analyzed, the GUI may directly display the character area 53. The character area 53 includes character pictures of characters obtained by analyzing the picture P1. In this way, visual reflection of the user can be improved. In addition, in some embodiments, because the picture P1 is a cover picture of the memory video, in the memory entry area 54, a memory entry 541 becomes a control displaying the picture P1 used as the cover picture.

In this way, when the picture P1 has been analyzed and the memory video includes the picture P1, when the user wants to browse a picture collection related to the picture P1 when subsequently browsing the picture P1, the GUI shown in FIG. 5C is displayed by swiping up the picture P1. When the user taps the control 541 displaying the picture P1, the mobile phone may instantly play the memory video that is previously generated. Because the memory video does not need to be generated again based on the analyzed picture, a response speed can be effectively increased.

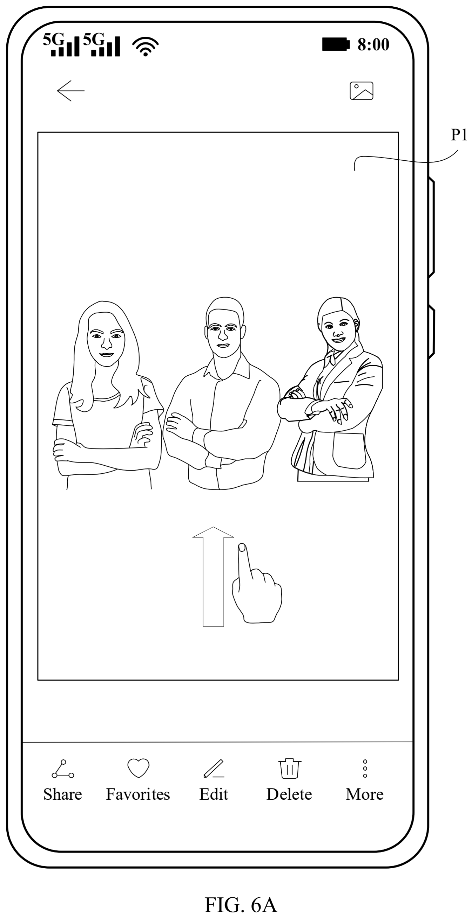

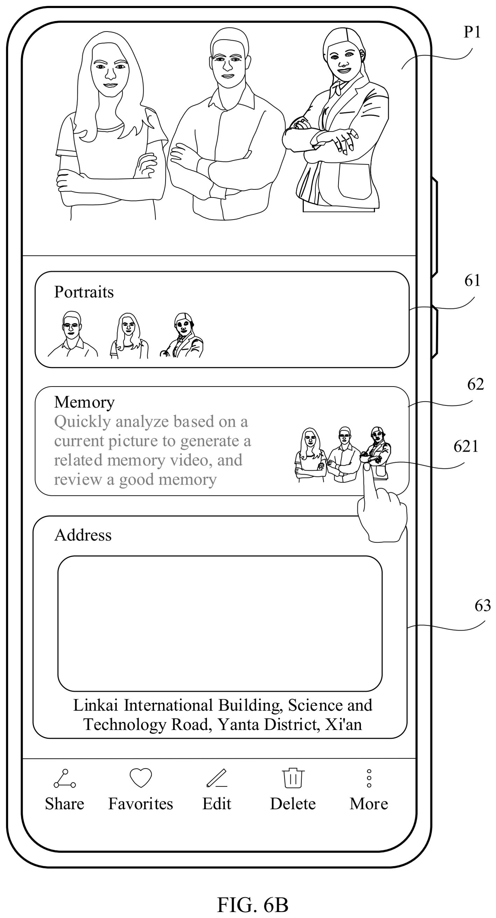

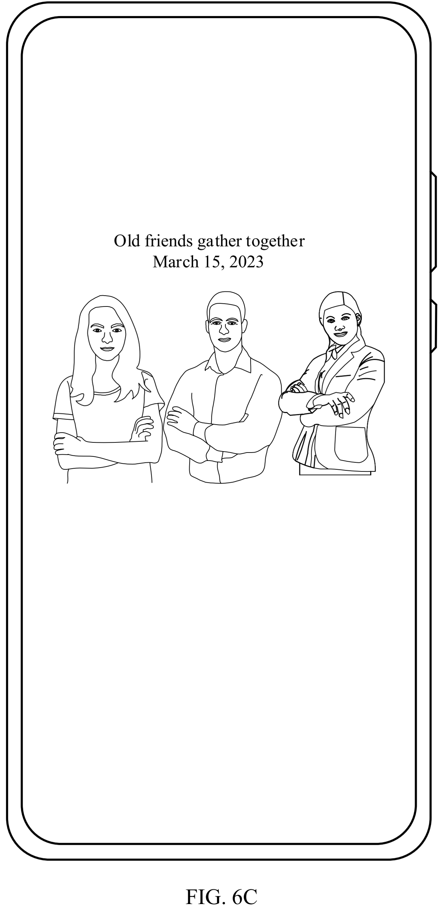

FIG. 6A, FIG. 6B, and FIG. 6C show another group of GUIs according to an embodiment of this application. GUIs in a process in which the user performs an operation on a picture again to trigger the memory function when the picture has been analyzed and the memory video includes the picture are shown.

With reference to the GUI in FIG. 6A, when the user browses the picture P1 again, the user wants to browse related pictures of the three people together in the gallery. Therefore, the user swipes up the picture P1, or the user performs a swipe-up operation on the picture P1. After detecting the swipe-up operation of the user on the picture P1, the mobile phone detects that the user has previously analyzed the picture P1 and that the memory video includes the picture P1, and displays the GUI shown in FIG. 6B.

With reference to the GUI in FIG. 6B, the GUI is the same as the GUI in FIG. 5B, and includes the picture P1, a character area 61, a memory entry area 62, and an address area 63. When the user taps a memory entry 621, the GUI shown in FIG. 6C is displayed.

With reference to the GUI in FIG. 6C, the GUI displays the memory video that has a theme "old friends gather together" and that has been previously generated. In addition, each picture in the memory video may be automatically played.

It should be noted that, the picture on which the user performs an operation in FIG. 6A may be the picture P1 for the user to actively trigger the memory function previously, or may be any picture selected by the mobile phone from the gallery based on the picture P1 and added to the memory video. This is not limited herein. It may be understood that, for the latter case, although the user has not previously performed an operation on a picture other than the picture P1 in the memory video to trigger the memory function, when the user subsequently performs an operation on any picture other than the picture P1 (denoted as a picture A1) in the memory video to trigger the memory function, it means that the user wants to see the picture A1 in the memory video. Therefore, when the picture A1 is a picture of the memory video, the memory video can play and present the picture A1. Therefore, the picture A1 may alternatively be any picture other than the picture P1 in the memory video.

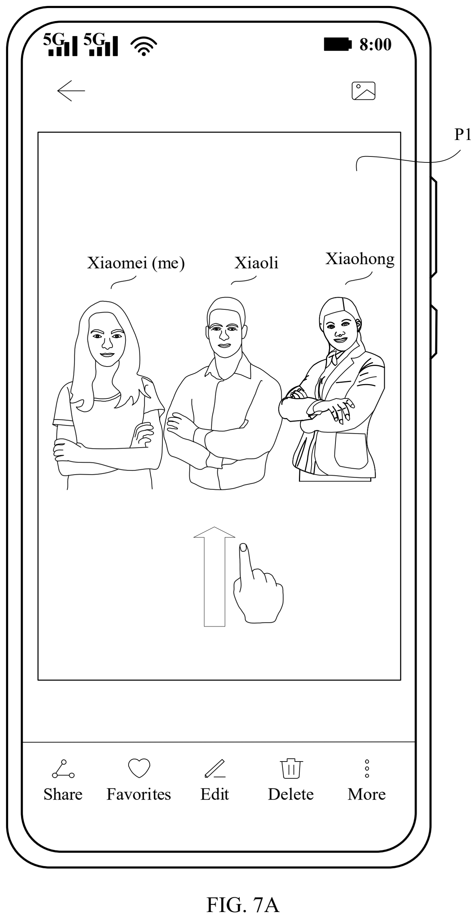

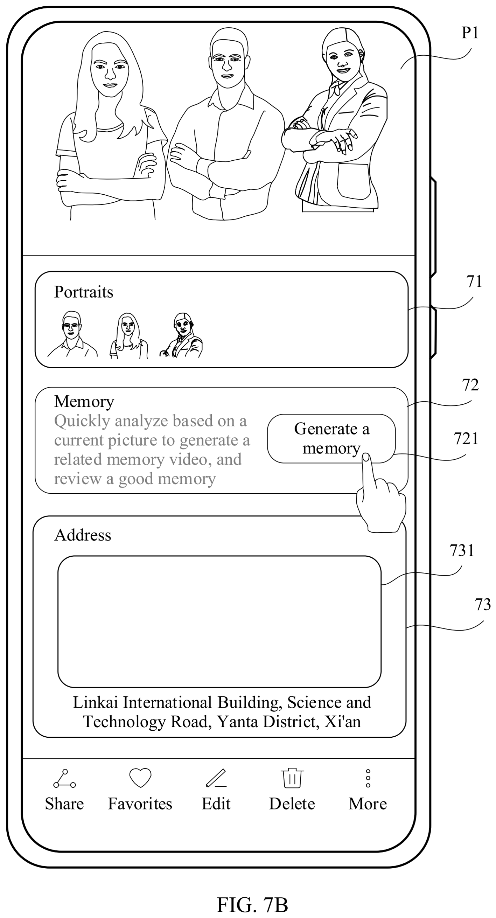

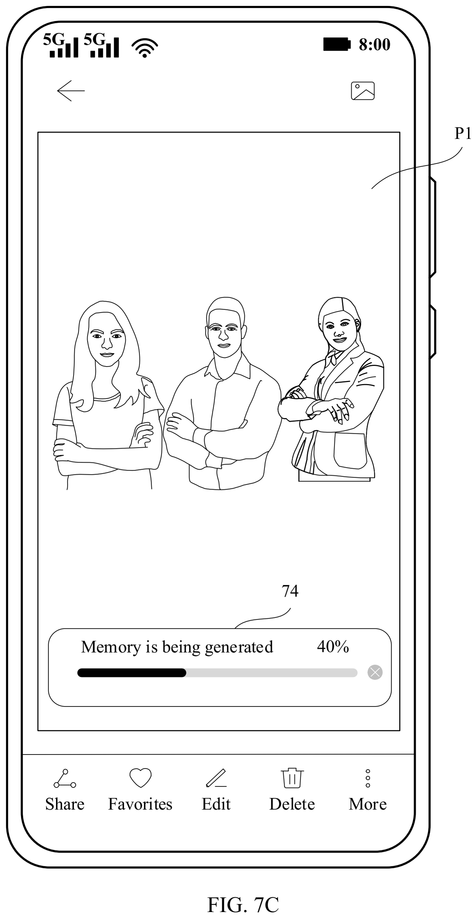

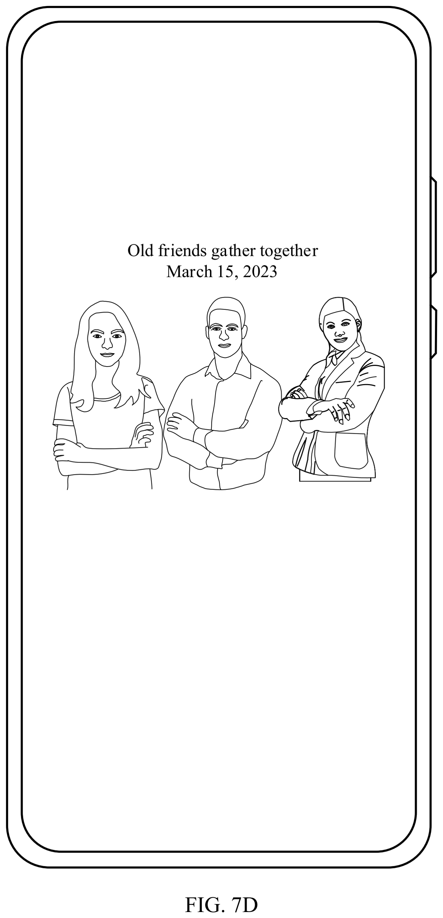

FIG. 7A, FIG. 7B, FIG. 7C, and FIG. 7D show another group of GUIs according to an embodiment of this application. FIG. 7A, FIG. 7B, FIG. 7C, and FIG. 7D differ from FIG. 3A, FIG. 3B, FIG. 3C, FIG. 3D, FIG. 3E, and FIG. 3F in that FIG. 7A, FIG. 7B, FIG. 7C, and FIG. 7D show GUIs in a process of searching the gallery for pictures including all characters in a picture based on an operation of the user on the picture when the picture has been analyzed and the memory video is not generated, to generate the picture collection and generate the memory video.

With reference to the GUI in FIG. 7A, the GUI in FIG. 7A is obtained based on the foregoing operations of FIG. 3A and FIG. 3B. The GUI displays an enlarged picture P1. The picture P1 includes three characters, which are respectively the user "Xiaomei", and friends "Xiaoli" and "Xiaohong" of the user. When browsing the picture P1, the user misses a time of three people together, and wants to browse related pictures of the three people together in the gallery. Therefore, the user swipes up the picture P1, or the user performs a swipe-up operation on the picture P1. After detecting the swipe-up operation of the user on the picture P1, the mobile phone displays the GUI shown in FIG. 7D.

For example, after detecting the swipe-up operation of the user on the picture P1, the mobile phone determines that the picture P1 has been analyzed, namely, determines that the picture P1 includes characters, and the picture P1 does not exist in any memory video. Therefore, the GUI shown in FIG. 7B is displayed.

With reference to the GUI in FIG. 7B, the GUI includes the picture P1, a character area 71, and a memory entry area 72.

Because the picture P1 has been analyzed, the GUI may directly display the character area 71. The character area 71 includes character pictures of characters obtained by analyzing the picture P1. In this way, visual reflection of the user can be improved.

The memory entry area 72 includes a memory entry 721. For example, the memory entry 721 may be a control displaying "generate a memory". The user taps the memory entry 721, for example, the control "generate a memory". After detecting a user operation, based on the three recognized characters of the picture P1, the mobile phone filters, from the gallery through feature matching, a picture collection including pictures of the three characters together that satisfies a condition, and generates the memory video based on the picture collection.

For example, the GUI in FIG. 7B may further include other information related to the picture P1. For example, the GUI includes an address area 73. The address area 73 includes a map 731 and texts. The map 731 is marked with an address where the picture P1 is shot at that time, and the texts indicate the address where the picture P1 is shot (for example, Linkai International Building, Science and Technology Road, Yanta District, Xi'an).

To facilitate the user in viewing the progress of generating the memory video to improve visual experience of the user, the GUI shown in FIG. 7C may be displayed. The GUI includes the picture P1 and a progress box 74. The progress box 74 is configured to display the progress of generating the memory video. When the progress reaches 100%, the picture collection including the pictures of the three characters together is generated and the memory video is generated, and the GUI shown in FIG. 7D is displayed.

With reference to the GUI in FIG. 7D, the GUI displays the memory video that has a theme "old friends gather together" and that is generated instantly. The memory video includes a plurality of pictures of the three people together. After the memory video is generated, the mobile phone may automatically play each frame of picture in the memory video.

In the embodiment shown in FIG. 7A, FIG. 7B, FIG. 7C, and FIG. 7D, the mobile phone may analyze the picture P1 in advance in the following manner, so that there is no need to analyze the picture P1 after detecting the operation of the user on the picture P1, for example, the swipe-up operation, to directly display the character area 71 of the GUI in FIG. 7B.

In an example, before detecting the operation of the user on the picture P1, for example, the swipe-up operation, when the mobile phone is in the charging mode, the mobile phone may actively analyze all the pictures in the gallery, to classify the pictures. It is analyzed in the picture analysis process that the picture P1 includes characters.

In another example, before the operation of the user on the picture P1, for example, the swipe-up operation, is detected, the user performs an operation such as the swipe-up operation on another picture, to actively trigger the memory function. The mobile phone analyzes the pictures in the gallery and extracts features, and the like, to select pictures matching characters in the another picture, to generate a picture collection and a memory video. In the foregoing picture analysis process, analysis of the picture P1 is completed. However, although the picture P1 has been analyzed, the picture P1 is not added to the memory video, or in other words, the memory video does not include the picture P1. It may be understood that, the memory entry 621 in FIG. 6B may be displayed when the picture P1 has been analyzed and the memory video includes the picture P1.

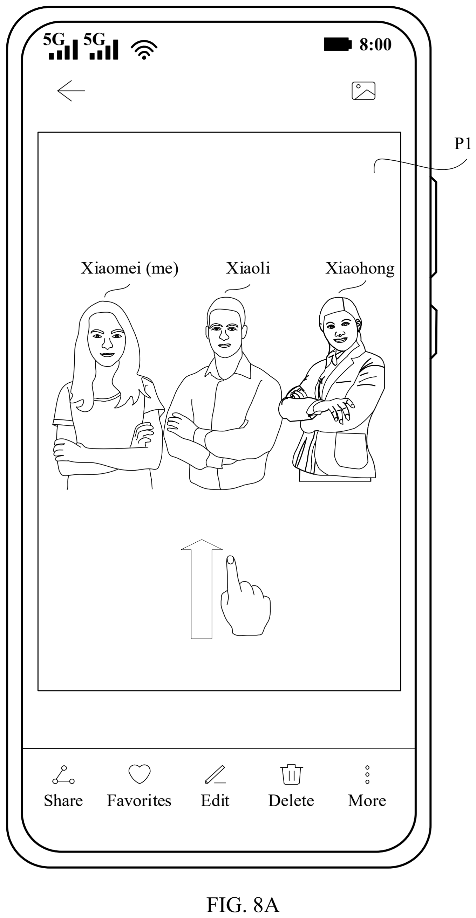

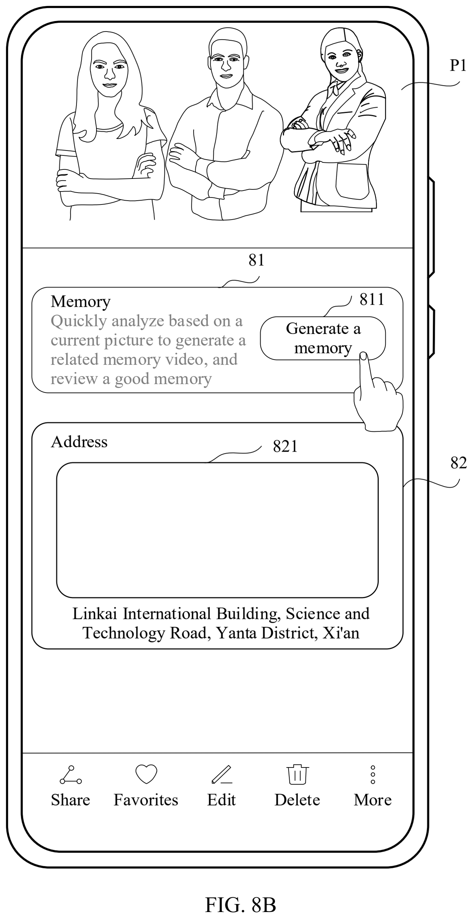

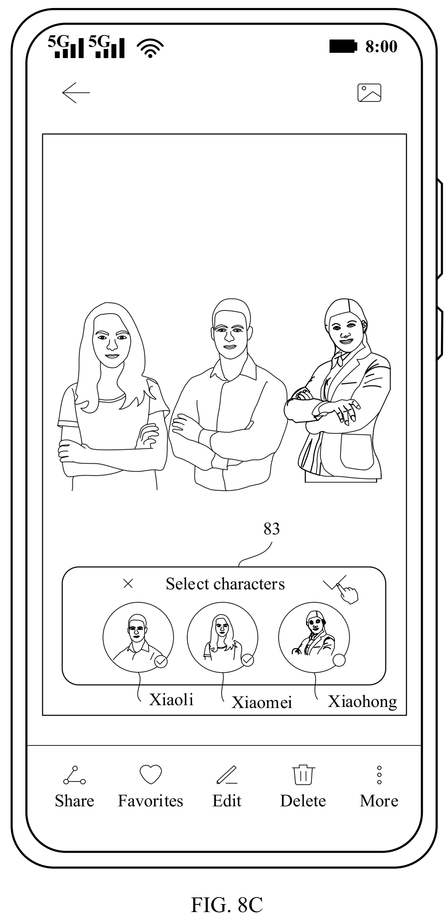

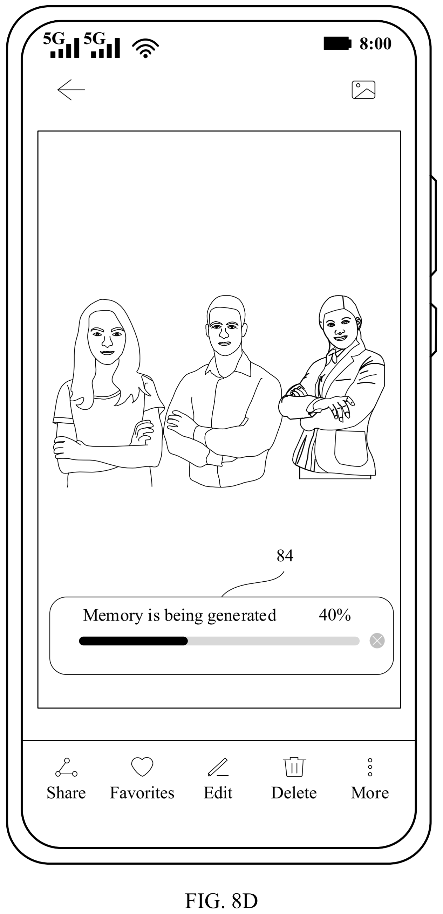

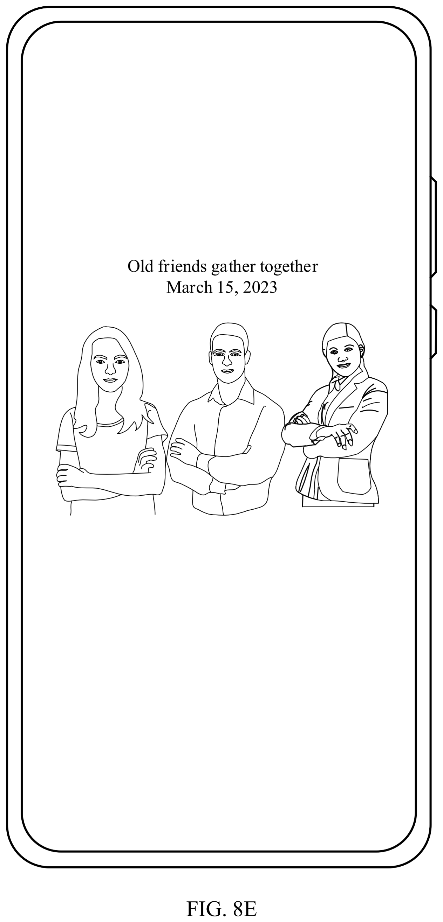

FIG. 8A, FIG. 8B, FIG. 8C, FIG. 8D, and FIG. 8E show another group of GUIs according to an embodiment of this application. For a picture that is currently viewed by the user and that is not analyzed, the user selects any character in the picture, and the mobile phone searches the gallery for pictures including the any character based on the any character that is in the picture and that is selected by the user, to generate a picture collection and a memory video. GUIs in the process are shown.

It should be understood that, the any character that is in the picture and that is selected by the user may be some characters or all characters in the picture. This is not limited in embodiments of this application, and this is subject to a user requirement. The user may select one or more characters. This is not limited in embodiments of this application.

With reference to the GUI in FIG. 8A, the GUI in FIG. 8A is obtained based on, for example, FIG. 3A and FIG. 3B. The GUI displays an enlarged picture P1. The picture P1 includes three characters, which are respectively the user "Xiaomei", and friends "Xiaoli" and "Xiaohong" of the user. When browsing the picture P1, the user misses a time of being together with the friend "Xiaoli", and wants to browse related pictures of the user and "Xiaoli" together in the gallery. Therefore, the user swipes up the picture P1, or the user performs a swipe-up operation on the picture P1. After detecting the swipe-up operation of the user on the picture P1, the mobile phone displays the GUI shown in FIG. 8B.

In an example, after detecting the swipe-up operation of the user on the picture P1, the mobile phone analyzes the picture P1 when determining that the picture P1 is not analyzed, and displays the GUI shown in FIG. 8B when determining that the picture P1 includes characters. In other words, after detecting the swipe-up operation of the user on the picture P1, the mobile phone determines whether the picture P1 is analyzed. When determining that the picture P1 is not analyzed, the mobile phone analyzes whether the picture P1 includes characters. When determining that the picture P1 includes characters, the mobile phone displays the GUI shown in FIG. 8B.

With reference to the GUI in FIG. 8B, the GUI includes the picture P1 and a memory entry area 81. After the user swipes up the picture P1, the picture P1 is swiped to the top of the interface. The memory entry area 81 is displayed below the picture P1. The memory entry area 81 is used for a function of triggering, by the user, to generate the memory video. For example, the memory entry area 81 includes prompt texts "quickly analyze based on a current picture to generate a related memory video, and review a good memory" and a memory entry 811. For example, the memory entry 811 may be a control displaying "generate a memory". The user taps the memory entry 811, for example, the control "generate a memory". After the mobile phone detects a user operation, it means that the user triggers the function of generating the memory video. The mobile phone recognizes the three characters of the picture P1, to display the GUI shown in FIG. 8C.

With reference to the GUI in FIG. 8C, the GUI includes the picture P1 and a character area 83. The character area 83 includes character pictures of all characters (for example, Xiaoli, Xiaomei, and Xiaohong) recognized from the picture P1. The user selects pictures of characters that the user is interested in from all the character pictures based on preference of the user. For example, the user selects pictures of "Xiaoli" and "Xiaomei". After the pictures of the characters that the user is interested in are selected, a confirmation control such as "√" is tapped. After detecting an operation of tapping, by the user, the confirmation control, the mobile phone may confirm that the user wants to search for pictures including pictures of "Xiaoli" and "Xiaomei" together. Therefore, the mobile phone filters, through feature matching from the gallery, a picture collection including pictures of two characters selected by the user together, and generates a memory video based on the picture collection.

It should be understood that, each picture in the picture collection and the memory video includes not only any character that the user is interested in and that is selected by the user, but also another character. This is subject to content shot in the picture itself. However, because the user selects any character of the picture, the picture of the finally generated picture collection and the memory video includes at least the any character selected by the user. Using the picture P1 as an example, although the user selects "Xiaoli" and "Xiaomei" in the picture P1, when used as a picture of the picture collection and the memory video, the picture P1 itself further includes "Xiaohong".

To facilitate the user in viewing the progress to improve visual experience of the user, the GUI shown in FIG. 8D is displayed.

With reference to the GUI in FIG. 8D, the GUI includes the picture P1 and a progress box 84. The progress box 84 is configured to display the progress of generating the memory video, for example, 40%. When the progress reaches 100%, the picture collection including the pictures of the two characters selected by the user together is generated and the memory video is generated, and the GUI shown in FIG. 8E is displayed.

With reference to the GUI in FIG. 8E, the GUI displays the memory video that has a theme "old friends gather together" and that is generated instantly. The memory video includes a plurality of pictures of the two people together. After the memory video is generated, the mobile phone may automatically play each frame of picture in the memory video.

For example, the memory video includes the picture P1. It should be understood that, as a picture of the memory video, the picture P1 itself is a picture of three people together, and includes two people that the user is interested in and that are selected by the user.

For example, the picture P1 operated by the user or used to trigger generation of the memory video may be used as a cover picture of the memory video.

For example, when the memory video is played, each frame of picture may be played based on a timeline. In this way, the user can recall the past time and deepen the memory based on time at which events occur. For example, the pictures may be played in a far to near time sequence. To be specific, a picture whose timeline is relatively far is played before a picture whose timeline is relatively near.

In the foregoing embodiment, for a currently browsed picture, the user actively triggers a memory function. The user may select any character in the picture based on the preference of the user, so that the mobile phone can filter, from the gallery, a picture collection including any character selected by the user and generate the memory video. Therefore, a more flexible selection space is provided for the user, so that the user can select the character based on the preference of the user more flexibly. The historical time related to any character is recalled through the memory video including the any character, so that an actual requirement of the user can be better met, to better improve user experience.

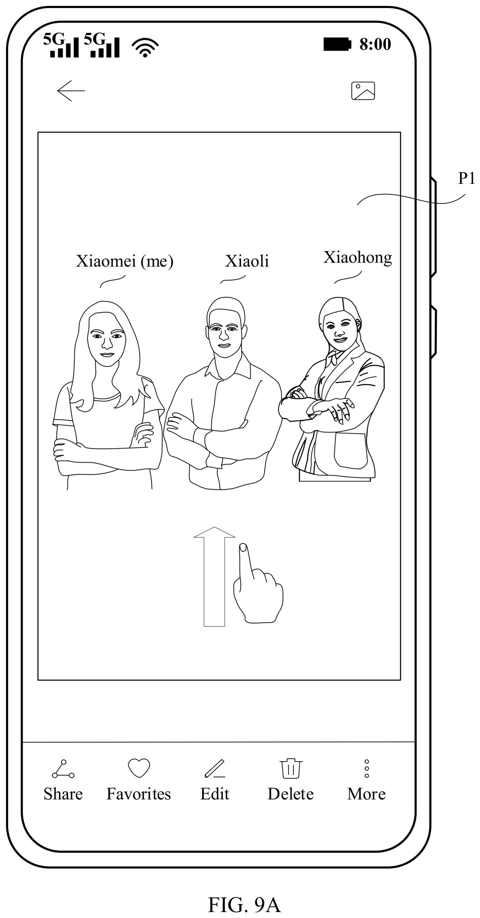

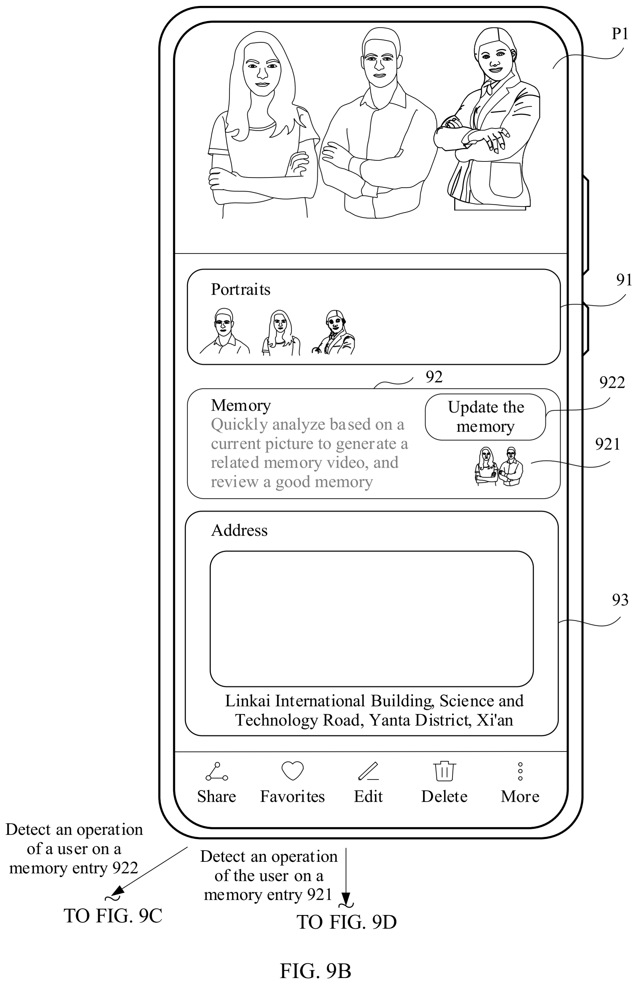

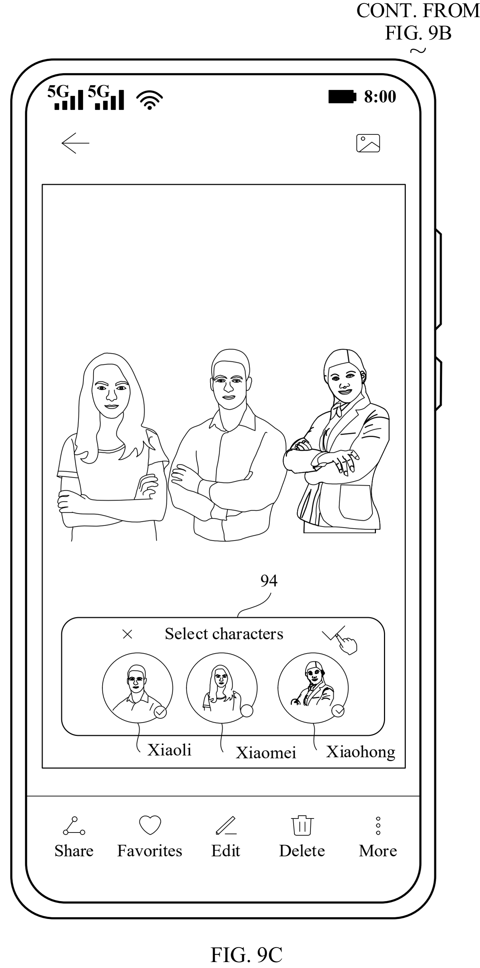

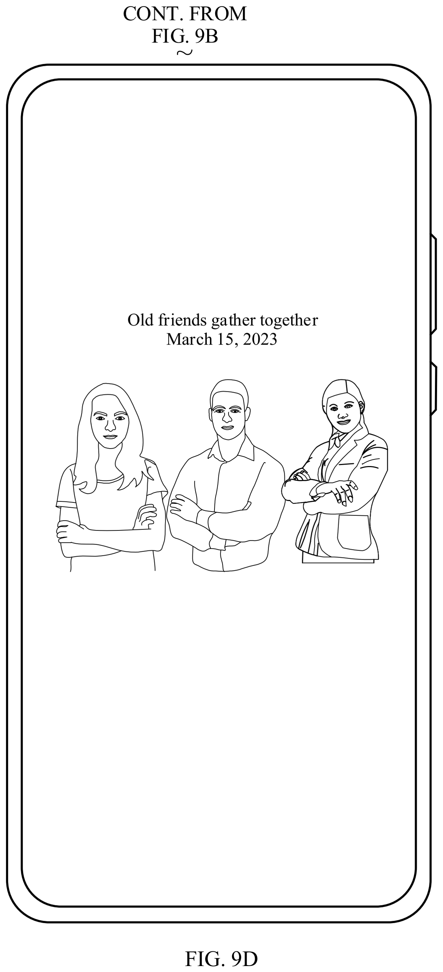

FIG. 9A, FIG. 9B, FIG. 9C, and FIG. 9D show another group of GUIs according to an embodiment of this application. Some GUIs in a process in which the user performs an operation on a picture again to trigger the memory function when the picture has been analyzed and the memory video includes the memory video of the picture are shown.

The user triggers the active memory function previously by using the picture P1, to generate the memory video of pictures including pictures of the user "Xiaomei" and the friend "Xiaoli" together shown in FIG. 8E. To be specific, pictures of the memory video all include the user "Xiaomei" and the friend "Xiaoli", and the picture P1 is a cover picture of the memory video. When the user subsequently browses the picture P1 again, this is shown in FIG. 9A.

With reference to the GUI in FIG. 9A, when the user browses the picture P1 again, the user wants to browse pictures of related characters in P1 together in the gallery of the user. Therefore, the user swipes up the picture P1, or the user performs a swipe-up operation on the picture P1. After detecting the swipe-up operation of the user on the picture P1, the mobile phone detects that the user has previously analyzed the picture P1 and that the memory video includes the picture P1, and displays the GUI shown in FIG. 9B.

With reference to the GUI in FIG. 9B, the GUI includes the picture P1, a character area 91, and a memory entry area 92. For example, the GUI may further include an address area 93.

Because the picture P1 has been analyzed, the GUI may directly display the character area 91. The character area 91 includes character pictures of characters obtained by analyzing the picture P1. In this way, visual reflection of the user can be improved.

In some embodiments, because the picture P1 is a cover picture of the memory video, in the memory entry area 92, a memory entry 921 becomes a control displaying the picture P1. If the user wants to continue to view characters in the existing memory video, the user may play the existing memory video by using the memory entry 921. For example, the user wants to continue to view pictures of the user "Xiaomei" and the friend "Xiaoli" together. The memory video of the user "Xiaomei" and the friend "Xiaoli" has been previously generated. Therefore, when the user taps the memory entry 921, the mobile phone detects the user operation, and may display the GUI shown in FIG. 9D. To be specific, the mobile phone displays the interface for playing the memory video.

For example, the memory entry area 92 may further include a memory entry 922 configured to update the memory. For example, the memory entry 922 may be a control displaying "update the memory". If the user wants to view pictures of another character different from the characters in the existing memory video, the user may regenerate the memory video including the another character by using the memory entry 922. For example, the user does not want to view the memory video of the user "Xiaomei" and the friend "Xiaoli", but wants to view pictures of the user "Xiaoli" and the friend "Xiaohong". The user may tap the memory entry 922. After detecting the user operation, the mobile phone may display the GUI shown in FIG. 9C.

With reference to the GUI in FIG. 9C, the user selects pictures of the user "Xiaomei" and the friend "Xiaohong" in a character area 94. The mobile phone detects an operation of selecting, by the user, characters, and filters, from the gallery through feature matching, a new picture collection that includes pictures of two characters selected by the user together and that meets a condition, and generates a new memory video based on the new picture collection. In the process, the GUI shown in FIG. 8D may be displayed. After the new memory video is generated, the GUI shown in FIG. 8E may be displayed. Each picture in the new picture collection and the new memory video includes at least "Xiaomei" and "Xiaohong".

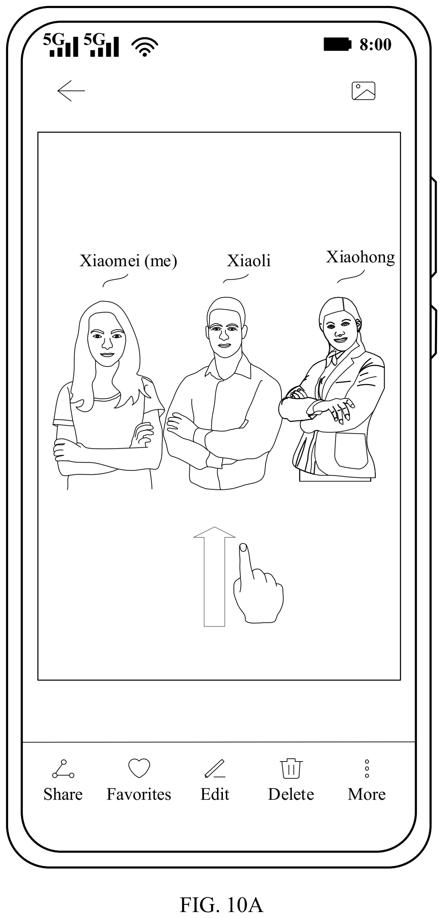

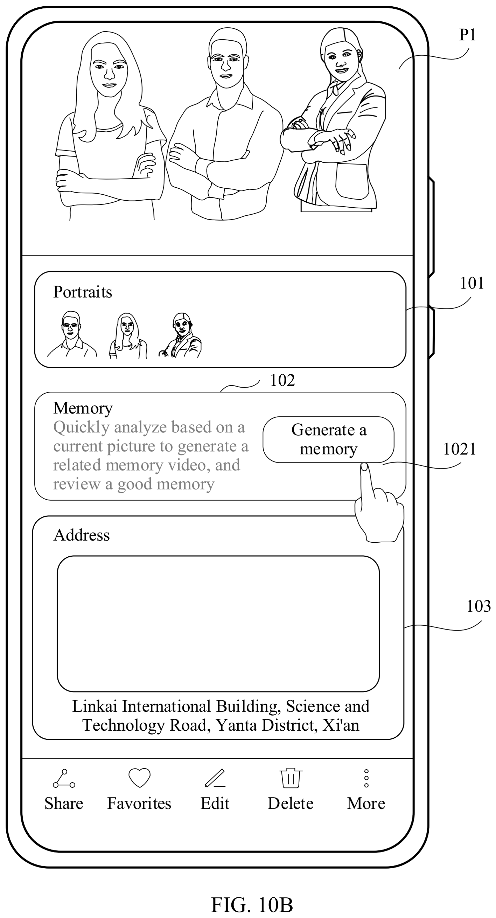

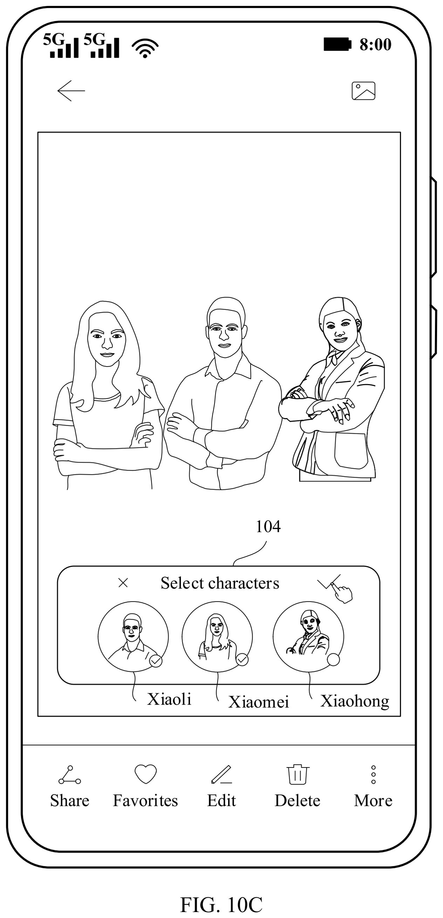

FIG. 10A, FIG. 10B, and FIG. 10C show another group of GUIs according to an embodiment of this application. Some GUIs in a process in which the user performs an operation on a picture to trigger the memory function when the picture has been analyzed but is not in the memory video are shown.

With reference to the GUI in FIG. 10A, the GUI in FIG. 10A is obtained based on the foregoing operations of FIG. 3A and FIG. 3B. The GUI displays an enlarged picture P1. The picture P1 includes three characters, which are respectively the user "Xiaomei", and friends "Xiaoli" and "Xiaohong" of the user. When browsing the picture P1, the user misses a time of being together with the friend "Xiaoli", and wants to browse related pictures of the user and "Xiaoli" together in the gallery. Therefore, the user swipes up the picture P1, or the user performs a swipe-up operation on the picture P1. After detecting the swipe-up operation of the user on the picture P1, the mobile phone displays the GUI shown in FIG. 10B.

For example, after detecting the swipe-up operation of the user on the picture P1, the mobile phone determines that the picture P1 has been analyzed, namely, determines that the picture P1 includes characters, and the picture P1 does not exist in any memory video. Therefore, the GUI shown in FIG. 10B is displayed.

With reference to the GUI in FIG. 10B, the GUI includes the picture P1, a character area 101, and a memory entry area 102. For example, the GUI may further include other information related to the picture P1. For example, the GUI includes an address area 73.

Because the picture P1 has been analyzed, the GUI may directly display the character area 101. The character area 101 includes character pictures of characters obtained by analyzing the picture P1. In this way, visual reflection of the user can be improved.

The memory entry area 102 includes a memory entry 1021. For example, the memory entry 1021 may be a control displaying "generate a memory". The user taps the memory entry 1021, for example, the control "generate a memory". After the mobile phone detects the user operation, the GUI shown in FIG. 10C may be displayed.

With reference to the GUI in FIG. 10C, the user selects pictures of the user "Xiaomei" and the friend "Xiaoli" in a character area 104. The mobile phone detects an operation of selecting, by the user, characters, and filters, from the gallery through feature matching, a picture collection that includes pictures of two characters selected by the user together and that meets a condition, and generates a memory video based on the picture collection. In the process, the GUI shown in FIG. 8D may be displayed. After the memory video is generated, the GUI shown in FIG. 8E may be displayed. Each picture in the picture collection and the memory video includes at least "Xiaomei" and "Xiaoli".

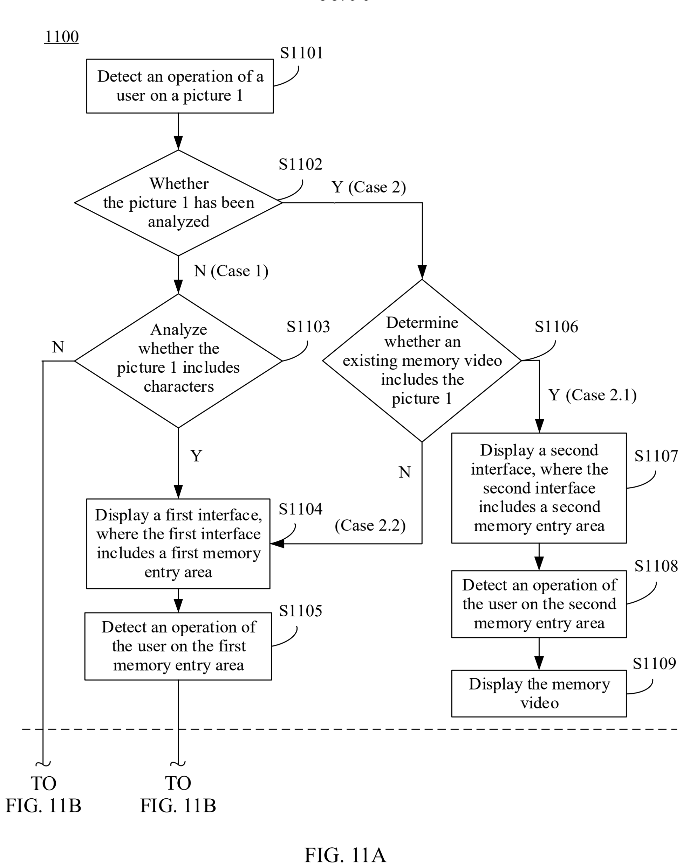

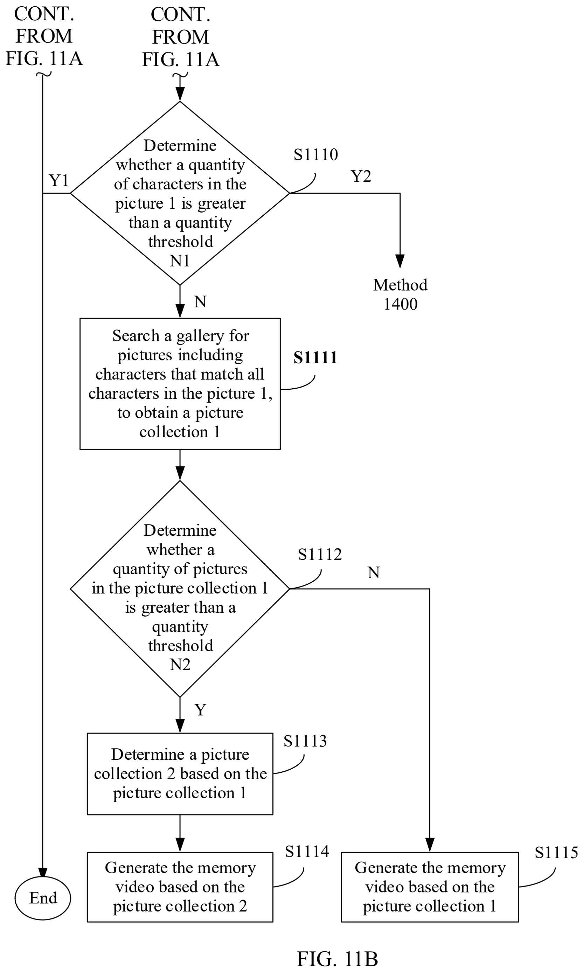

The following specifically describes, with reference to FIG. 11A and FIG. 11B to FIG. 14 by using an electronic device as an example based on the GUIs of FIG. 3A, FIG. 3B, FIG. 3C, FIG. 3D, FIG. 3E, and FIG. 3F to FIG. 10A, FIG. 10B, and FIG. 10C, an internal implementation process of a method for generating a memory video according to an embodiment of this application.

FIG. 11A and FIG. 11B are a schematic flowchart of a method 1100 for generating a memory video according to an embodiment of this application. The method mainly describes a process of performing full matching on all characters in a picture, searching for pictures including all the characters in the picture from a gallery, and generating a picture collection and a memory video. This may be described with reference to the GUIs in FIG. 3A, FIG. 3B, FIG. 3C, FIG. 3D, FIG. 3E, and FIG. 3F to FIG. 7A, FIG. 7B, FIG. 7C, and FIG. 7D.

In step S1101, the electronic device detects an operation of a user on a picture 1.

The picture 1 may be any existing picture in the electronic device, may be a previously stored picture, an instantly shot picture, or a picture obtained in another way, for example, a picture obtained through Bluetooth transmission with another electronic device or a picture downloaded from a social application.

The operation of the user on the picture 1 is any operation that can trigger a memory function. This is not limited in embodiments of this application. The electronic device continues to perform subsequent steps based on the operation, to generate the picture collection and the memory video, thereby implementing the memory function of the electronic device.

In an example, the operation of the user on the picture 1 may be a swiping operation of the user on the picture 1. The swiping operation may be a swiping operation in any direction. For example, the swiping operation may be a swipe-up operation shown in FIG. 3C. For another example, the swiping operation may alternatively be a swipe-down operation, a horizontal swiping operation, or the like.

In another example, the operation of the user on the picture 1 may alternatively be, for example, a long press operation, a double-tap operation, a single-tap operation, a two-finger press operation, and the like.

In an example, the picture 1 may be a picture displayed in a display interface of the gallery after the user performs an operation on the gallery application. For example, by using the GUIs in FIG. 3A and FIG. 3B, an enlarged picture P1 is displayed in FIG. 3C based on a tap operation of the user on the picture P1 (that is, the picture 1). The user performs a swipe-up operation on the picture P1, the user performs a swipe-up operation on the picture P1, and the electronic device detects the swipe-up operation of the user on the picture P1.

In another example, the picture 1 may alternatively be a picture displayed in a display interface of another picture application after the user performs an operation on the another picture application (for example, a picture application such as Mito Xiu Xiu^{®} and Beauty^{®}). This is not limited in embodiments of this application.

In step S1102, after detecting the operation of the user on the picture 1, the electronic device determines whether the picture 1 has been analyzed.

As described above, whether the picture has been analyzed in this embodiment of this application indicates whether the picture includes a character. If the picture 1 has been analyzed, it indicates that the picture 1 includes a character. Optionally, the electronic device performs step S1106. If the picture 1 has not been analyzed, the electronic device performs step S1103.

It may be understood that, by determining whether the picture 1 has been analyzed, for the analyzed picture 1, the electronic device may not need to repeatedly analyze the picture 1, to reduce a process of analyzing the picture, thereby reducing processing duration.

The following first specifically describes related steps (step S1103 to step S1115) performed by the electronic device when the picture 1 has not been analyzed (denoted as a case 1), and then specifically describes related steps performed by the electronic device when the picture 1 has been analyzed (denoted as a case 2).

Case 1: The picture 1 has not been analyzed

In step S1103, when the picture 1 has not been analyzed, the electronic device analyzes the picture 1, to analyze whether the picture 1 includes a character.

When determining that the picture 1 includes a character, the electronic device performs step S1104. When determining that the picture 1 has no character, the electronic device ends the procedure.

In step S1104, the electronic device displays a first interface, where the first interface includes a first memory entry area.

In the case 1, when determining that the picture 1 includes a character, the electronic device displays the first interface.

It should be understood that, the first memory entry area can provide the user with an interface for a memory generation function. The user performs an operation on the first memory entry area, so that a picture collection and a memory video can be generated.

For example, with reference to the GUI in FIG. 3D, the first interface may be the GUI. The GUI includes the memory entry area 33 (corresponding to the first memory entry area). The memory entry area 33 includes the memory entry 331. The memory entry 331 may be a control displaying texts "generate a memory", and the user taps the memory entry 331.

For example, the first interface may further include the picture 1. For example, the first interface may further include other information related to the picture P1. For example, the first interface includes an address area, where the address area is configured to generate an address where the picture 1 is generated. For example, the picture P1 and the address area 34 are shown in FIG. 3D.

In step S1105, the electronic device detects the operation of the user on the first memory entry area.

For example, with reference to the GUI in FIG. 3D, the user taps the memory entry 331 of the memory entry area 33 (corresponding to the first memory entry area), and the electronic device detects a tap operation of the user on the memory entry 331.

In step S1110, the electronic device determines whether a quantity of characters in the picture 1 is greater than a quantity threshold N1, where N1 is an integer greater than 1.

In consideration of a processing capability of the current electronic device, if a quantity of characters that need to be matched is excessive, the electronic device may not perform feature matching on the excessive quantity of characters. Therefore, a quantity threshold N1 may be set based on the processing capability of the electronic device.

When determining that the quantity of characters in the picture 1 is less than or equal to the quantity threshold N1, the electronic device performs step S1111.

When it is determined that the quantity of characters in the picture 1 is greater than the quantity threshold N1, there are two processing manners. In one processing manner, the electronic device ends the procedure (as shown by the arrow of Y1). In the other processing manner, the electronic device performs steps of the following method 1400 (as shown by the arrow of Y2). Details are not described herein.

The quantity threshold N1 is determined based on capabilities of electronic devices with different models. For example, the quantity threshold N1 may be 3, or may be any value greater than 3. For example, the quantity threshold N1 may be 10.

It should be understood that, if a capability of the electronic device is sufficiently good, the step may be omitted. After performing step S1105, the electronic device performs step S1111, and does not need to perform step S1110.

In step S1111, the electronic device searches the gallery for pictures including characters that match all the characters in the picture 1, to obtain a picture collection 1.

The picture collection 1 includes at least one picture. The at least one picture includes the picture 1. Each picture includes characters matching all the characters of the picture 1. It may be understood that, when a picture includes characters matching all the characters of the picture 1, it means that the picture includes all the characters of the picture 1.

It should be noted that, when the picture collection 1 includes a plurality of pictures, and pictures other than the picture 1 in the picture collection 1 include a picture in which a quantity of characters is greater than the quantity of the characters in the picture 1, these pictures not only include characters matching all the characters of the picture 1, but also include another character.

It should be understood that, "each picture includes characters matching all the characters of the picture 1" described herein indicates that each picture includes a character matching each character in all the characters of the picture 1. Matching herein indicates a high similarity between two characters. When the similarity between two characters is high, it means that the two characters are a same character.

In some embodiments, the electronic device searches the gallery for pictures including characters that match all the characters in the picture 1, and determines all pictures that include the characters matching all the characters of the picture 1 and that are in the gallery as the picture collection 1.

In some other embodiments, the electronic device searches the gallery for the pictures including the characters that match all the characters in the picture 1, and determines all the pictures that include the characters matching all the characters of the picture 1 and that are in the gallery as an initial picture collection.

The electronic device processes the pictures in the initial picture collection, to obtain the picture collection 1. The picture collection 1 includes at least some pictures in the initial picture collection.

For example, processing by the electronic device on the pictures in the initial picture collection may include deduplication processing, deblurring processing, aesthetic score determining processing, and the like on the pictures.

Deduplication processing on the pictures indicates that, when at least two pictures with a high repetition degree exist, the electronic device reserves one picture, and deletes the remaining pictures from the initial picture collection. The reserved picture may be a picture with a highest aesthetic score in the at least two pictures with the high repetition degree. For any two pictures with a high repetition degree, for example, the high repetition degree of the two pictures may be at least one of the following cases: Characters of the two pictures are the same, a character limb action such as an expression and/or a posture of a same character is similar, characters of the two pictures are the same and backgrounds are similar, and characters of the two pictures are the same and picture generation time is short (a time threshold may be used for determining in an implementation). It should be understood that a case in which any two pictures have a high repetition degree in the foregoing example is merely an example for description.

Deblurring processing on a pictures indicates that if a blur degree of the picture is high, deblurring processing may be performed on the picture to obtain a picture with a low blur degree, and a resolution of the picture after the deblurring processing is higher than that of the picture before the deblurring processing.

Aesthetic score determining processing on a picture indicates that the picture is analyzed to obtain an aesthetic score of the picture. If the aesthetic score of the picture meets a condition, the picture is reserved, that is, the picture is a picture in the picture collection 1. If the aesthetic score of the picture does not meet the condition, the picture is deleted from the initial picture collection. In an implementation, an aesthetic score threshold (denoted as an aesthetic score threshold 1) may be set. If the aesthetic score of the picture is greater than or equal to the aesthetic score threshold 1, the picture is reserved; or if the aesthetic score of the picture is less than the aesthetic score threshold 1, the picture is deleted.

It should be understood that, processing on the pictures in the initial picture collection in the foregoing examples is merely an example for description, and the processing may be any processing on the pictures. This is not limited in embodiments of this application.

For step S1111, the electronic device searches, in a feature extraction manner, the gallery for the pictures including the characters that match all the characters in the picture 1, to obtain the picture collection 1.

In some embodiments, the electronic device performs feature extraction on all the characters in the picture 1, to obtain a feature result of the picture 1. The electronic device searches, based on the feature result of the picture 1, for pictures including the characters matching all the characters in the picture 1 from the gallery, to obtain the picture collection 1.

The feature result of the picture 1 represents all the characters in the picture 1, and includes feature information of a plurality of characters. The feature information of each character includes a plurality of feature points representing the character.

For the step in which the electronic device searches, based on the feature result of the picture 1, the gallery for pictures including the characters matching all the characters in the picture 1, to obtain the picture collection 1, in an example, the feature result of the picture 1 may be matched with character data sets of a plurality of characters recorded in a database, to obtain the picture collection 1. Each character data set records related information of the character. The related information may be, for example, feature information of the character, information about mapping between the character and a plurality of pictures including the character, and the like. In an implementation, the electronic device matches feature information of all the characters in the picture 1 with the character data sets of the plurality of characters in the database, to find character data sets of some characters that match all the characters of the picture 1, and finds, based on the information that is of mapping between each character and a plurality of pictures and that is in the character data set of the each character in the some characters, to find pictures that include all the characters in the picture 1 and that are in the gallery.

For the step in which the electronic device searches, based on the feature result of the picture 1, the gallery for pictures including the characters matching all the characters in the picture 1, to obtain the picture collection 1, in another example, the electronic device determines character-type pictures from the gallery, and performs feature extraction on all characters in each character-type picture, to obtain a feature result of each character-type picture, where the feature result of each character-type picture includes character feature information of each character in the character-type picture, and compares a feature result of each character-type picture with the feature result of the picture 1, to obtain, based on a matching result, pictures including the characters that match all the characters in the picture 1, that is, the obtained pictures include all the characters of the picture 1.

For example, when performing feature extraction on the characters in the picture, the electronic device may extract facial features of the characters from the picture, to obtain the feature result. In a process in which the electronic device performs feature extraction on all the characters in the picture 1, the electronic device performs feature extraction on a face of each character in the picture 1, to obtain feature information of each character, where the feature information of each character includes a plurality of feature points of the face of each character, so as to obtain the feature result of the picture 1. Similarly, in a process in which the electronic device performs feature extraction on the character-type pictures in the gallery, the electronic device performs feature extraction on the face of each character in each character-type picture, to obtain feature information of each character, where the feature information of each character includes a plurality of feature points of the face of each character, so as to obtain a feature result of each character-type picture.

In this embodiment of this application, a manner of performing feature extraction on a character is not limited, provided that feature matching can be performed by using extracted feature points of the character. For example, the feature extraction manner may be scale-invariant feature transform (scale-invariant feature transform, SIFT), speeded Up Robust Features (speeded Up Robust Features, SURF), Oriented Features from accelerated segment test (Oriented Features from accelerated segment test, Oriented FAST), Rotated Binary Robust Independent Elementary Features (Rotated Binary Robust Independent Elementary Features, Rotated BRIEF) (Oriented FAST and Rotated BRIEF, ORB), or the like.

In step S1112, the electronic device determines whether a quantity of pictures in the picture collection 1 is greater than a quantity threshold N2, where N2 is an integer greater than 1.

In consideration of playback experience of the user for the memory video, if a quantity of pictures in the memory video is excessive, a problem such as high consumption of the user's time or aesthetic fatigue may occur, and experience of appreciating the memory video by the user is not good. Therefore, a quantity threshold N2 may be set, to enable a quantity of pictures in the generated memory video to be suitable to the greatest extent, thereby enabling the user to better experience a wonderful process of playing the video.

The quantity threshold N2 may be any possible value. For example, the quantity threshold N2 may be 20, 30, 40, 50, or 60.

When determining that the quantity of pictures in the picture collection 1 is greater than the quantity threshold N2, the electronic device performs step S1113. When the quantity of pictures in the picture collection 1 is less than or equal to the quantity threshold N2, the electronic device performs step S1115.

In step S1113, when the quantity of the pictures in the picture collection 1 is greater than the quantity threshold N2, the electronic device determines a picture collection 2 based on the picture collection 1.

It should be understood that, the quantity of pictures in the picture collection 2 is less than or equal to the quantity of the pictures in the picture collection 1.

In some embodiments, the electronic device may filter pictures from the picture collection 1 based on a timeline of generation time of all the pictures in the picture collection 1, to obtain the picture collection 2.

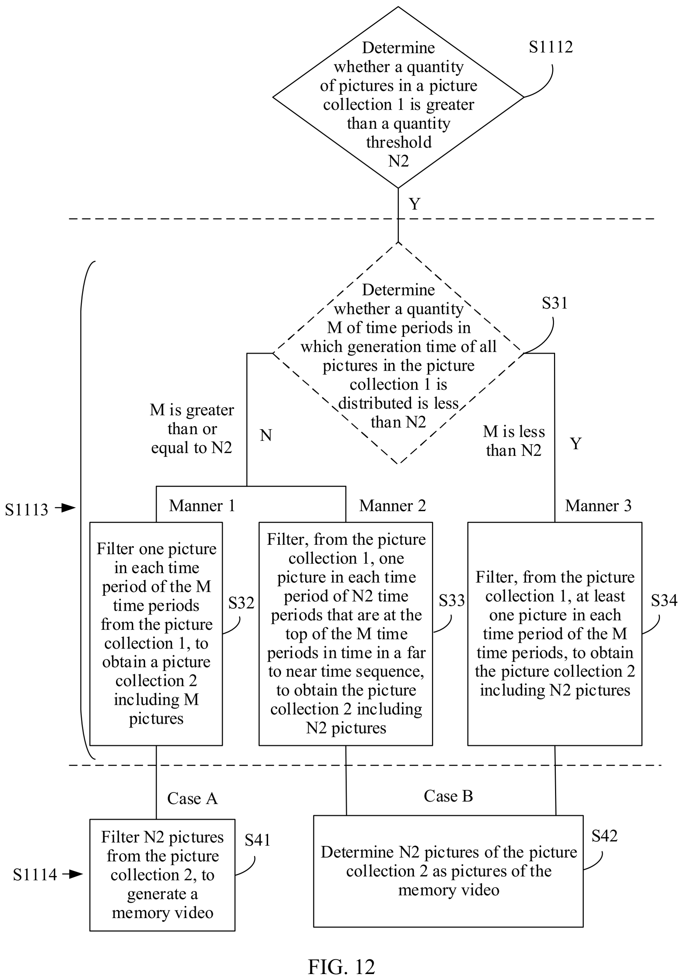

FIG. 12 is a schematic flowchart of a process in which an electronic device determines a picture collection 2 based on a picture collection 1 and a process in which the electronic device determines a memory video based on the picture collection 2 according to an embodiment of this application.

With reference to FIG. 12, for example, in step S31, the electronic device determines whether a quantity M of time periods in which generation time of all the pictures in the picture collection 1 is distributed is less than N2.

When the quantity M of the time periods in which the generation time of all the pictures is distributed is not less than (that is, greater than or equal to) N2, the electronic device may determine the picture collection 2 in a manner 1 and a manner 2.

When the quantity M of the time periods in which the generation time of all the pictures is distributed is less than N2, the electronic device may obtain the picture collection 2 in a manner 3.

The following separately describes the processes of obtaining the picture collection 2 in the foregoing three manners.

### Manner 1 (M is greater than or equal to N2)

In step S32, when the quantity M of the time periods in which the generation time of all the pictures in the picture collection 1 is distributed is greater than or equal to N2, the electronic device filters one picture in each time period of the M time periods from the picture collection 1, to obtain the picture collection 2, where the picture collection 2 includes M pictures.

It should be understood that, the picture collection 2 includes a picture in each time period in the M time periods. Therefore, the picture collection 2 includes M pictures, the M pictures are in a one-to-one correspondence with the M time periods, and generation time of one picture is distributed in one time period.

In an implementation, the electronic device determines, based on the generation time of all the pictures, that the generation time of all the pictures is distributed in the M time periods, and compares M with N2. If M is greater than or equal to N2, the electronic device filters one picture in each period of the M time periods from the picture collection 1, to obtain a second picture collection.

Herein, duration of one time period may be any duration. For example, duration of one time period may be one day, one week, a half month, one month, or more months.

The M time periods in which the generation time of all the pictures is distributed indicate that the generation time of all the pictures is distributed in the M time periods, and each time period of the M time periods corresponds to at least one picture, or in other words, at least one picture is generated in each time period in the M time periods. For example, using an example in which M is 10 and duration of a time period is one month, it is assumed that the picture collection 1 includes 12 pictures, and generation time of the 12 pictures is respectively: January, January, February, April, April, May, June, August, September, October, November, and December, where January and April both correspond to two pictures. Therefore, the generation time of the 12 pictures is distributed in 10 months, where eight months each correspond to one picture, and the remaining two months (January and April)) each correspond to two pictures.

If each time period of some time periods in the M time periods corresponds to a plurality of pictures, the electronic device may filter any one picture from each time period in the some time periods, or may filter a picture with a highest aesthetic score in each time period of the some time periods. This is not limited in embodiments of this application.

Considering that a time area in which the generation time of all the pictures in the picture collection 1 is relatively long, during picture filtering, one picture is selected as far as possible in each time period. This helps the user recall events with a relatively even time interval by using related pictures of all the characters in the picture 1, and a memory lapse of the user can be reduced to some extent. Generally, user experience is considered in terms of both a quantity of memory pictures and a memory time interval, and different factors are balanced, so that user experience is better met.

### Manner 2 (M is greater than or equal to N2)

In step S33, when the quantity M of the time periods in which the generation time of all the pictures in the picture collection 1 is distributed is greater than or equal to N2, the electronic device filters, from the picture collection 1, one picture in each time period of N2 time periods that are at the top of the M time periods in time in a far to near time sequence, to obtain the picture collection 2, where the picture collection 2 includes N2 pictures.

In this embodiment, because the picture collection 2 includes a picture in each time period of the N2 time periods that are at the top of the M time periods in time, the quantity of the pictures in the picture collection 2 is N2, that is, the picture collection 2 includes N2 pictures.

Herein, the N2 time periods that are at the top of the M time periods in time may be understood as first N2 time periods in sorted M time periods obtained after the M time periods are sorted in the far to near time sequence, where time of the N2 time periods is earlier than that of M-N2 time periods. For example, M is 10, N2 is 8, and the M time periods are 10 months, which are respectively: January, February, April, May, June, August, September, October, November, and December. The eight time periods at the top of the 10 months in time are January, February, April, May, June, August, September, and October.

In an implementation, the electronic device determines, based on the generation time of all the pictures, that the generation time of all the pictures in the picture collection 1 is distributed in the M time periods, sorts the M time periods in the far to near time sequence, and filters one picture in each time period of the first N2 time periods in the sorted M time periods, to obtain the picture collection 2. It should be understood that, when M is equal to N2, the first N2 time periods of the M time periods are the M time periods.

If each time period of some time periods in the first N2 time periods corresponds to a plurality of pictures, the electronic device may filter any one picture from each time period in the some time periods, or may filter a picture with a highest aesthetic score in each time period of the some time periods. This is not limited in embodiments of this application.

It may be understood that, based on an actual situation, if the quantity of the pictures in the picture collection 2 needs to be controlled to be less than or equal to N2, when the quantity M of the time periods in which the generation time of all the pictures in the picture collection 1 is distributed is greater than or equal to N2, because the user has a relatively blur memory for events with relatively far time, by filtering one picture from each time period in the first N2 time periods with relatively far time can enable the user to better recall events with relatively far time by using the pictures, to improve user experience.

### Manner 3 (M is less than N2)

In step S34, when the quantity M of the time periods in which the generation time of all the pictures in the picture collection 1 is distributed is less than N2, the electronic device filters, from the picture collection 1, at least one picture in each time period of the M time periods, to obtain the picture collection 2, where the picture collection 2 includes N2 pictures.

In this embodiment, because M is less than N2, each time period in some time periods in the M time periods (denoted as a first part of time periods) may correspond to one picture, and each time period of the other part of time periods (denoted as a second part of time periods) may correspond to a plurality of pictures. In other words, the electronic device filters a picture in each time period of the first part of time periods, and filters a plurality of pictures in each time period of the second part of time periods, to finally obtain the N2 pictures.

For example, when filtering the pictures in the picture collection 1, the electronic device may filter, in each time period in descending order of aesthetic scores, at least one picture with a relatively high aesthetic score, or may filter any at least one picture in each time period. This is not limited in embodiments of this application.

In some embodiments, time of the second part of time periods is earlier than time of the first part of time periods.

In other words, when filtering the pictures in the picture collection 1, the electronic device filters more pictures in time periods with farther time. Because the user has a relatively blur memory for events with relatively far time, by filtering a plurality of pictures from each time period in the second part of time periods with relatively far time can enable the user to better recall events with relatively far time by using the pictures, to improve user experience.

For example, M is 10, N2 is 12, and the M time periods are 10 months, which are respectively: January, February, April, May, June, August, September, October, November, and December. The second part of time periods may be January and February. The electronic device filters two pictures from each of the two months. The first part of time periods may be April, May, June, August, September, October, November, and December. The electronic device filters one picture from each of the eight months. 12 pictures are obtained finally.

In an implementation, the electronic device may filter one picture from each time period in the M time periods, to obtain M pictures, and then filter one picture from each time period of N2-M time periods that are at the top of the M time periods in time in the far to near time sequence, to obtain N2-M pictures. The picture collection 2 including N2 pictures is obtained by adding the M pictures and the N2-M pictures.

In another embodiment, without considering the quantity M of the time periods in which the generation time of all the pictures is distributed, the electronic device may analyze all the pictures, to obtain aesthetic scores of all the pictures, and filter pictures with highest N2 aesthetic scores from all the pictures in descending order of the aesthetic scores, to obtain the picture collection 2 including N2 pictures.

In step S1114, the electronic device generates the memory video based on the picture collection 2.

In some embodiments, the electronic device may use all the pictures in the picture collection 2 as pictures of the memory video. In other words, the memory video includes all the pictures of the picture collection 2.

In some other embodiments, as described above, to enable, to the greatest extent, the user to experience a wonderful process of playing the video, the quantity of the pictures in the memory video should not be excessive. Therefore, based on the preset quantity threshold N2, the quantity of the pictures in the finally obtained memory video is enabled, to the greatest extent, not to exceed N2. Therefore, based on the quantity of the pictures in the picture collection 2, a process in which the electronic device generates the memory video may be classified into the following two cases for description.

Case A: The quantity of the pictures in the picture collection 2 is greater than N2.

The case A corresponds to a case of generating the picture collection 2 based on the manner 1 in step S1113. The generation time of all the pictures in the picture collection 2 is distributed in the M time periods. Each time period corresponds to one picture. The quantity of the pictures in the picture collection 2 is M, where M is greater than N2.

With reference to FIG. 12, for the case A, in step S41, the electronic device filters N2 pictures from the picture collection 2, to generate the memory video. For example, the electronic device filters the N2 pictures from the picture collection 2, and determines the N2 pictures as pictures of the memory video, where the memory video includes the N2 pictures.

In an example, when the quantity of the pictures in the picture collection 2 is greater than N2, the electronic device filters pictures with highest N2 aesthetic scores from the picture collection 2 in descending order of aesthetic scores, and determines the obtained N2 pictures as the pictures of the memory video.

For example, the quantity of the pictures in the picture collection 2 is 60, N2 is 50, pictures with highest 50 aesthetic scores are selected from 60 pictures, and the 50 pictures are used as the pictures of the memory video.

In another example, when the quantity of the pictures in the picture collection 2 is greater than N2, in the M time periods in which the generation time of all the pictures in the picture collection 2 is distributed, the electronic device determines, in the far to near time sequence, N2 pictures corresponding to N2 time periods that are at the top of the M time periods in time as the pictures of the memory video.

For example, the quantity M of the pictures in the picture collection 2 is 60, N2 is 50, the M time periods are 60 months, and 50 pictures corresponding to 50 months that are at the top of the 60 months in time are determined as the pictures of the memory video.

Case B: The quantity of the pictures in the picture collection 2 is equal to N2

The case B corresponds to a case of generating the picture collection 2 based on the manner 2 or the manner 3 in step S1113. The picture collection 2 includes N2 pictures. To be specific, the quantity of pictures in the picture collection 2 is equal to N2.

With reference to FIG. 12, for the case B, for example, in step S42, the electronic device may determine all the pictures of the picture collection 2 as pictures of the memory video, and the finally obtained memory video includes N2 pictures.

In step S1115, when the quantity of the pictures in the picture collection 1 is less than or equal to the quantity threshold N2, the electronic device generates the memory video based on the picture collection 1.

Because the quantity of the pictures in the picture collection 1 is less than or equal to the quantity threshold N2, all the pictures in the picture collection 1 may be determined as the pictures of the memory video, to generate the memory video, so that wonderful experience of appreciating the video by the user can be met.

The foregoing specifically describes, by using the step S1103 and the step S1115, a process in which the electronic device generates the memory video when the picture 1 is not analyzed (the case 1). The following specifically describes related steps performed by the electronic device when the picture 1 has been analyzed (the case 2).

Case 2: The picture 1 has been analyzed

For the case 2 in which the picture 1 has been analyzed, the electronic device may analyze the picture 1 in advance in the following manner, so that the electronic device does not need to analyze the picture 1 after detecting an operation 1 of the user on the picture 1.

In an example, before detecting the operation of the user on the picture 1, when the electronic device is in the charging mode, the electronic device may actively analyze all the pictures in the electronic device, to classify the pictures. It is analyzed in the picture analysis process that the picture 1 includes characters.

In another example, before the operation of the user on the picture 1 is detected, the user performs an operation on another picture, to actively trigger the memory function. The electronic device analyzes the pictures in the electronic device and extracts features, and the like, to select pictures matching characters in the another picture, to generate a picture collection and a memory video. In the foregoing picture analysis process, analysis of the picture 1 is completed. However, although the picture 1 has been analyzed, the picture 1 is not added to the memory video, or in other words, the existing memory video does not include the picture 1.

In another example, before the operation of the user on the picture 1 is detected, the user has triggered the memory function by using the picture 1 or another picture, to generate a picture collection and a memory video. The memory video that has been generated includes the picture 1. For a manner in which the user triggers the memory function by using another picture, it may be understood that, the another picture has same characters as the picture 1, and the another picture is a picture that meets a matching requirement and that is selected by the electronic device by performing feature matching on the picture 1 and other pictures of the gallery.

In an implementation, for the first two manners of analyzing the picture 1, because the existing memory video does not include the picture 1, the electronic device may perform step S1104 after performing determining in step S1106. For the last manner of analyzing the picture 1, because the existing memory video includes the picture 1, the electronic device may perform step S1107 after performing determining in step S1106.

In step S1106, when the picture 1 has been analyzed, the electronic device determines whether the existing memory video includes the picture 1.

That the user performs the operation on the currently browsed picture 1 not only means that the user wants to view other pictures related to the characters of the picture 1, but also means that the user wants to see the picture 1 in a wonderful memory video that is played. Therefore, when the existing memory video includes the picture 1 (denoted as a case 2.1), the electronic device may not need to generate the memory video again, performs step S1107 to step S1109, and plays the existing memory video through simple human-machine interaction.

When the existing memory video does not include the picture 1 (denoted as a case 2.2), the electronic device performs step S1104 and subsequent steps.

It should be understood that, the existing memory video may be generated through the foregoing example embodiment.

### Case 2.1

In step S1107, the electronic device displays a second interface when the existing memory video includes the picture 1, where the second interface includes a second memory entry area.

It should be understood that, the second memory entry area can provide the user with an interface for a memory trigger function. The user performs an operation on the second memory entry area, so that the electronic device can display and play the existing memory video.

For example, with reference to the GUI in FIG. 6B, the second interface may be the GUI. The second interface includes the memory entry area 62 (that is, the second memory entry area). The memory entry area 62 includes the memory entry 621. The memory entry 621 may be a control displaying the cover picture of the memory video. The user taps the memory entry 621. As described above, when the memory entry 621 displays the cover picture, it means that the picture that the user currently operates has existed in the existing memory video.

For example, the second interface may further include the picture 1. For example, the second interface may further include other information related to the picture P1. For example, the second interface includes an address area, where the address area is configured to generate an address where the picture 1 is generated. For example, the picture P1 and the address area 63 are shown in FIG. 6B.

In step S1108, the electronic device detects the operation of the user on the second memory entry area.

For example, with reference to the GUI in FIG. 6B, the user taps the memory entry 621 of the memory entry area 62, and the electronic device detects a tap operation of the user on the memory entry 621.

In step S1109, the electronic device displays the memory video.

In other words, after detecting the operation of the user on the second memory entry area, the electronic device directly displays the existing memory video to the user, and can automatically play each picture in the memory video. For example, with reference to the GUI shown in FIG. 6C, after the user taps the memory entry 621 of the memory entry area 62, the electronic device displays the existing memory video, and automatically plays each picture in the memory video.

### Case 2.2

In step S1104, when the existing memory video does not include the picture 1, the electronic device displays the first interface, where the first interface includes the first memory entry area.

In some embodiments, the first interface displayed by the electronic device in the case 2.2 may be the same as the first interface displayed in the case 1. For specific descriptions, refer to the specific descriptions of step S1104 in the foregoing case 1, and details are not described again.

In some other embodiments, because the picture P1 has been analyzed, the first interface displayed by the electronic device in the case 2.2 may alternatively be different from the first interface displayed in the case 1. For example, with reference to the GUI in FIG. 7B, the first interface may be the GUI. The GUI not only includes the memory entry area 72 (corresponding to the first memory entry area), but also includes the character area 71. The character area 71 includes character pictures of characters obtained by analyzing the picture P1. In this way, visual reflection of the user can be improved.

Subsequently, the electronic device performs step S1105 and subsequent steps. For specific descriptions, refer to related descriptions of same steps in the case 1. Details are not described herein again.

The foregoing specifically describes the method 1100. It should be understood that, the foregoing example steps are merely examples for description, and should not constitute a limitation on embodiments of this application. The implementation process may include more or fewer steps.

For example, step S1102 is used as an optional step. After performing step S1101, the electronic device does not need to determine whether the picture 1 has been analyzed. Regardless of whether the picture 1 has been analyzed, the electronic device directly performs step S1103, and analyzes the picture 1. It should be understood that, when the electronic device does not perform step S1102, naturally, the electronic device does not perform step S1106 to step S1109.

For another example, the electronic device performs step S1102. However, step S1106 may be used as an optional step. The electronic device may not need to perform step S1106. Naturally, the electronic device does not need to perform S1107 to step S1109.

For another example, step S1110 is used as an optional step. For an electronic device with a good processing capability, the electronic device directly performs step S1111 after performing step S1105.

For another example, step S1112 is used an optional step. After performing step S1111, the electronic device may not need to consider whether the quantity of the pictures in the picture collection 1 is excessive. The electronic device directly uses all the pictures of the picture collection 1 as the pictures of the memory video. Such as processing process is simple, to reduce processing duration. It should be understood that, when the electronic device does not perform step S1112, naturally, the electronic device does not need to perform step S1113 and step S1114.

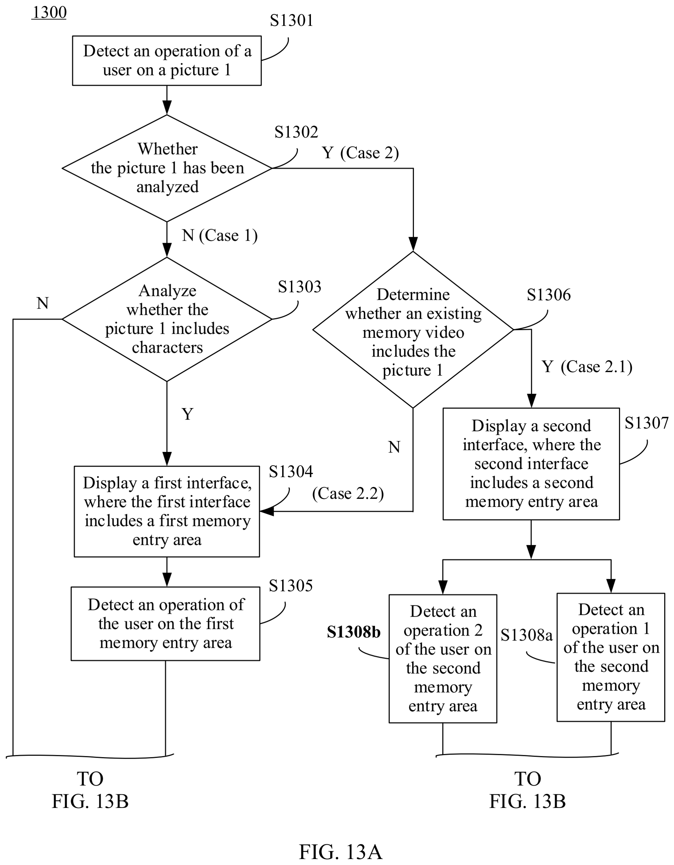

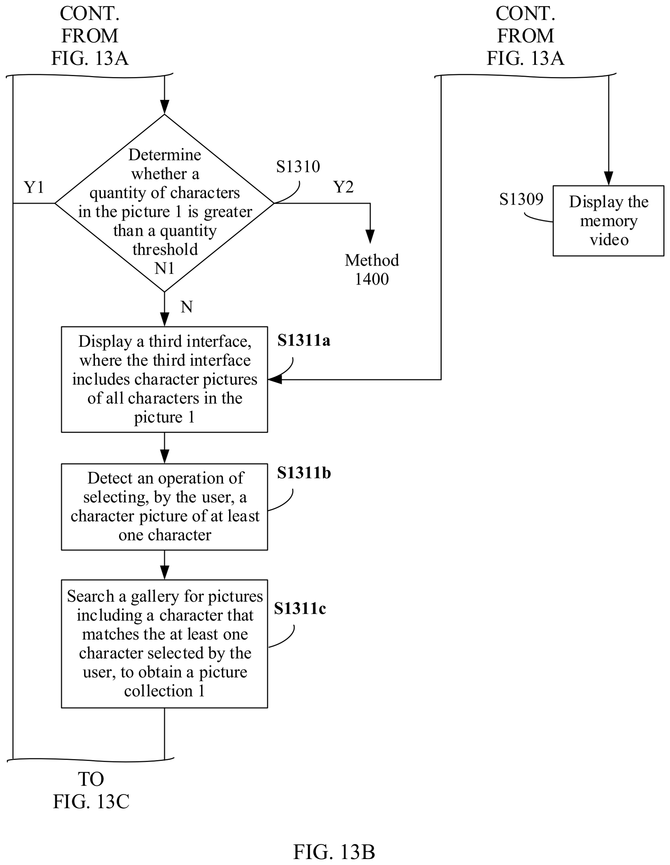

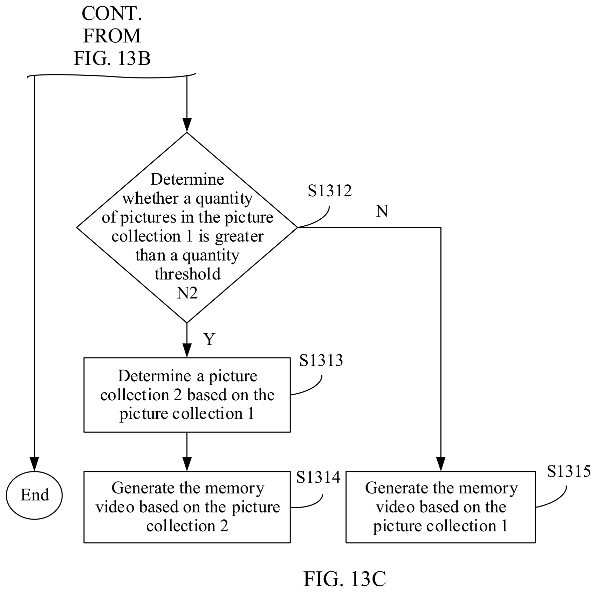

FIG. 13A, FIG. 13B, and FIG. 13C are a schematic flowchart of a method 1300 for generating a memory video according to an embodiment of this application. A process in which a user may select any character in a picture, an electronic device performs matching on the any character selected by the user, and searches a gallery for pictures including the any character, to generate a picture collection and a memory video is mainly described, and the process may be described with reference to the GUIs of FIG. 8A, FIG. 8B, FIG. 8C, FIG. 8D, and FIG. 8E to FIG. 10A, FIG. 10B, and FIG. 10C.

In terms of implementation steps, the method 1300 is mainly different from the method 1100 in two points. First, processes of obtaining the picture collection 1 based on the user operation are different. In the method 1300, the electronic device obtains the picture collection 1 by using step S1311a to step S1311c. In the method 1100, the electronic device obtains the picture collection 1 by using step S1111. Second, in the case 2.1 in which the picture 1 has been analyzed, when it is determined that the existing memory video includes the picture 1, the electronic device may perform different steps based on different operations of the user on the second memory entry area, to display or generate the memory video again. In the method 1300, the electronic device may not only perform step S1308a and step S1308b based on an operation 1 of the user, to display the existing memory video, but also perform step S1308b based on an operation 2 of the user, to generate a new memory video.

In step S1301, the electronic device detects an operation of a user on a picture 1.

In step S1302, after detecting the operation of the user on the picture 1, the electronic device determines whether the picture 1 has been analyzed.

If the picture 1 has been analyzed, it indicates that the picture 1 includes a character. Optionally, the electronic device performs step S1306. If the picture 1 has not been analyzed, the electronic device performs step S1303.

For specific descriptions of step S1301 and step S1302, refer to related descriptions about step S1101 and step S1102 in the method 1100. Details are not described again.

The following first specifically describes related steps (step S1303 to step S1315) performed by the electronic device in the case 1 in which the picture 1 has not been analyzed, and then specifically describes related steps performed by the electronic device in the case 2 in which the picture 1 has been analyzed.

Case 1: The picture 1 has not been analyzed

For specific descriptions of step S1303 to step S1310, refer to related descriptions about step S1103 to step S1110 in the method 1100. Details are not described again. The following mainly describes step S1311a to step S1311c.

In step S1311a, when a quantity of characters in the picture 1 is less than or equal to a quantity threshold N1, the electronic device displays a third interface, where the third interface includes character pictures of all the characters in the picture 1.

In this step, the electronic device recognizes all the characters in the picture 1, and displays the third interface. The third interface includes character pictures of all the recognized characters in the picture 1. The user may select character pictures of characters that the user is interested in from the character pictures of all the characters based on the preference of the user, so that the electronic device searches the gallery for pictures matching the character selected by the user.

For example, with reference to the GUI in FIG. 8C, the GUI may be the third interface. The GUI includes the character area 83. The character area 83 includes character pictures of all the characters (for example, Xiaoli, Xiaomei, and Xiaohong) recognized by the electronic device from the picture P1 (that is, the picture 1), and the user selects, based on the preference of the user, the character pictures of the characters that the user is interested in from the character pictures of all the characters. For example, the user selects pictures of "Xiaoli" and "Xiaomei". After character pictures of the characters that the user is interested in are selected, a confirmation control such as "√" is tapped.

In step S1311b, the electronic device detects an operation of selecting, by the user, a character picture of at least one character.

The user selects a character picture of at least one character that the user is interested in from the character pictures of all the characters based on the preference of the user. In response to the user operation, the electronic device detects the operation of selecting, by the user, the character picture of the at least one character.

For example, with reference to FIG. 8C, the user selects character pictures of "Xiaoli" and "Xiaomei", and taps the confirmation control such as "√". The mobile phone detects the operation of selecting, by the user, the character pictures of "Xiaoli" and "Xiaomei" and the operation of tapping, by the user, the confirmation control.

In step S1311c, the electronic device searches the gallery for pictures including a character that matches the at least one character selected by the user, to obtain the picture collection 1.

The only difference between this step and step S1111 lies in that, pictures including characters that match all the characters in the picture 1 are searched for in step S1111, but in step S1311c, the electronic device searches for pictures including the character matching the at least one character in the picture 1, and during feature extraction on the picture 1, feature extraction may be performed only on the at least one character selected by the user, to obtain the feature result of the picture 1, where the feature result includes feature information of the at least one character.

Therefore, for specific descriptions of step S1311c, refer to related descriptions about step S1111 in the method 1100, and details are not described again, provided that all characters in the step S1111 are replaced with at least one character herein.

After performing step S1311c, the electronic device performs step S1312, and performs step S1313 and step S1314, or performs step S1315 based on the quantity of the pictures in the picture collection 1. For specific descriptions of step S1312 to step S1315, refer to related descriptions about step S1112 to step S1115 in the method 1100. Details are not described again.

Case 2: The picture 1 has been analyzed

In step S1306, when the picture 1 has been analyzed, the electronic device determines whether the existing memory video includes the picture 1.

In the case 2.1 in which the existing memory video includes the picture 1, the electronic device performs step S1307. In the case 2.2 in which the existing memory video does not include the picture 1, the electronic device performs step S1304 and subsequent steps.

### Case 2.1

In step S1307, the electronic device displays a second interface when the existing memory video includes the picture 1, where the second interface includes the second memory entry area.

In this step, the second memory entry area can provide the user with an interface for a memory trigger function. The user may perform different operations on the second memory entry area, to display the existing memory video or generate the new memory video.

In some embodiments, the second memory entry area includes a first memory entry and a second memory entry. The first memory entry is configured to display the existing memory video, and the second memory entry is configured to generate the new memory video.

It may be understood that, in the method 1300, a picture collection and a memory video of any character selected by the user are generated based on the any character, and even if the existing memory video includes the picture 1, for the same picture (the picture 1), the user may select different characters at different time. Therefore, the second memory entry in the second memory entry area provides more flexible selection space for the user, so that user experience is good.

For example, with reference to the GUI in FIG. 9B, the second interface may be the GUI. The second interface includes the memory entry area 92 (that is, the second memory entry area). The memory entry area 92 includes the memory entry 921 (that is, the first memory entry) and the memory entry 922 (that is, the second memory entry). The user may enable, by using the memory entry 921, the mobile phone to display the existing memory video, and the user may enable, by using the memory entry 922, the user to reselect any character to generate the new memory video.

In step S1308a, the electronic device detects the operation 1 of the user on the second memory entry area.

In step S1309, the electronic device displays the memory video.

It should be understood that, the operation 1 is an operation used to display the memory video. For example, the operation 1 may be an operation of the user on the first memory entry of the second memory entry area. The electronic device detects the operation 1 in response to the operation of the user on the first memory entry, and displays the memory video. For example, with reference to the GUI in FIG. 9B, in response to an operation of tapping, by the user, the memory entry 921, the mobile phone detects the operation, and displays the GUI in FIG. 9D, that is, displays the existing memory video.

In step S1308b, the electronic device detects the operation 2 of the user on the second memory entry area.

It should be understood that, the operation 2 is an operation used to generate a new memory video. For example, the operation 2 may be an operation of the user on the second memory entry of the second memory entry area. The electronic device detects the operation 2 in response to the operation of the user on the second memory entry. For example, with reference to the GUI in FIG. 9B, the mobile phone detects the operation in response to an operation of tapping, by the user, the memory entry 922, and displays the GUI in FIG. 9C.

After detecting the operation 2 of the user on the second memory entry, the electronic device performs step S1311a and subsequent steps, to generate the new memory video. Refer to the foregoing related descriptions, and details are not described again.

It should be understood that the second interface in the foregoing example is merely an example for description, and should not constitute a limitation on this. In another embodiment, the second memory entry area of the second interface may include one of the first memory entry and the second memory entry. When the second memory entry area may include the first memory entry and does not include the second memory entry, step S1308b and subsequent steps do not need to be performed. When the second memory entry area may include the second memory entry and does not include the first memory entry, step S1308a and step S1309 do not need to be performed.

### Case 2.2

In step S1304, when the existing memory video does not include the picture 1, the electronic device displays the first interface, where the first interface includes the first memory entry area.

In some embodiments, the first interface displayed by the electronic device in the case 2.2 may be the same as the first interface displayed in the case 1. For specific descriptions, refer to the specific descriptions of step S1304 in the foregoing case 1, and details are not described again.

In some other embodiments, because the picture P1 has been analyzed, the first interface displayed by the electronic device in the case 2.2 may alternatively be different from the first interface displayed in the case 1. For example, with reference to the GUI in FIG. 10B, the first interface may be the GUI. The GUI not only includes the memory entry area 102 (that is, the first memory entry area), but also includes the character area 101. The character area 101 includes character pictures of characters obtained by analyzing the picture P1. In this way, visual reflection of the user can be improved.

Subsequently, the electronic device performs step S1305 and subsequent steps. For specific descriptions, refer to related descriptions of same steps in the case 1 in the method 1300. Details are not described again.

The foregoing specifically describes the method 1300. It should be understood that, the foregoing example steps are merely examples for description, and should not constitute a limitation on embodiments of this application. The implementation process may include more or fewer steps.

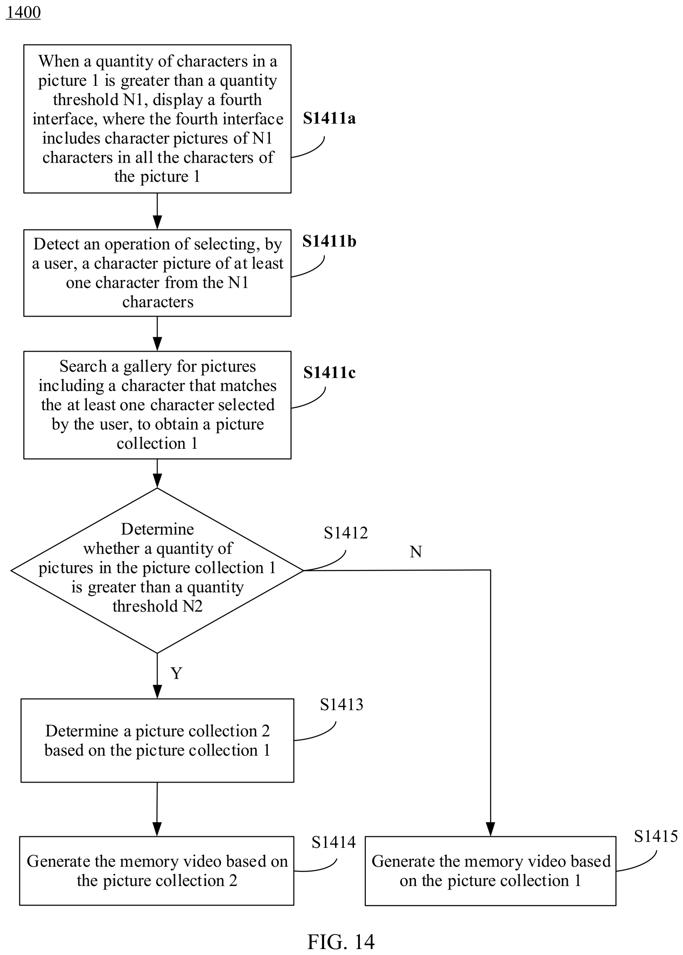

FIG. 14 is a schematic flowchart of a process in which an electronic device generates a picture collection and a memory video when a quantity of characters of a picture is greater than a quantity threshold N1 according to an embodiment of this application.

It should be understood that, before performing step S1411a, for the picture 1, the electronic device displays the first interface by using the method 1100 or the method 1300. After detecting the operation of the user on the first memory entry area of the first interface, the electronic device performs step S1411a when determining that the quantity of characters in the picture 1 is greater than the quantity threshold N1.

In step S1411a, when the quantity of characters in the picture 1 is greater than the quantity threshold N1, the electronic device displays a fourth interface, where the fourth interface includes character pictures of N1 characters in all the characters of the picture 1.

In consideration of a processing capability of the current electronic device, if a quantity of characters that need to be matched is excessive, the electronic device may not perform feature matching on the excessive quantity of characters. Therefore, after recognizing all the characters in the picture 1, the electronic device determines N1 characters from all the characters for recommendation to the user, and displays, by using the fourth interface, the character pictures of the N1 characters for selection by the user. The user may select a character picture of at least one character from the character pictures of the N1 characters, so that the electronic device searches the gallery for a picture matching the at least one character selected by the user.

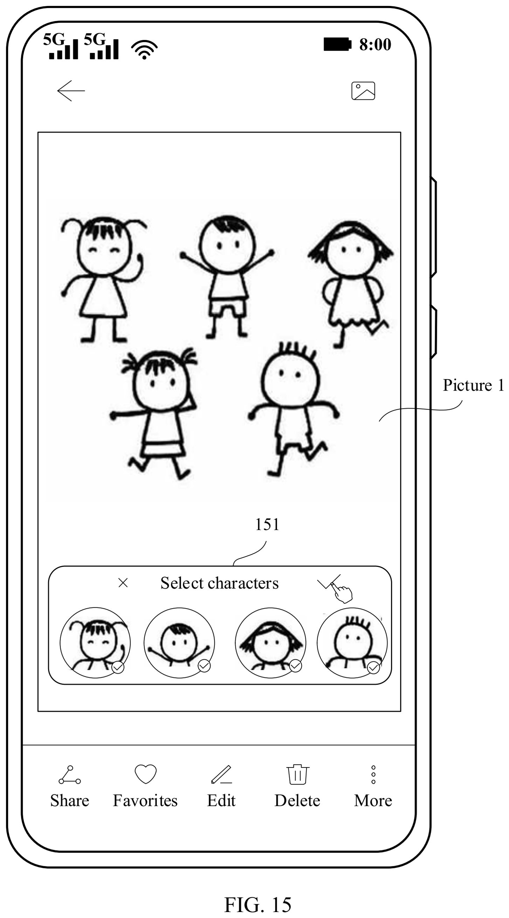

FIG. 15 is a diagram of a fourth interface according to an embodiment of this application. With reference to FIG. 15, the fourth interface includes the picture 1 and a character area 151. The picture 1 includes five characters, and N1=4. Because the quantity 5 of the characters in the picture 1 is greater than 4, the character area 151 displays only character pictures of four characters. The user selects all the four characters, and taps a confirmation control such as "√".

In this step, N1 characters in the picture 1 may be any N1 characters in all the characters in the picture 1, or may be N1 characters determined by the electronic device based on a rule. This is not limited herein.

In an embodiment in which the electronic device determines the N1 characters based on the rule, in some embodiments, the electronic device may determine characters with first N1 facial area ratios in descending order of facial area ratios of all the characters in the picture 1 as the N1 characters for recommendation to the user.

In other words, the facial area ratios of the N1 characters are greater than facial area ratios of characters other than the N1 characters in all the characters of the picture 1. It should be noted that, the facial area ratio herein represents a ratio of a facial area of a character to an entire area of the picture.

It should be understood that, when there is a large quantity of characters in the picture, faces of some characters inevitably occupy small areas in the entire picture, and faces of some characters are even invisible, affecting feature extraction of the characters, and further affecting searching for pictures of related characters. Therefore, N1 characters with relatively large facial area ratios are recommended for the user based on the facial area ratios, so that feature extraction can be better performed on the characters to the greatest extent, to search for pictures of related characters without affecting user experience.

In another embodiment, the electronic device may alternatively determine the N1 characters based on another rule. For example, the electronic device determines N1 characters with relatively vivid expressions in all characters in the picture 1 as the N1 characters for recommendation to the user.

In step S1411b, the electronic device detects an operation of selecting, by the user, a character picture of at least one character from the N1 characters.

The user selects, based on the preference of the user, a character picture of at least one character from the N1 characters recommended by the electronic device. In response to the user operation, the electronic device detects the operation of selecting, by the user, the character picture of the at least one character in the N1 characters.

For example, with reference to FIG. 15, the user selects character pictures of all the characters in four recommended characters, and taps a confirmation control such as "√". The mobile phone detects the operation of selecting, by the user, the character pictures of the four characters and the operation of tapping, by the user, the confirmation control.

In step S1411c, the electronic device searches the gallery for pictures including a character that matches the at least one character selected by the user, to obtain the picture collection 1.

For specific descriptions of this step, refer to related descriptions of step S1111, and details are not described again. The only difference lies in that, pictures including characters that match all the characters in the picture 1 are searched for in method S1111, but in step S1411c, the electronic device searches for a picture including the character matching the at least one character in the N1 characters in the picture 1, and during feature extraction on the picture 1, feature extraction is performed only on the at least one character in the N1 characters selected by the user.

After performing step S1411c, the electronic device performs step S1412, and performs step S1413 and step S1414, or performs step S1415 based on the quantity of the pictures in the picture collection 1. For specific descriptions of step S1412 to step S1415, refer to related descriptions about step S1112 to step S1115 in the method 1100. Details are not described again.

For the previously generated memory video, after a period of time, a plurality of new pictures are generated in the electronic device. The user may update the picture collection and update the memory video by using any new picture. The following specifically describes a process of updating the picture collection and updating the memory video.

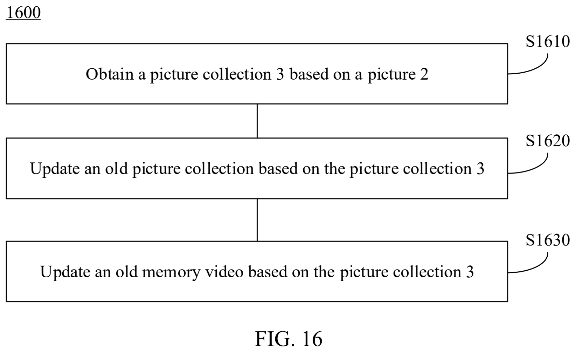

FIG. 16 is a schematic flowchart of a method 1600 for generating a memory video according to an embodiment of this application, and mainly describes a process in which an electronic device updates a picture collection and updates a memory video based on a new picture.

For ease of description, the picture collection that is previously generated for directly generating the memory video is briefly referred to as an old picture collection, and the previously generated memory video is briefly referred to as an old memory video. Herein, the old picture collection may be the picture collection 1 or the picture collection 2 that is obtained in the foregoing method 1100, method 1300, or method 1400 for directly generating the memory video. It should be understood that, when the old picture collection is the foregoing picture collection 1, the picture collection 1 is a picture collection when the quantity of pictures is less than or equal to N2.

It is assumed that, the electronic device generates the old picture collection and the old memory video at time 1 (for example, 14:00, March 15, 2023) through an operation of the user on the picture 1. Pictures in the old picture collection and the old memory video are all pictures obtained by the electronic device before the time 1. In a time period 1 (for example, 14:00, March 15, 2023 to 12:00, June 15, 2023) between the time 1 and time 2 (for example, 12:00, June 15, 2023), the electronic device obtains a plurality of new pictures in various manners such as shooting or downloading, and updates the old picture collection and the old memory video by using any new picture (denoted as a picture 2). The time 2 may be understood as time when the old picture collection and the old memory video are updated.

In step S1610, the electronic device obtains a picture collection 3 based on the picture 2.

In this step, the user performs an operation on the picture 2, to finally obtain the picture collection 3 by using the foregoing method 1100, 1300, or 1400.

It should be noted that, the picture collection 3 is pictures directly used to update the memory video For example, in a case in which the picture collection 3 is obtained by using the method 1100, the picture collection 3 may be a picture collection used for generating the memory video in step S1114 (the picture collection 3 is similar to the picture collection 2 in step S1114), or the picture collection 3 may be a picture collection used for generating the memory video in step S1115 (the picture collection 3 is similar to the picture collection 1 in step S1115). Explanations of obtaining the picture collection 3 by using the method S1300 and the method 1400 are the same as those of the method 1100. Details are not described again.

It should be understood that, for the old picture collection and the old memory video, in a process of obtaining the picture collection 3 based on the picture 2, the electronic device searches for pictures of same characters based on a user operation. In other words, the picture collection 3 and the old picture collection (or the old memory video) both associate with same characters, or in other words, the picture collection 3 and the old picture collection (or the old memory video) both include same characters. For example, in the old picture collection and the old memory video, the electronic device searches for pictures including a character 1, a character 2, and a character 3 in a gallery based on a user operation. In this case, in the process of obtaining the picture collection 3 based on the picture 2, the electronic device also searches for pictures including the character 1, the character 2, and the character 3 in the gallery based on the user operation. The picture collection 3 and the old picture collection (or the old memory video) both include the character 1, the character 2, and the character 3.

In some embodiments, in the process of obtaining the picture collection 3 based on the picture 2, the electronic device searches the gallery for pictures that include same characters and that are obtained by the electronic device in the time period 1 between the time 1 and the time 2, to obtain the picture collection 3. In an implementation, for example, the electronic device determines that generation time of the old picture collection (or the old memory video) is the time 1 based on recorded time data of the old picture collection (or the old memory video), determines current time (that is, the time 2), and during picture search, filters, from the gallery, pictures that include same characters and that are obtained by the electronic device in the time period 1 between the time 1 and the time 2, to finally obtain the picture collection 3.

In some other embodiments, in the process of obtaining the picture collection 3 based on the picture 2, the electronic device may alternatively search the gallery for pictures that include same characters and that are obtained by the electronic device in a time period 2 between the time 1 and shooting time of the picture 2 (denoted as time 3), to obtain the picture collection 3. In an implementation, for example, the electronic device determines that generation time of the old picture collection (or the old memory video) is the time 1 based on recorded time data of the old picture collection (or the old memory video), determines that the shooting time of the picture 2 is the time 3, and during picture search, filters, from the gallery, pictures that include same characters and that are obtained by the electronic device in the time period 3 between the time 1 and the time 3, to finally obtain the picture collection 3.

In step S1620, the electronic device updates the old picture collection based on the picture collection 3.

All pictures in the picture collection 3 are added to the old picture collection, to update the old picture collection, and obtain an updated picture collection. The updated picture collection includes pictures in the old picture collection and the pictures in the picture collection 3.

In step S1630, the electronic device updates the old memory video based on the picture collection 3.

For ease of description, a quantity of the pictures in the picture collection 3 is denoted as N3, that is, the picture collection 3 includes N3 pictures, and a quantity of pictures in the old memory video is denoted as N4, that is, the old memory video includes N4 pictures.

In some embodiments, the electronic device adds all the N3 pictures in the picture collection 3 to the old memory video, to obtain the updated memory video.

In some other embodiments, considering that a quantity of pictures in the memory video is excessive, affecting user experience, a quantity of pictures in the updated memory video is enabled, to the greatest extent, to be less than or equal to N1.

For example, the electronic device updates the old memory video based on a sum of the quantity N3 of the pictures in the picture collection 3 and the quantity N4 of the pictures in the old memory video.

When the sum of N3+N4 is less than or equal to N2, the electronic device adds all the pictures in the picture collection 3 to the old memory video, to obtain the updated memory video. The quantity of the pictures in the updated memory video is less than or equal to N1.

For example, N2=50, N3=20, N4=25, and N3+N4=45<50. Therefore, 20 pictures in the picture collection 3 are all added to the old memory video, and the quantity of the pictures in the updated memory video is equal to 45 and less than 50.

When the sum of N3+N4 is greater than N2, the electronic device adds the N3 pictures in the picture collection 3 to the old memory video, and deletes N5 pictures from the memory video, to obtain the updated memory video, where N5=N3+N4-N2. The quantity of the pictures in the updated memory video is equal to N2, that is, the updated memory video includes N2 pictures.

For example, N2=50, N3=20, and N4=50. In this case, N5=N3+N4-N2=20, where N3+N4=70>50. Therefore, the electronic device adds the 20 pictures in the picture collection 3 to the old memory video, and deletes 20 pictures from the memory video. In this way, the quantity of the pictures in the updated memory video is equal to 50.

When the N5 pictures are deleted from the memory video, for example, N5 pictures with lowest aesthetic scores in the N4 pictures in the old memory video may be deleted, and pictures other than the N5 pictures in the N4 pictures are reserved. Aesthetic scores of the pictures other than the N5 pictures in the N4 pictures are higher than those of the N5 pictures.

In some embodiments, the updated memory video includes the picture 2.

It may be understood that, the user recalls related characters by performing an operation on the picture 2 in a process of browsing the picture 2. It indicates that the user likes the picture 2 very much or that the picture 2 can evoke the memory of the user intensively, and therefore the picture 2 is added to the updated memory video, so that a user requirement can be met, thereby improving user experience.

In some other embodiments, in an embodiment in which the updated memory video includes the picture 2, a cover picture of the updated memory video may be the picture 2, or may be a cover picture (for example, the picture 1) of the old memory video. This is not limited.

In an example, based on aesthetic scores of the picture 2 and the cover picture (for example, the picture 1) of the old memory video, the electronic device may use the picture with the higher aesthetic score as the cover picture of the updated memory video.

In another example, the electronic device replaces the cover picture of the updated memory video as the picture 2.

In another example, the electronic device does not replace the cover picture of the memory video, and still uses the cover picture of the old memory video as the cover picture of the updated memory video.

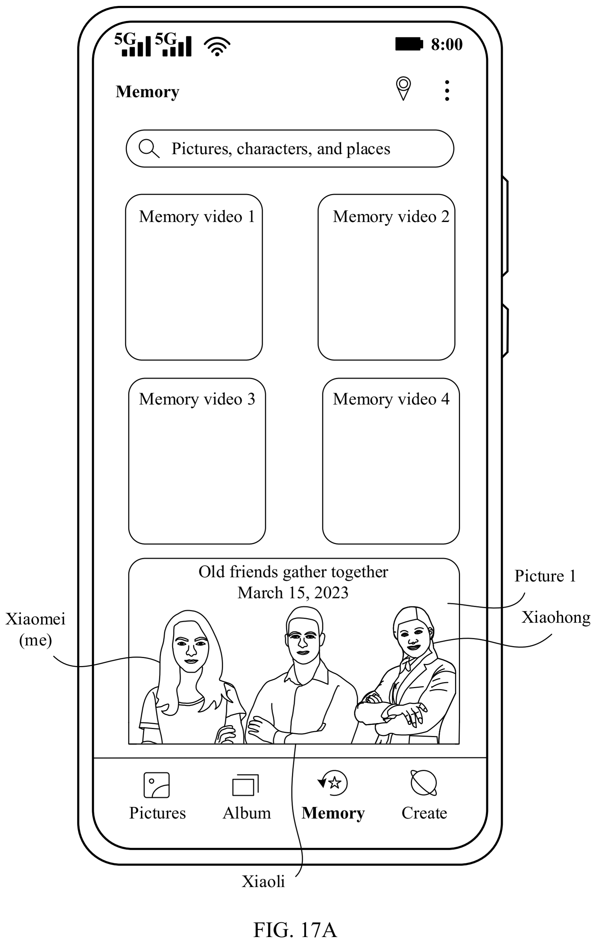

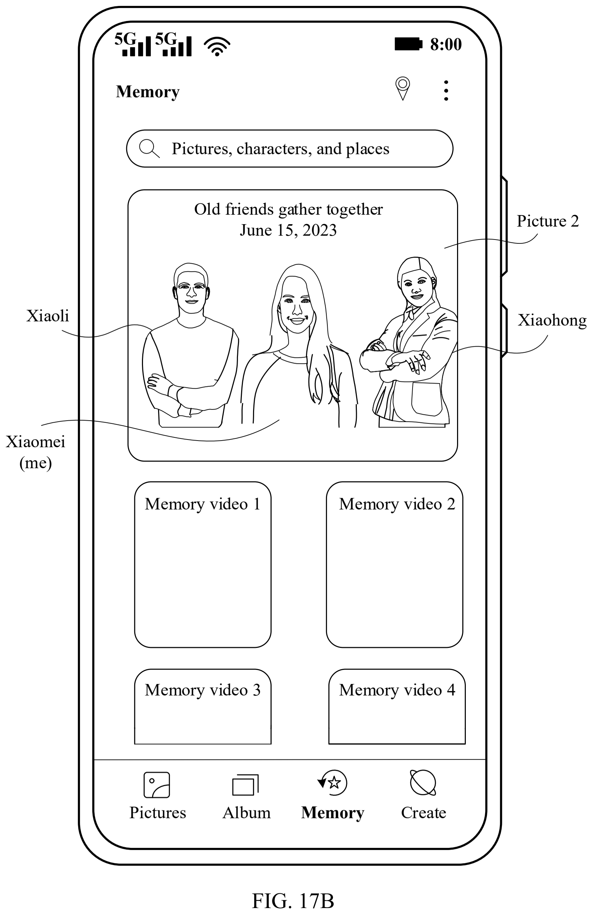

FIG. 17A and FIG. 17B show another group of GUIs according to an embodiment of this application. A GUI before the old memory video is updated and a GUI after the old memory video is updated are shown. FIG. 17A shows the GUI before the old memory video is updated, and FIG. 17B shows the GUI after the old memory video is updated.

With reference to the GUI in FIG. 17A, the GUI is a GUI presenting the memory video in the interface of the "memory" category. The GUI displays a part of all existing memory videos in the mobile phone. The user performs an operation such as a swipe-up operation on the display interface. In response to the user operation, the display interface may scroll to display the other part of undisplayed memory videos. The old memory video is a memory video that has a theme "old friends gather together", and is located at the bottom of the display interface. The cover picture is the picture 1, and includes the user (Xiaomei), and friends "Xiaoli" and "Xiaohong".

With reference to the GUI in FIG. 17A, for the memory video that has the theme "old friends gather together" and that is updated instantly, the memory video with the theme is displayed at a leading position in the interface of the "memory" category. Because the instantly updated memory video has a relatively high probability of being viewed by the user, the instantly updated memory video is placed in the first position of the interface, so that an operation such as a sliding operation can be avoided to search for the newly generated memory video. This is quite convenient for the user to view. In an implementation, for the instantly updated memory video, the mobile phone inserts the instantly updated memory video in front of all the memory videos, and the remaining memory videos are shifted backward in an existing sequence. In addition, a cover picture in the updated memory video also changes from the original picture 1 to the picture 2.

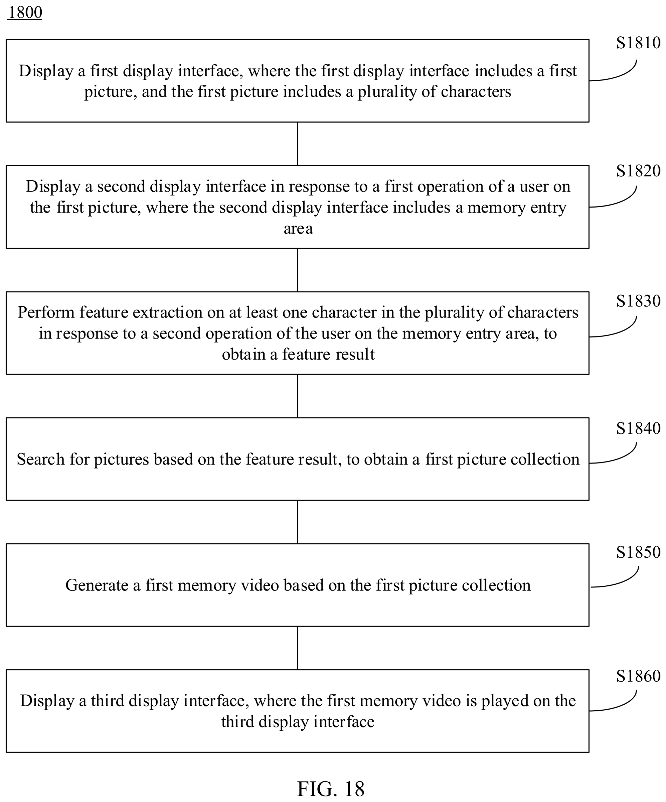

FIG. 18 is a schematic flowchart of a method 1800 for generating a memory video according to an embodiment of this application. The method 1800 is described with reference to the foregoing methods 1100, 1300, and 1400.

In step S1810, an electronic device displays a first display interface, where the first display interface includes a first picture, and the first picture includes a plurality of characters.

For example, the first display interface is an interface of a gallery application.

For example, the first picture is any existing picture in the electronic device, may be a previously stored picture, an instantly shot picture, or a picture obtained in another way, for example, a picture obtained through Bluetooth transmission with another electronic device or a picture downloaded from a social application.

For example, with reference to in FIG. 3A and FIG. 3B, the mobile phone enables the gallery application, and displays a main interface of the gallery application. The user wants to view the picture P1 (corresponding to the first picture), and taps the picture P1. The mobile phone displays the GUI shown in FIG. 3C in response to the operation of tapping, by the user, the picture P1. The GUI (corresponding to the first display interface) displays an enlarged picture P1, where the picture P1 includes three characters.

In step S1820, the electronic device displays a second display interface in response to a first operation of a user on the first picture, where the second display interface includes a memory entry area.

In an implementation, the user performs the first operation on the first picture, and the electronic device detects the first operation, and displays the second display interface in response to the first operation.

For example, the operation of the user on the first picture is any operation that can trigger the memory function. This is not limited in embodiments of this application. The electronic device continues to perform subsequent steps based on the operation, to generate the picture collection and the memory video, thereby implementing the memory function of the electronic device.

In an example, the first operation may be a swiping operation on the first picture. The swiping operation may be a swiping operation in any direction. For example, the swiping operation may be a swipe-up operation shown in FIG. 3C. For another example, the swiping operation may alternatively be a swipe-down operation, a horizontal swiping operation, or the like.

In another example, the first operation may alternatively be, for example, a long press operation, a double-tap operation, a single-tap operation, a two-finger press operation, and the like.

The second display interface includes a memory entry area. The memory entry area can provide the user with an interface for a memory generation function. The user performs an operation on the memory entry area, so that a picture collection and a memory video can be generated.

As described above, the electronic device may analyze the first picture in a plurality of cases. If the first picture has been analyzed, the electronic device may not need to repeatedly analyze the first picture, to reduce a process of analyzing the picture, thereby reducing processing duration. If the first picture has not been analyzed, the first picture is analyzed instantly in response to the first operation.

For step S1820, in some embodiments, in response to the first operation, the electronic device analyzes the first picture when the first picture is not analyzed, to obtain an analysis result, where the analysis result indicates that the first picture includes characters; and the electronic device displays the second display interface in response to the analysis result.

In an implementation, in response to the first operation, the electronic device may first determine whether the first picture is analyzed, analyze the first picture when determining that the first picture is not analyzed, and display the second display interface when analyzing that the first picture includes characters.

An implementation process of this embodiment may correspond to a process of performing step S1104 by using step S1103 in the method 1100. For specific descriptions of this embodiment, refer to the foregoing related descriptions. Details are not described again. The second display interface herein may correspond to the foregoing first interface, and the memory entry area corresponds to the first memory entry area in the first interface.

For step S1820, in some other embodiments, when the first picture has been analyzed to include the characters and the first picture does not exist in the existing memory video, the electronic device displays the second display interface in response to the first operation.

For example, the second display interface includes character pictures of the plurality of characters that are obtained through recognition.

In an implementation, in response to the first operation, the electronic device may first determine whether the first picture is analyzed, determine whether the first picture exists in the existing memory video when determining that the first picture has been analyzed to include characters, and display the second display interface when determining that the first picture does not exist in the existing memory video.

An implementation process of this embodiment may correspond to a process of performing step S1104 by using step S1102 and step S1106 in the method 1100. For specific descriptions of this embodiment, refer to the foregoing related descriptions. Details are not described again. The second display interface herein may correspond to the foregoing first interface, and the memory entry area herein corresponds to the first memory entry area in the first interface.

In step S1830, the electronic device performs feature extraction on at least one character in the plurality of characters in response to a second operation of the user on the memory entry area, to obtain a feature result.

In an implementation, the user performs the second operation on the memory entry area of the second display interface. The electronic device detects the second operation, and performs feature extraction on the at least one character in the plurality of characters in the first picture in response to the second operation, to obtain the feature result. The feature result indicates the at least one character, including feature information of the at least one character.

For example, the second operation may be an operation of tapping, by the user, the memory entry area. With reference to the foregoing descriptions, the second operation may correspond to the operation of the user on the first memory entry of the first interface in the foregoing step S1105.

In this embodiment of this application, after detecting the second operation, the electronic device may perform feature extraction on all characters of the first picture, or may further perform feature extraction on any character in the first picture based on selection of the user for the any character. This is not limited.

For step S1830, in some embodiments, the electronic device performs feature extraction on all the characters in the plurality of characters in response to the second operation, to obtain the feature result.

In other words, after detecting the second operation, the electronic device does not need to perform other additional analysis on the first picture, or does not need to perform other human-machine interaction operations. The electronic device directly performs feature extraction on all characters in the first picture. In an implementation, after detecting the second operation, the electronic device performs feature extraction on all the characters in the first picture by default.

An implementation process of this embodiment may correspond to a related process of step S1111 of the method 1100. For specific descriptions of this embodiment, refer to the foregoing related descriptions. Details are not described again.

For step S1830, in some other embodiments, the electronic device displays a fourth display interface in response to the second operation. The fourth display interface includes character pictures of the plurality of characters that are obtained through recognition. The electronic device performs feature extraction on the at least one character in response to an operation of selecting, by the user, a character picture of the at least one character in the plurality of characters, to obtain the feature result.

In an implementation, the electronic device displays the fourth display interface in response to the second operation, for the user to select the character pictures of the plurality of characters in the fourth display interface. The user selects a character picture of at least one character in the plurality of characters. When detecting the user operation, the electronic device determines that the user wants to recall a memory related to the at least one character. Therefore, feature extraction is performed on the at least one character, to obtain the feature result.

An implementation process of this embodiment may correspond to processes of extracting features in steps S1311a, S1311b, and S1311c in the method 1300. For specific descriptions of this embodiment, refer to the foregoing related descriptions. Details are not described again. The fourth display interface herein corresponds to the foregoing third interface.

For step S1830, in some other embodiments, in step S1820 before step S1830, in response to the first operation, the electronic device displays the second display interface when the first picture has been analyzed to include the characters and the first picture exists in the existing memory video, where the memory entry area of the second display interface includes the first memory entry and the second memory entry, the first memory entry is configured to display the existing memory video based on a user operation, and the second memory entry is configured to generate a new memory video; and in step S1830, the electronic device displays the fourth display interface in response to the operation of the user on the second memory entry.

This embodiment may correspond to processes of extracting features in step S1307, step S1308b, and steps S1311a, S1311b, and S1311c by using step S1302 and step S1306 in the method 1300. For specific descriptions of this embodiment, refer to the foregoing related descriptions. Details are not described again. The second display interface herein corresponds to the foregoing second interface, the first memory entry area and the second memory entry area herein respectively correspond to the first memory entry and the second memory entry of the foregoing second interface, and the fourth display interface herein corresponds to the foregoing third interface.

In addition, in this embodiment of this application, in consideration of a processing capability of the electronic device, if a quantity of characters that need to be matched is excessive, the electronic device may not perform feature matching on the excessive quantity of characters. Therefore, a quantity threshold N1 may be set based on the processing capability of the electronic device, so that a quantity of characters matched by the electronic device is N1 at most.

For step S1830, in some embodiments, in response to the second operation, the electronic device performs feature extraction on at least one character in the plurality of characters when the quantity of the characters of the first picture is less than or equal to the first quantity threshold N1, to obtain the feature result, where N1 is an integer greater than 1.

In other words, after detecting the second operation of the user, the electronic device may first determine whether the quantity of the characters of the first picture is greater than N1, and when the quantity of the characters of the first picture is less than or equal to N1, performs feature extraction on the at least one character. Corresponding to the method 1100, feature extraction is performed on all the characters of the plurality of characters in the first picture. Corresponding to the method 1300, feature extraction is performed on the at least one character selected by the user in the first picture.

For step S1830, in some other embodiments, in response to the second operation, the electronic device displays a fifth display interface when the quantity of the characters of the first picture is greater than the first quantity threshold N1. The fifth display interface includes character pictures of the N1 characters in the plurality of characters, where N1 is an integer greater than 1. In response to an operation of selecting, by the user, the character picture of the at least one character in the N1 characters, the electronic device performs feature extraction on the at least one character, to obtain the feature result.

In other words, after detecting the second operation of the user, the electronic device may first determine whether the quantity of the characters of the first picture is greater than N1, and displays the fifth display interface when the quantity of the characters of the first picture is greater than N1. The fifth display interface includes character pictures of the N1 characters in the plurality of recognized characters. The user selects the character picture of the at least one character in the N1 characters. The electronic device detects the operation of selecting, by the user, the character picture of the at least one character, and in response to the operation, performs feature extraction on the at least one character selected by the user.

In the step in which the electronic device displays the fifth display interface when the quantity of the characters of the first picture is greater than N1, for example, the electronic device determines characters with first N1 facial area ratios in descending order of facial area ratios of the plurality of characters, and displays the fifth display interface.

This embodiment may correspond to a process of extracting features in steps S1411a, S1411b, and S1411c in the method 1400. For specific descriptions, refer to the foregoing related descriptions. Details are not described again. The fifth display interface herein corresponds to the fourth interface in the method 1400.

In step S1840, the electronic device searches for pictures based on the feature result, to obtain a first picture collection, where each picture in the first picture collection includes a character matching the at least one character.

In an implementation, based on the feature result, the electronic device searches for pictures including the character matching the at least one character of the first picture, to obtain the first picture collection. In this way, each picture in the first picture collection includes the character matching the at least one character.

When the at least one character is all the characters of the first picture of the electronic device by default, this step may correspond to step S1111 in the foregoing method 1100. When the at least one character is a character selected from the plurality of characters of the first picture based on the user operation, this step may correspond to step S1311c in the foregoing method 1300, or correspond to step S1411c in the foregoing method 1400. For specific descriptions, refer to the foregoing related descriptions, and details are not described again. The first picture collection herein corresponds to the foregoing picture collection 1.

In step S1850, the electronic device generates a first memory video based on the first picture collection, where the first memory video includes at least some pictures in the first picture collection.

For example, a cover picture of the first memory video is the first picture.

In this embodiment of this application, in consideration of playback experience of the user for the memory video, if a quantity of pictures in the memory video is excessive, a problem such as high consumption of the user's time or aesthetic fatigue may occur, and experience of appreciating the memory video by the user is not good. Therefore, a second quantity threshold N2 may be set, to enable a quantity of pictures in the generated memory video to be suitable to the greatest extent, thereby enabling the user to better experience a wonderful process of playing the video.

For step S1850, when the quantity of the pictures in the first picture collection is less than or equal to the second quantity threshold N2, the electronic device determines all the pictures in the first picture collection as pictures of the first memory video, where N2 is an integer greater than 1.

In other words, when the quantity of the pictures in the first picture collection is less than or equal to the second quantity threshold N2, the pictures in the first memory video are all pictures in the first picture collection.

For specific descriptions of this case, refer to related descriptions of step S1115. Details are not described again.

For step S1850, when the quantity of the pictures in the first picture collection is greater than N2, the electronic device determines a second picture collection based on the first picture collection; and the electronic device generates the first memory video based on the second picture collection.

This case may correspond to step S1113 and step S1114 in the method 1100. Refer to the foregoing related descriptions.

For the process of determining the second picture collection based on the first picture collection, in some embodiments, the electronic device determines the second picture collection from the first picture collection based on the generation time of all the pictures in the first picture collection.

In an example, when the quantity M of time periods in which the generation time of all the pictures in the first picture collection is distributed is greater than or equal to N2, the electronic device filters one picture from each time period in the M time periods from the first picture collection, to obtain the second picture collection, where the second picture collection includes M pictures, and M is an integer greater than or equal to 1.

This embodiment may correspond to an implementation process of the manner 1 (that is, step S32) in the foregoing step S1113. For specific descriptions, refer to the foregoing related descriptions. Details are not described again.

With reference to the foregoing embodiment, because the second picture collection includes M pictures, where M is greater than or equal to 1, in the step of generating the first memory video based on the second picture collection, for example, the electronic device filters N2 pictures from the second picture collection. For example, the electronic device filters pictures with highest N2 aesthetic scores from the second picture collection in descending order of aesthetic scores, to obtain the N2 pictures; and the electronic device determines the N2 pictures as the pictures of the first memory video. In this way, the first memory video includes N2 pictures, to meet user experience.

This embodiment may correspond to an implementation process of step S41 in the foregoing case A. For specific descriptions, refer to the foregoing related descriptions. Details are not described again.

In another example, when the quantity M of the time periods in which the generation time of all the pictures in the first picture collection is distributed is greater than or equal to N2, the electronic device filters, from the first picture collection, one picture in each time period of N2 time periods that are at the top of the M time periods in time in a far to near time sequence, to obtain the second picture collection, where the second picture collection includes N2 pictures, and M is an integer greater than or equal to 1.

This embodiment may correspond to an implementation process of the manner 2 (that is, step S33) in the foregoing step S1113. For specific descriptions, refer to the foregoing related descriptions. Details are not described again.

With reference to this embodiment, because the second picture collection includes N2 pictures, the electronic device determines the N2 pictures in the second picture collection as the pictures in the first memory video.

In another example, when the quantity M of the time periods in which the generation time of all the pictures in the first picture collection is distributed is less than N2, the electronic device filters, from the first picture collection, at least one picture in each time period of the M time periods, to obtain the second picture set, where the second picture collection includes N2 pictures, and M is an integer greater than or equal to 1.

For example, the M time periods include a first part of time periods and a second part of time periods, time of the second part of time periods is earlier than time of the first part of time periods, each time period in the first part of time periods corresponds to one picture in the second picture collection, and each time period in the second part of time periods corresponds to a plurality of pictures in the second picture collection.

This embodiment may correspond to an implementation process of the manner 3 (that is, step S34) in the foregoing step S1113. For specific descriptions, refer to the foregoing related descriptions. Details are not described again.

With reference to this embodiment, because the second picture collection includes N2 pictures, the electronic device determines the N2 pictures in the second picture collection as the pictures in the first memory video.

In the embodiment in which the electronic device determines the second picture collection from the first picture collection based on the generation time of all the pictures in the first picture collection, in another embodiment, for example, the electronic device may alternatively filter one picture from each time period of the M time periods in which the generation time of all the pictures in the first picture collection is distributed, to obtain the second picture collection, and use the pictures in the second picture collection as the pictures in the memory video.

In step S1860, the electronic device displays a third display interface, where the third display interface plays the first memory video.

For example, when the first memory video is played, each frame of picture may be played based on a timeline. In this way, the user can recall the past time and deepen the memory based on time at which events occur. For example, the pictures may be played in a far to near time sequence. To be specific, a picture whose timeline is relatively far is played before a picture whose timeline is relatively near.

In the method 1800, when the first memory video is generated based on the method 1800, the method 1800 provides an embodiment of updating the first memory video.

In some embodiments, the method 1800 further includes: The electronic device obtains a third picture collection based on a second picture, where the second picture includes the at least one character, each picture in the third picture collection includes a character matching the at least one character, generation time of all pictures in the third picture collection is distributed in a first time period, and the first time period is later than generation time of the first memory video; and the electronic device updates the first memory video based on the third picture collection.

It should be understood that, the third picture collection and the first memory video both associate with memories of same characters. Pictures in the third picture collection and the first memory video both include at least one character, where the at least one character is a character in both the first picture and the second picture. In addition, all the pictures in the third picture collection are new pictures obtained by the electronic device in the first time period. The first time period is later than generation time when the first memory video is generated last time.

In a step of updating the first memory video based on the third picture collection, in an example, when a sum of a quantity N3 of the pictures in the third picture collection and a quantity N4 of the pictures in the first memory video is less than or equal to the second quantity threshold N2, the electronic device adds all the pictures in the third picture collection to the first memory video, to obtain the updated first memory video.

In another example, when the sum of the quantity N3 of the pictures in the third picture collection and the quantity N4 of the pictures in the first memory video is greater than the second quantity threshold N2, the electronic devices deletes N5 pictures from the first memory video, and adds N3 pictures in the third picture collection to the first memory video, to obtain the updated first memory video, where the updated first memory video includes N2 pictures, and N5=N3+N4-N2.

For example, the updated first memory video includes the second picture.

The foregoing embodiment of updating the first memory video may correspond to the implementation process of the updating the memory video in the method 1600. For specific descriptions, refer to the foregoing related descriptions, and details are not described again. The third picture collection herein may correspond to the foregoing picture collection 3, and the first memory video herein may correspond to the foregoing old memory video.

In the GUIs involved in the foregoing embodiment, processes in which the user triggers the memory function by performing, for example, a swipe-up operation on a currently browsed picture are shown as examples. To be specific, by performing, for example, the swipe-up operation on the picture, the electronic device is enabled to display an interface having a memory entry area, and a memory video is generated by using the memory entry area.

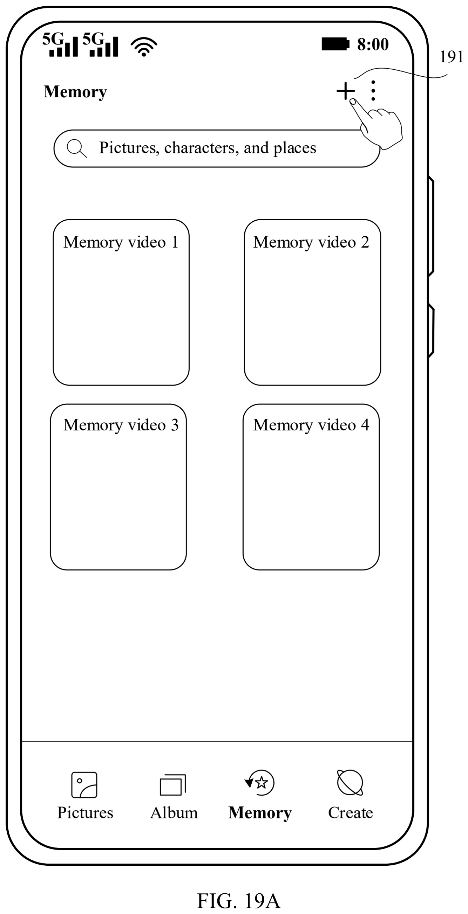

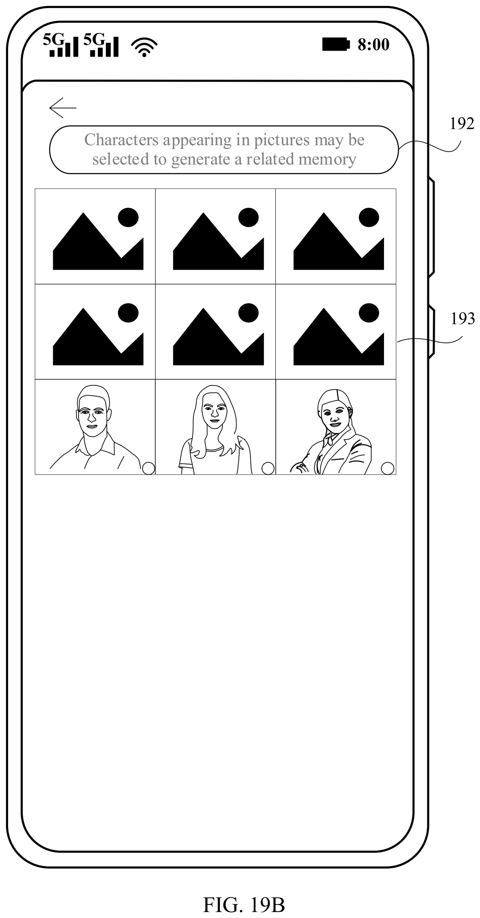

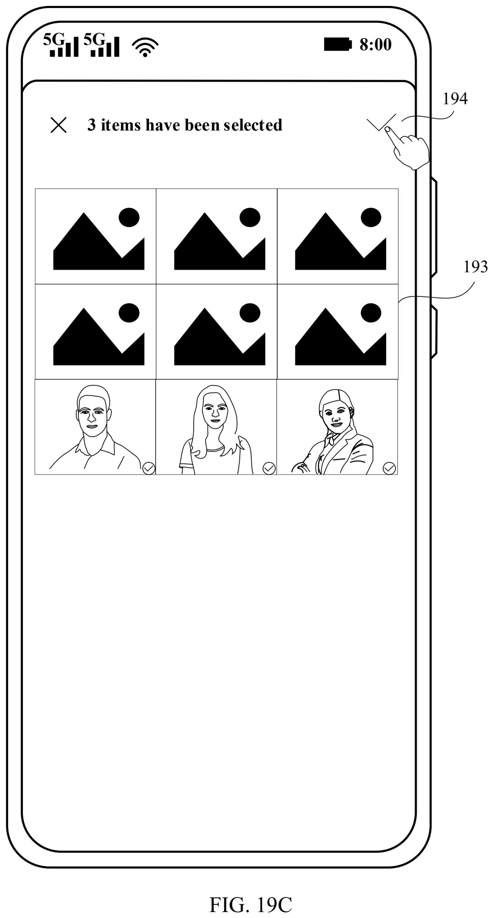

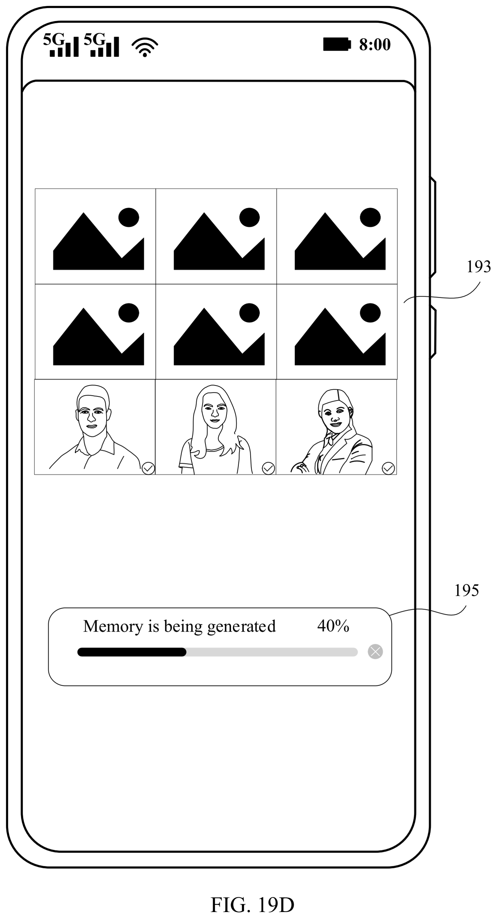

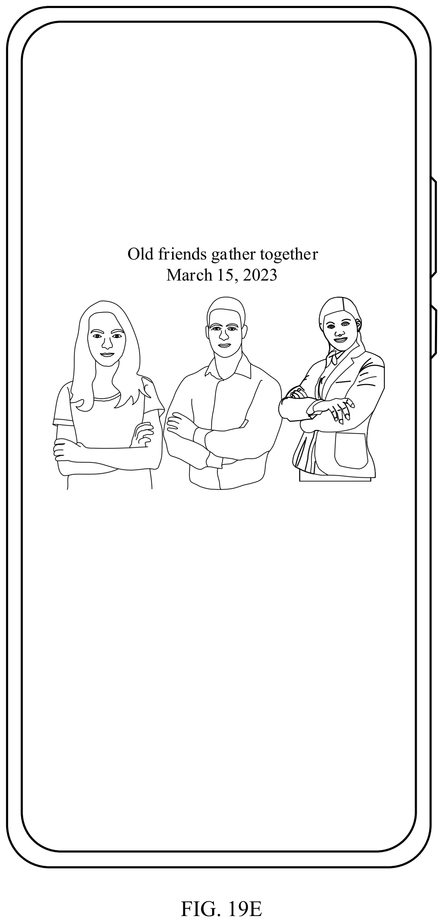

FIG. 19A, FIG. 19B, FIG. 19C, FIG. 19D, and FIG. 19E show another group of GUIs according to an embodiment of this application. A main difference from the foregoing GUIs lies in that, the interface for trigging the memory function in FIG. 19A, FIG. 19B, FIG. 19C, FIG. 19D, and FIG. 19E is different, and the memory function is triggered from the display interface "memory" through human-machine interaction.

FIG. 19A, FIG. 19B, FIG. 19C, FIG. 19D, and FIG. 19E show another group of GUIs according to an embodiment of this application. The memory function is triggered from the display interface "memory". GUIs in the process in which the mobile phone enters a display interface used by the user to select characters that the user is interested in, and generates a picture collection including pictures of characters selected by the user, and generates the memory video are shown.

The user enables the "gallery" application, and enters the display interface "memory". The GUI shown in FIG. 19A is shown. With reference to the GUI shown in FIG. 19A, the GUI includes a plurality of existing memory videos. The user taps a "+" control 191 on the upper right corner, and the GUI shown in FIG. 19B is displayed.

With reference to the GUI shown in FIG. 19B, the GUI includes a text box 192 and a character area 193. The text box 192 includes texts "characters appearing in pictures may be selected to generate a related memory", to prompt the user that the characters may be selected. The character area 193 includes a plurality of character pictures that have been recognized by the mobile phone. Each character picture includes a portrait of a character.

For example, when the mobile phone is in the charging mode, the mobile phone may automatically analyze pictures in the gallery, to recognize characters in the picture, and generate a plurality of character pictures. When the user enters an interface for selecting character pictures, character pictures that have been generated are displayed.

In the GUI in FIG. 19B, the user selects three character pictures in the third row. The mobile phone detects the operation of selecting, by the user, the three character pictures, and displays the GUI shown in FIG. 19C.

With reference to the GUI in FIG. 19C, the GUI includes the character area 193. The character area 193 includes a plurality of character pictures. "√" is displayed on the lower right corner of a character picture selected by the user, to indicate that the character picture has been selected. After selecting the picture characters, the user taps the "√" control 194 on the upper right corner. The mobile phone detects the user operation, and may display the GUI shown in FIG. 19D.

With reference to the GUI in FIG. 19D, the GUI includes a character area 193 and a progress box 195. The progress box 195 is configured to display the progress of generating the memory video. When the progress reaches 100%, the picture collection including the pictures of the three characters together and the memory video are generated, and the GUI shown in FIG. 19E is displayed.

With reference to the GUI in FIG. 19E, the GUI displays an instantly generated memory video. The memory video includes a plurality of pictures of the three people together. After the memory video is generated, the mobile phone may automatically play each picture in the memory video.

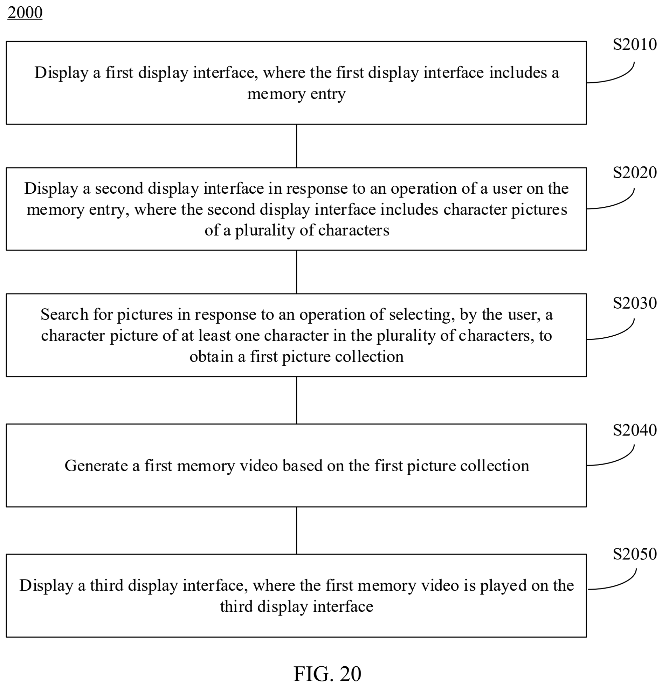

FIG. 20 is a schematic flowchart of a method 2000 for generating a memory video according to an embodiment of this application.

In step 2010, an electronic device displays a first display interface, where the first display interface includes a memory entry.

For example, the first display interface is an interface that is configured to display the memory video and that is in a gallery application.

With reference to the GUI shown in FIG. 19A, the GUI may correspond to the first display interface, and includes a plurality of existing memory videos. The upper right corner of the GUI includes a memory entry. For example, the memory entry is an adding control 191.

In step 2020, the electronic device displays a second display interface in response to an operation of a user on the memory entry, where the second display interface includes character pictures of a plurality of characters.

The user performs the operation on the memory entry. The electronic device detects the user operation, and displays the second display interface in response to the user operation. The second display surface includes character pictures of a plurality of characters that have been recognized by the electronic device. Each character picture corresponds to one character, and includes a portrait of a character.

For example, with reference to the GUI shown in FIG. 19B, the GUI may correspond to the second display interface. The GUI includes the text box 192 and the character area 193. The text box 192 includes texts "characters appearing in pictures may be selected to generate a related memory", to prompt the user that the characters may be selected. The character area 193 includes a plurality of character pictures that have been recognized by the mobile phone. Each character picture includes a portrait of a character.

In step 2030, the electronic device searches for pictures in response to an operation of selecting, by the user, a character picture of at least one character in the plurality of characters, to obtain a first picture collection, where each picture in the first picture collection includes a character matching the at least one character.

In the character pictures that are of the plurality of characters and that are displayed on the second display interface, the user selects a character picture of at least one character. After detecting the operation of selecting, by the user, the character picture of the at least one character, the electronic device performs picture searching, and searches for pictures including a character matching the at least one character, to obtain the first picture collection.

A process in which the electronic device performs picture searching in this step is similar to the implementation process of step S1840 in the method 1800. Refer to the foregoing related descriptions, and details are not described again.

In step 2040, the electronic device generates a first memory video based on the first picture collection, where the first memory video includes at least some pictures in the first picture collection.

For specific descriptions of this step, refer to related descriptions of step 1850 in the method 1800, and details are not described again.

In step 2050, the electronic device displays a third display interface, where the third display interface plays the first memory video.

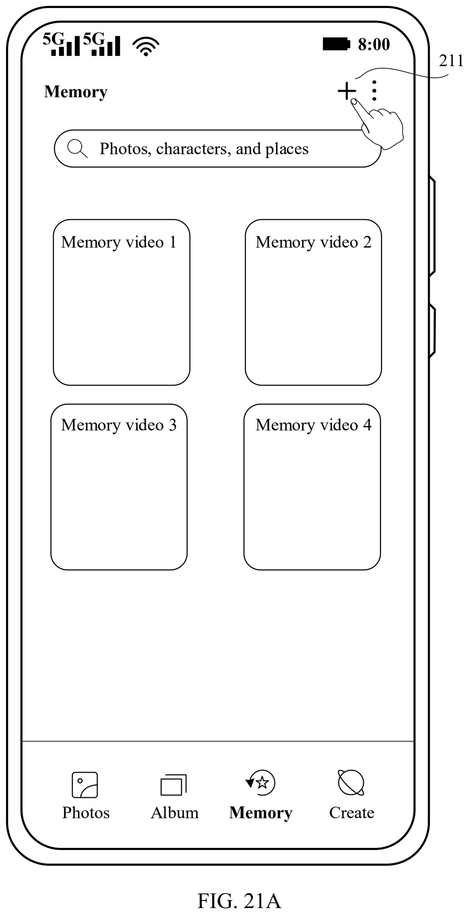

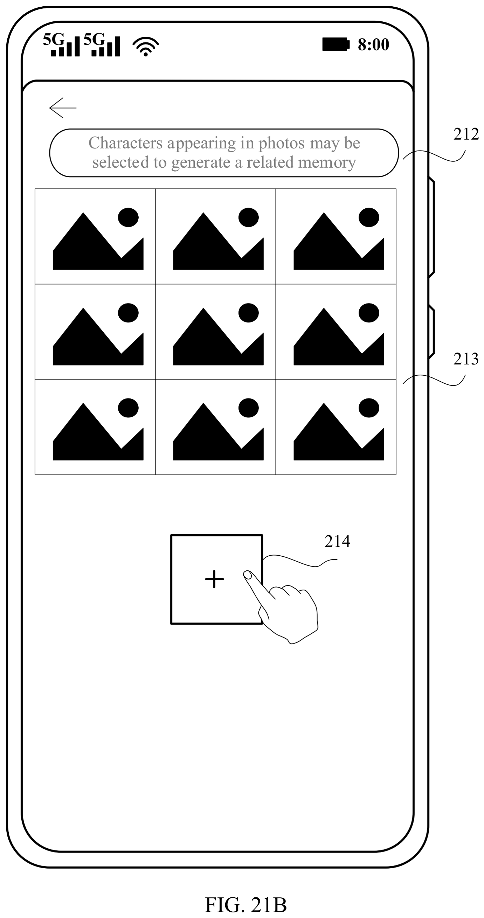

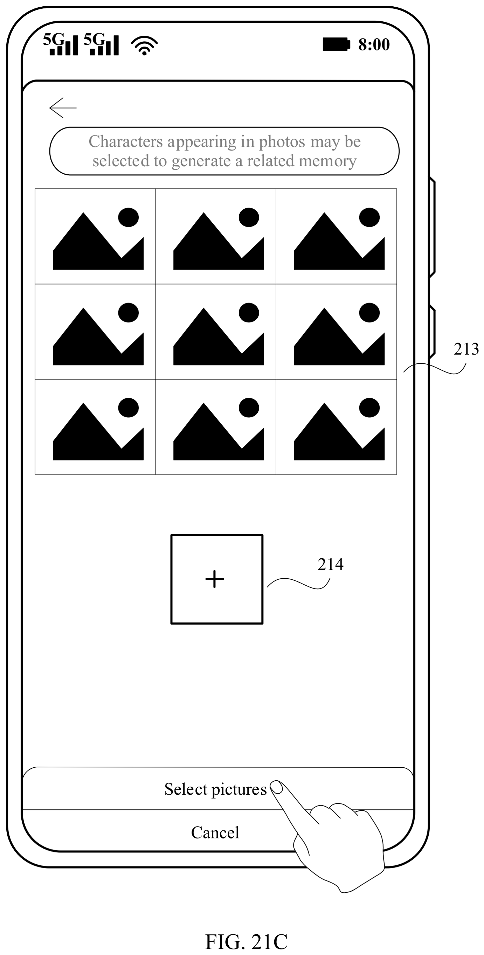

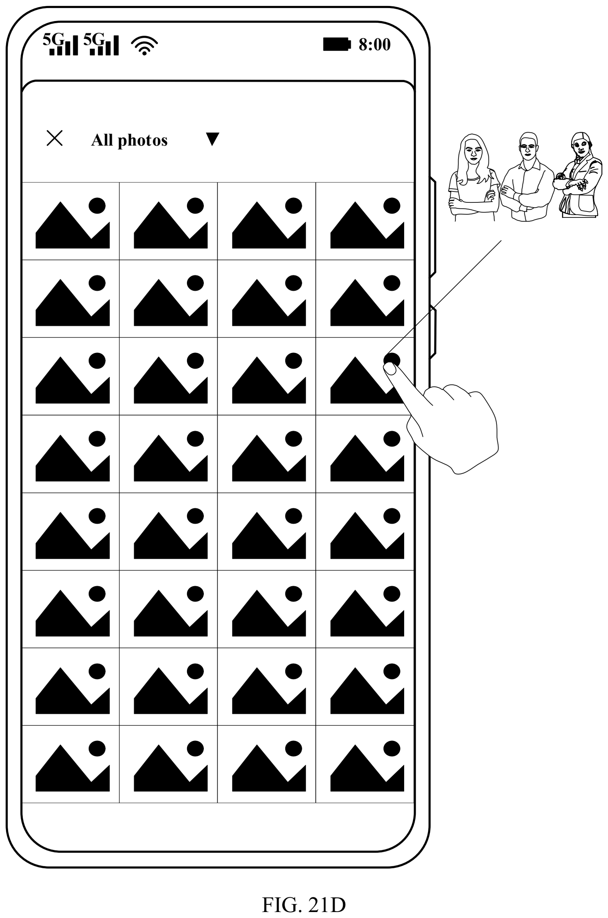

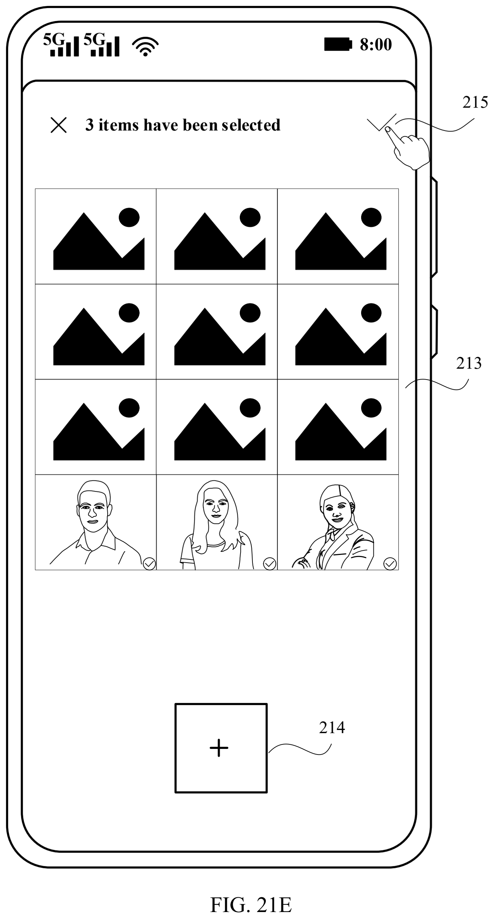

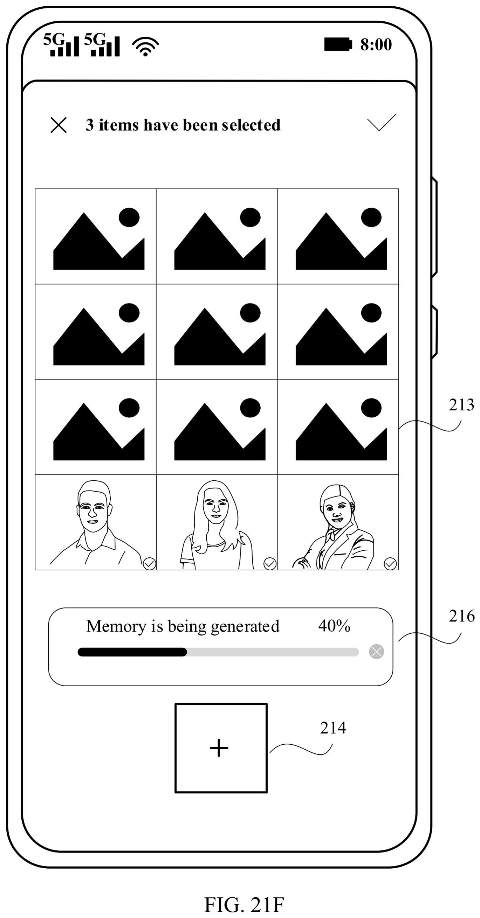

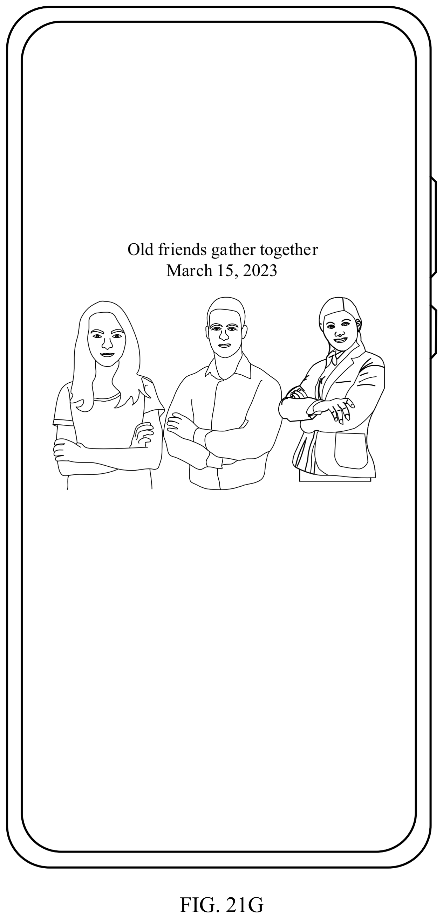

FIG. 21A, FIG. 21B, FIG. 21C, FIG. 21D, FIG. 21E, FIG. 21F, and FIG. 21G show another group of GUIs according to an embodiment of this application. FIG. 21A, FIG. 21B, FIG. 21C, FIG. 21D, FIG. 21E, FIG. 21F, and FIG. 21G differ from FIG. 19A, FIG. 19B, FIG. 19C, FIG. 19D, and FIG. 19E in providing a function of analyzing a picture in time for a picture not analyzed by the mobile phone, so that the user can select characters in a picture that is analyzed in time, so that flexibility and user experience are better.

The user enables the "gallery" application, and enters the display interface "memory". The GUI shown in FIG. 21A is shown. With reference to the GUI shown in FIG. 21A, the GUI includes a plurality of existing memory videos. The user taps a "+" control 211 on the upper right corner, and the GUI shown in FIG. 21B is displayed.

With reference to the GUI shown in FIG. 21B, the GUI includes a text box 212, a character area 213, and an adding control 214 configured to add pictures. The text box 212 includes texts "characters appearing in pictures may be selected to generate a related memory", to prompt the user that a selection operation may be performed on the characters. The character area 213 includes a plurality of character pictures that have been recognized by the mobile phone. Each character picture includes a portrait of a character. The user may select any character in the character area 213. The mobile phone detects the operation of selecting, by the user, the character, and generates a picture collection and a memory video that include pictures of the character selected by the user. For example, the GUIs shown in FIG. 19B, FIG. 19C, and FIG. 19D are displayed through human-machine interaction.

Because the character area 213 displays only the character pictures of characters that have been recognized by the mobile phone, when the user wants to select a character picture that is not in the character area 213 (actually, the mobile phone does not analyze the related picture in time), the user may tap the adding control 214, to display the GUI shown in FIG. 21C.

With reference to the GUI shown in FIG. 21C, the GUI includes a selection box "select pictures" and a selection box "cancel". The user taps the control "select pictures", and the GUI shown in FIG. 21D is displayed.

With reference to the GUI in FIG. 21D, the GUI displays some pictures of the gallery, and may display all pictures of the gallery in a scroll up or down manner through swipe-up or swipe-down. The user may select any picture therein. The mobile phone detects the user operation, analyzes the picture selected by the user, and displays recognized character pictures in the character area 213 for selection by the user. For example, the user selects one of the pictures. The picture includes three characters. After analyzing the picture to recognize three characters, the mobile phone displays the GUI shown in FIG. 21E.

With reference to the GUI in FIG. 21E, the GUI includes the character area 213 and the adding control 214 configured to add pictures. Character pictures that have not been previously recognized in time, for example, three character pictures in the last row in the character area 213, are newly added to the character area 213. The user selects a newly added character picture, and "√" is displayed on the lower right corner of the character picture selected by the user, to indicate that the character picture has been selected. After selecting the picture characters, the user taps the "√" control 215 on the upper right corner. The mobile phone detects the user operation, and may display the GUI shown in FIG. 21F.

With reference to the GUI in FIG. 21F, the GUI includes a character area 213 and a progress box 216. The progress box 216 is configured to display the progress of generating the memory video. When the progress reaches 100%, the picture collection including the pictures of the three characters together and the memory video are generated, and the GUI shown in FIG. 21G is displayed.

With reference to the GUI in FIG. 21G, the GUI displays an instantly generated memory video. The memory video includes a plurality of pictures of the three people together. After the memory video is generated, the mobile phone may automatically play each picture in the memory video.

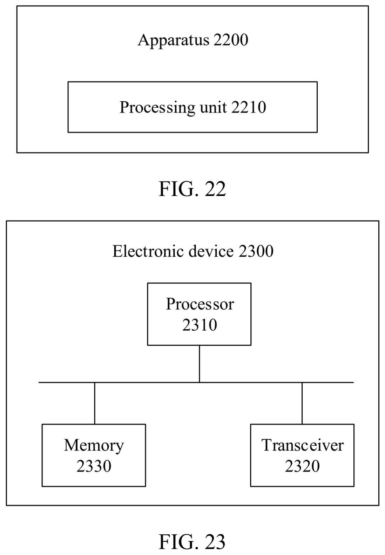

The foregoing describes, in detail with reference to FIG. 1 to FIG. 21A, FIG. 21B, FIG. 21C, FIG. 21D, FIG. 21E, FIG. 21F, and FIG. 21G, the method for generating a memory video according to embodiments of this application. The following describes, in detail with reference to FIG. 22 and FIG. 23, an apparatus for generating a memory video and an electronic device according to embodiments of this application.

FIG. 22 is an example of a block diagram of an apparatus 2200 for generating a memory video according to an embodiment of this application. The apparatus 2200 is an electronic device, or may be a chip in the electronic device. The apparatus 2200 includes a processing unit 2210.

In some implementations, the apparatus 2200 is configured to implement procedures and steps corresponding to the electronic device in the foregoing method 1800. The processing unit 2210 is configured to perform the following steps:
controlling a display to display a first display interface, where the first display interface includes a first picture, and the first picture includes a plurality of characters;
controlling the display to display a second display interface in response to a first operation of a user on the first picture, where the second display interface includes a memory entry area;
performing feature extraction on at least one character in the plurality of characters in response to a second operation of the user on the memory entry area, to obtain a feature result;
searching for pictures based on the feature result, to obtain a first picture collection, where each picture in the first picture collection includes a character matching the at least one character;
generating a first memory video based on the first picture collection, where the first memory video includes at least some pictures in the first picture collection; and
controlling the display to display a third display interface, where the first memory video is played on the third display interface.

It should be understood that, the processing unit 2210 may be configured to perform the steps performed by the electronic device in the method 1800. For specific descriptions, refer to the foregoing related descriptions, and details are not described herein again.

In some other implementations, the apparatus 2200 is configured to implement procedures and steps corresponding to the electronic device in the foregoing method 2000. The processing unit 2210 is configured to perform the following steps:
controlling a display to display a first display interface, where the first display interface includes a memory entry;
controlling the display to display a second display interface in response to an operation of a user on the memory entry, where the second display interface includes character pictures of a plurality of characters;
searching for pictures in response to an operation of selecting, by the user, a character picture of at least one character in the plurality of characters, to obtain a first picture collection, where each picture in the first picture collection includes a character matching the at least one character;
generating a first memory video based on the first picture collection, where the first memory video includes at least some pictures in the first picture collection; and
controlling the display to display a third display interface, where the first memory video is played on the third display interface.

In this embodiment of this application, the apparatus in FIG. 22 may alternatively be a chip or a chip system, for example, a system on chip (system on chip, SoC).

FIG. 23 is a diagram of a structure of an electronic device 2300 according to an embodiment of this application. The electronic device 2300 is configured to perform the corresponding steps and/or procedures in the foregoing method embodiment.

The electronic device 2300 includes a processor 2310, a transceiver 2320, and a memory 2330. The processor 2310, the transceiver 2320, and the memory 2330 communicate with each other through internal connection paths. The processor 2310 may implement functions of the processor 2310 in various possible implementations in the electronic device 2300. The memory 2330 is configured to store instructions. The processor 2310 is configured to execute the instructions stored in the memory 2330, or in other words, the processor 2310 may invoke these stored instructions to implement functions of the processor 2310 in the electronic device 2300.

Optionally, the memory 2330 may include a read-only memory and a random access memory, and provide instructions and data for the processor. A part of the memory may further include a non-volatile random access memory. For example, the memory may further store information about a device type. The processor 2310 may be configured to execute the instructions stored in the memory. When the processor 2310 executes the instructions stored in the memory, the processor 2310 is configured to perform the steps and/or procedures of the method embodiments corresponding to the network device or the terminal device.

In some implementations, the electronic device 2300 is configured to perform the procedures and steps corresponding to the electronic device in the foregoing method 1800. The processor 2310 is configured to perform the following steps:
controlling a display to display a first display interface, where the first display interface includes a first picture, and the first picture includes a plurality of characters;
controlling the display to display a second display interface in response to a first operation of a user on the first picture, where the second display interface includes a memory entry area;
performing feature extraction on at least one character in the plurality of characters in response to a second operation of the user on the memory entry area, to obtain a feature result;
searching for pictures based on the feature result, to obtain a first picture collection, where each picture in the first picture collection includes a character matching the at least one character;
generating a first memory video based on the first picture collection, where the first memory video includes at least some pictures in the first picture collection; and
controlling the display to display a third display interface, where the first memory video is played on the third display interface.

In some other implementations, the electronic device 2300 is configured to perform the procedures and steps corresponding to the electronic device in the foregoing method 2000. The processor 2310 is configured to perform the following steps:
controlling a display to display a first display interface, where the first display interface includes a memory entry;
controlling the display to display a second display interface in response to an operation of a user on the memory entry, where the second display interface includes character pictures of a plurality of characters;
searching for pictures in response to an operation of selecting, by the user, a character picture of at least one character in the plurality of characters, to obtain a first picture collection, where each picture in the first picture collection includes a character matching the at least one character;
generating a first memory video based on the first picture collection, where the first memory video includes at least some pictures in the first picture collection; and
controlling the display to display a third display interface, where the first memory video is played on the third display interface.

It should be understood that specific processes in which the components perform the corresponding steps in the foregoing methods have been described in detail in the foregoing method embodiments. For brevity, details are not described herein again.

It should be understood that, in the embodiments of this application, the processor of the apparatus may be a central processing unit (central processing unit, CPU), and the processor may alternatively be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, the steps of the foregoing method may be accomplished through an integrated logic circuit of hardware or instructions in a form of software in the processor. The steps of the methods disclosed with reference to the embodiments of this application may be directly implemented by a hardware processor, or may be implemented by a combination of hardware and a software unit in a processor. The software unit may be located in a storage medium that is mature in the art, such as a random access memory, a flash memory, a read-only memory, a programmable read-only memory, an electrically erasable programmable memory, or a register. The storage medium is located in the memory. The processor executes the instructions in the memory, and performs the steps of the foregoing method together with hardware in the processor. To avoid repetition, details are not described herein again.

An embodiment of this application provides a computer program product. The computer program product, when run on a terminal device, causes the terminal device to perform the technical solutions in the foregoing embodiments. The implementation principles and technical effects thereof are similar those in the method-related embodiments, and details are not described herein again.

An embodiment of this application provides a readable storage medium. The readable storage medium stores instructions. The instructions, when run on a terminal device, cause the terminal device to perform the technical solutions in the foregoing embodiments. The implementation principles and technical effects thereof are similar, and details are not described herein again.

An embodiment of this application provides a chip. The chip is configured to execute instructions. The chip, when run, performs the technical solutions in the foregoing embodiments. The implementation principles and technical effects thereof are similar, and details are not described herein again.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by the computer, or a data storage device, for example, a server or a data center, integrating one or more usable media. The available medium may be a magnetic medium (such as a floppy disk, a hard disk, or a magnetic tape), an optical medium (such as a digital video disc (digital video disc, DVD)), a semiconductor medium (such as a solid state disk (solid state disk, SSD)) or the like.

It should be understood that the "embodiments" mentioned throughout this specification means that particular features, structures, or characteristics related to the embodiments are included in at least one embodiment of this application. Therefore, the embodiments throughout this specification may not necessarily refer to the same embodiment. In addition, the particular features, structures, or properties may be combined in one or more embodiments in any proper manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It should be further understood that in this application, "when" and "if' both mean that the UE or the base station performs corresponding processing in an objective situation, which is not limited in time, and does not require an action that needs to be determined when the UE or the base station implements the processing, and does not mean that there is another limitation.

A person of ordinary skill in the art should understand that "first", "second", and various numbers in this application are merely used for differentiation for ease of description, are not construed as a limitation on the scope of the embodiments of this application, and are also used for representing a sequence.

In this application, an element represented in a singular form is intended to represent "one or more", rather than "one and only one", unless otherwise specified. In this application, unless otherwise specified, "at least one" is intended to represent "one or more", and "a plurality of" is intended to represent "two or more".

The term "and/or" in this specification merely describes an association relationship for describing associated objects and represents that three relationships may exist. For example, A and/or B may represent the following three cases: Only A exists, both A and B exist, and only B exists, where A may be in a singular or plural form, and B may be in a singular or plural form.

The term "at least one of" in this specification represents all or any combination of the listed items. For example, "at least one of A, B, and C" may represent the following six cases: Only A exists, only B exists, only C exists, both A and B exist, both B and C exist, and both A, B, and C exist, where A may be in a singular or plural form, B may be in a singular or plural form, and C may be in a singular or plural form.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the above-described apparatus embodiment is only exemplary. For example, the division of the units is only a logical function division and may be other divisions during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes various media that may store program code, such as a USB flash drive, a removable hard disk, a read-only memory (read-only memory, ROM), a random access memory (random access memory, RAM), a magnetic disk, or an optical disc.

For same or similar parts in the embodiments of this application, refer to these embodiments. In the embodiments of this application and the implementations/implementation methods in the embodiments, unless otherwise specified or in logical conflicts, terms and/or descriptions between different embodiments and implementations/implementation methods in the embodiments have consistency and may be mutually referenced. Technical features in different embodiments and implementations/implementation methods in the embodiments may be combined according to internal logical relationships thereof to form a new embodiment, implementation, implementation method. The foregoing implementations of this application do not constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims. In general, the foregoing is merely preferred embodiments of the technical solutions of this application, but is not intended to limit the protection scope of this application. Any modification, equivalent replacement, improvement, or the like made within the spirit and principle of this application shall fall within the protection scope of this application.

## Claims

1. A method for generating a memory video, comprising:
displaying a first display interface, wherein the first display interface comprises a first picture, and the first picture comprises a plurality of characters;
displaying a second display interface in response to a first operation of a user on the first picture, wherein the second display interface comprises a memory entry area;
performing feature extraction on at least one character in the plurality of characters in response to a second operation of the user on the memory entry area, to obtain a feature result;
searching for pictures based on the feature result, to obtain a first picture collection, wherein each picture in the first picture collection comprises a character matching the at least one character;
generating a first memory video based on the first picture collection, wherein the first memory video comprises at least some pictures in the first picture collection; and
displaying a third display interface, wherein the first memory video is played on the third display interface.

2. The method according to claim 1, wherein the performing feature extraction on at least one character in the plurality of characters in response to a second operation of the user on the memory entry area, to obtain a feature result comprises:
displaying a fourth display interface in response to the second operation, wherein the fourth display interface comprises character pictures of the plurality of characters that are obtained through recognition; and
performing feature extraction on the at least one character in response to an operation of selecting, by the user, a character picture of the at least one character in the plurality of characters, to obtain the feature result.

3. The method according to claim 2, wherein the displaying a second display interface in response to a first operation of a user on the first picture comprises:
when the first picture has been analyzed to comprise the characters and the first picture exists in an existing memory video, displaying the second display interface in response to the first operation, wherein the memory entry area of the second display interface comprises a first memory entry and a second memory entry, the first memory entry is configured to display the existing memory video based on a user operation, and the second memory entry is configured to generate a new memory video; and
the displaying a fourth display interface in response to the second operation comprises:
displaying the fourth display interface in response to an operation of the user on the second memory entry.

4. The method according to claim 1, wherein the performing feature extraction on at least one character in the plurality of characters in response to a second operation of the user on the memory entry area, to obtain a feature result comprises:
performing feature extraction on all characters in the plurality of characters in response to the second operation, to obtain the feature result.

5. The method according to any one of claims 1 to 4, wherein the performing feature extraction on at least one character in the plurality of characters in response to a second operation of the user on the memory entry area, to obtain a feature result comprises:
when a quantity of the characters of the first picture is less than or equal to a first quantity threshold N1, performing feature extraction on the at least one character in the plurality of characters in response to the second operation, to obtain the feature result, wherein N1 is an integer greater than 1.

6. The method according to claim 1, wherein the performing feature extraction on at least one character in the plurality of characters in response to a second operation of the user on the memory entry area, to obtain a feature result comprises:
when a quantity of the characters of the first picture is greater than a first quantity threshold N1, displaying a fifth display interface in response to the second operation, wherein the fifth display interface comprises character pictures of N1 characters in the plurality of characters, and N1 is an integer greater than 1; and
performing feature extraction on the at least one character in response to an operation of selecting, by the user, a character picture of the at least one character in the N1 characters, to obtain the feature result.

7. The method according to claim 6, wherein the displaying a fifth display interface in response to the second operation when a quantity of the characters of the first picture is greater than a first quantity threshold N1 comprises:
when the quantity of the characters of the first picture is greater than the first quantity threshold N1, determining, in response to the second operation, characters with first N1 facial area ratios in descending order of facial area ratios of the plurality of characters; and
displaying the fifth display interface.

8. The method according to any one of claims 1 to 7, wherein the generating a first memory video based on the first picture collection comprises:
when a quantity of pictures in the first picture collection is less than or equal to a second quantity threshold N2, determining all pictures in the first picture collection as pictures of the first memory video, wherein N2 is an integer greater than 1; or
when the quantity of the pictures in the first picture collection is greater than N2, determining a second picture collection based on the first picture collection; and
generating the first memory video based on the second picture collection.

9. The method according to claim 8, wherein the determining a second picture collection based on the first picture collection comprises:
determining the second picture collection from the first picture collection based on generation time of all the pictures in the first picture collection.

10. The method according to claim 9, wherein the determining a second picture collection based on the first picture collection comprises:
when a quantity M of time periods in which the generation time of all the pictures in the first picture collection is distributed is greater than or equal to N2, filtering one picture in each time period of the M time periods from the first picture collection, to obtain the second picture collection, wherein the second picture collection comprises M pictures, and M is an integer greater than or equal to 1.

11. The method according to claim 10, wherein the generating the first memory video based on the second picture collection comprises:
filtering N2 pictures from the second picture collection; and
determining the N2 pictures as the pictures of the first memory video.

12. The method according to claim 11, wherein the filtering N2 pictures from the second picture collection comprises:
filtering pictures with highest N2 aesthetic scores from the second picture collection in descending order of aesthetic scores, to obtain the N2 pictures.

13. The method according to claim 9, wherein the determining a second picture collection based on the first picture collection comprises:
when the quantity M of the time periods in which the generation time of all the pictures in the first picture collection is distributed is greater than or equal to N2, filtering, from the first picture collection, one picture in each time period of N2 time periods that are at the top of the M time periods in time in a far to near time sequence, to obtain the second picture collection, wherein the second picture collection comprises N2 pictures, and M is an integer greater than or equal to 1.

14. The method according to claim 9, wherein the determining a second picture collection based on the first picture collection comprises:
when the quantity M of the time periods in which the generation time of all the pictures in the first picture collection is distributed is less than N2, filtering at least one picture in each time period of the M time periods from the first picture collection, to obtain the second picture collection, wherein the second picture collection comprises N2 pictures, and M is an integer greater than or equal to 1.

15. The method according to claim 14, wherein the M time periods comprise a first part of time periods and a second part of time periods, time of the second part of time periods is earlier than time of the first part of time periods, each time period in the first part of time periods corresponds to one picture in the second picture collection, and each time period in the second part of time periods corresponds to a plurality of pictures in the second picture collection.

16. The method according to any one of claims 13 to 15, wherein the generating the first memory video based on the second picture collection comprises:
determining the N2 pictures in the second picture collection as the pictures in the first memory video.

17. The method according to any one of claims 1 to 16, wherein the displaying a second display interface in response to a first operation of a user on the first picture comprises:
when the first picture is not analyzed, analyzing the first picture in response to the first operation, to obtain an analysis result, wherein the analysis result indicates that the first picture comprises the characters; and
displaying the second display interface in response to the analysis result.

18. The method according to any one of claims 1 to 16, wherein the displaying a second display interface in response to a first operation of a user on the first picture comprises:
when the first picture has been analyzed to comprise the characters and the first picture does not exist in the existing memory video, displaying the second display interface in response to the first operation.

19. The method according to claim 18, wherein the second display interface comprises the character pictures of the plurality of characters that are obtained through recognition.

20. The method according to any one of claims 1 to 19, wherein the method further comprises:
obtaining a third picture collection based on a second picture, wherein the second picture comprises the at least one character, each picture in the third picture collection comprises a character matching the at least one character, generation time of all pictures in the third picture collection is distributed in a first time period, and the first time period is later than generation time of the first memory video; and
updating the first memory video based on the third picture collection.

21. The method according to claim 20, wherein the updating the first memory video based on the third picture collection comprises:
when a sum of a quantity N3 of the pictures in the third picture collection and a quantity N4 of the pictures in the first memory video is less than or equal to the second quantity threshold N2, adding all the pictures in the third picture collection to the first memory video, to obtain an updated first memory video.

22. The method according to claim 20, wherein the updating the first memory video based on the third picture collection comprises:
when a sum of a quantity N3 of the pictures in the third picture collection and a quantity N4 of the pictures in the first memory video is greater than the second quantity threshold N2, deleting N5 pictures from the first memory video, and adding N3 pictures in the third picture collection to the first memory video, to obtain the updated first memory video, wherein the updated first memory video comprises N2 pictures, and N5=N3+N4-N2.

23. The method according to any one of claims 20 to 22, wherein the updated first memory video comprises the second picture.

24. The method according to any one of claims 1 to 23, wherein a cover picture of the first memory video is the first picture.

25. The method according to any one of claims 1 to 24, wherein the first operation is a swipe-up operation.

26. The method according to any one of claims 1 to 25, wherein the first display interface is an interface of a gallery application.

27. A method for generating a memory video, wherein the method comprises:
displaying a first display interface, wherein the first display interface comprises a memory entry;
displaying a second display interface in response to an operation of a user on the memory entry, wherein the second display interface comprises character pictures of a plurality of characters;
searching for pictures in response to an operation of selecting, by the user, a character picture of at least one character in the plurality of characters, to obtain a first picture collection, wherein each picture in the first picture collection comprises a character matching the at least one character;
generating a first memory video based on the first picture collection, wherein the first memory video comprises at least some pictures in the first picture collection; and
displaying a third display interface, wherein the first memory video is played on the third display interface.

28. The method according to claim 27, wherein the first display interface is an interface that is configured to display the memory video and that is in a gallery application.

29. An electronic device, comprising:
a memory, configured to store computer instructions; and
a processor, configured to invoke the computer instructions stored in the memory, to control the electronic device to perform the method according to any one of claims 1 to 26 or perform the method according to claim 27 or 28.

30. A computer-readable storage medium, configured to store computer instructions, wherein the computer instructions are used to implement the method according to any one of claims 1 to 26 or implement the method according to claim 27 or 28.

31. A chip, wherein the chip comprises:
a memory, configured to store instructions; and
a processor, configured to: invoke the instructions from the memory and run the instructions, so that an electronic device installed with the chip performs the method according to any one of claims 1 to 26 or performs the method according to claim 27 or 28.
